(19) Europäisches Patentamt
European Patent Office
Office européen des brevets

(11) EP 4 595 773 A1

(12) EUROPEAN PATENT APPLICATION
published in accordance with Art. 153(4) EPC

(43) Date of publication:
06.08.2025 Bulletin 2025/32

(21) Application number: 23872465.2

(22) Date of filing: 27.09.2023

(51) International Patent Classification (IPC):
A23L 27/00 (2016.01)          A23D 7/005 (2006.01)
A23L 7/10 (2016.01)           A23L 29/238 (2016.01)
A23L 29/256 (2016.01)         A23L 29/269 (2016.01)

(52) Cooperative Patent Classification (CPC):
A23D 7/005; A23L 7/10; A23L 27/00; A23L 29/238;
A23L 29/256; A23L 29/269

(86) International application number:
PCT/JP2023/035271

(87) International publication number:
WO 2024/071243 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.09.2022 JP 2022155032

(71) Applicant: AJINOMOTO CO., INC.
Chuo-ku
Tokyo 104-8315 (JP)
(72) Inventors:
• FUJIMOTO, Norihiro
Kawasaki-shi, Kanagawa 210-8681 (JP)
• MORIMOTO, Natsumi
Kawasaki-shi, Kanagawa 210-8681 (JP)
• TOHO, Yuki
Kawasaki-shi, Kanagawa 210-8681 (JP)

(74) Representative: Strehl & Partner mbB
Maximilianstrasse 54
80538 München (DE)

(54) COMPOSITION FOR FOODS

(57) The present invention aims to provide a new composition for a food that can be preferably used for improving the quality of foods, and the like.

The present invention relates to a composition for a food, containing (A) a fat or oil, and (B) aqueous particles containing a gelling agent and a flavoring material, and dispersed in the fat or oil, and the like.

EP 4 595 773 A1

**Description**

[Technical Field]

The present invention relates to compositions for foods. The present invention also relates to foods and production methods thereof, and methods for improving food quality.

[Background Art]

In recent years, with the background of diversification of consumer lifestyles and values, the properties and functions that consumers require from food have also become diversified and sophisticated. For example, foods are required to be superior in safety, nutritional value, preference, bioregulatory function (healthiness), convenience, preservability, economic efficiency, or the like. Improvement and refinement of these properties and functions leads to improvement of food quality, and various studies have been conducted so far.

For example, there has been an increasing need for low-salt foods in recent years with the aim of preventing lifestyle-related diseases and the like caused by excessive sodium chloride intake, and efforts to reduce sodium chloride intake have been accelerating around the world. A method has been proposed with regard to low-salt foods, for imparting a salty taste by adding to the low-salt food a water-in-oil emulsion composition incorporating sodium chloride in the water phase and using one or more emulsifiers selected from glycerin fatty acid esters and sucrose fatty acid esters (Patent Literature 1).

Furthermore, in order to provide a vegetable salad in which separation of water from vegetables is effectively suppressed, it has been proposed to use a W/O/W type emulsified seasoning that meets prescribed requirements (Patent Literatures 2 and 3).

In addition, in order to provide a water-in-oil emulsified food in which the taste expression of a watersoluble taste material (particularly salt) is enhanced, it has been proposed to use diglycerol monomyristate in water-in-oil emulsified foods (Patent Literature 4).

[Citation List]

[Patent Literature]

[Patent Literature 1]
JP 2003-274869 A
[Patent Literature 2]
WO 2013/061653
[Patent Literature 3]
JP 2013-106612 A
[Patent Literature 4]
JP 2016-059293 A

[Summary of Invention]

[Technical Problem]

The present invention has been made in view of the aforementioned situation, and the problem to be solved by the present invention is to newly provide compositions for foods that can be preferably used for improving food quality. In one embodiment, the problem to be solved by the present invention is to newly provide novel compositions for foods that can be preferably used for imparting or enhancing flavors (e.g., saltiness, etc.) of foods.

In addition, the problem to be solved by the present invention is to newly provide foods with improved quality and production methods thereof. In one embodiment, the problem to be solved by the present invention is to provide foods with imparted or enhanced flavors (e.g., saltiness, etc.) and production methods thereof.

In addition, the problem to be solved by the present invention is to newly provide methods for improving food quality. In one embodiment, the problem to be solved by the present invention is to newly provide methods for imparting or enhancing flavors (e.g., saltiness etc.) of foods.

[Solution to Problem]

The present inventors have conducted intensive studies in an attempt to solve the aforementioned problems and found that the quality of foods can be improved by utilizing a composition containing (A) a fat or oil, and (B) aqueous particles containing a gelling agent and dispersed in the aforementioned fat or oil. They have conducted further studies and completed the present invention.

Accordingly, the present invention provides the following.

[1] A composition for a food, comprising

(A) a fat or oil, and
(B) aqueous particles comprising a gelling agent and a flavoring material, and dispersed in the aforementioned fat or oil.

[2] The composition of [1], wherein the aforementioned fat or oil comprises an emulsifier.
[3] The composition of [2], wherein the amount of the emulsifier contained in the aforementioned fat or oil is 0.01 to 10 wt% with respect to the aforementioned composition.
[4] The composition of [2] or [3], wherein the amount of the emulsifier contained in the aforementioned fat or oil is 0.05 to 7 wt% with respect to the aforementioned composition.
[5] The composition of any one of [2] to [4], wherein the amount of the emulsifier contained in the aforementioned fat or oil is 0.05 to 5 wt% with respect to the aforementioned composition.
[6] The composition of any one of [2] to [5], wherein the amount of the emulsifier contained in the aforementioned fat or oil is 0.1 to 3 wt% with respect to the aforementioned composition.
[7] The composition of any one of [1] to [6], wherein the amount of the gelling agent contained in the aforementioned aqueous particles is 0.01 to 20 wt% with respect to the aforementioned composition.
[8] The composition of any one of [1] to [7], wherein the amount of the gelling agent contained in the aforementioned aqueous particles is 0.05 to 10 wt% with respect to the aforementioned composition.
[9] The composition of any one of [1] to [8], wherein the amount of the gelling agent contained in the aforementioned aqueous particles is 0.1 to 7 wt% with respect to the aforementioned composition.
[10] The composition of any one of [1] to [9], wherein the amount of the gelling agent contained in the aforementioned aqueous particles is 0.5 to 5 wt% with respect to the aforementioned composition.
[11] The composition of any one of [1] to [10], wherein the amount of the gelling agent contained in the aforementioned aqueous particles is 0.8 to 3 wt% with respect to the aforementioned composition.
[12] The composition of any one of [1] to [11], wherein the amount of the gelling agent contained in the aforementioned aqueous particles is 0.8 to 2 wt% with respect to the aforementioned composition.
[13] The composition of any one of [1] to [12], wherein the amount of the gelling agent contained in the aforementioned aqueous particles is 0.1 to 50 parts by weight with respect to 100 parts by weight of water, which is a constituent component of the aforementioned aqueous particles.
[14] The composition of any one of [1] to [13], wherein the amount of the gelling agent contained in the aforementioned aqueous particles is 0.3 to 25 parts by weight with respect to 100 parts by weight of water, which is a constituent component of the aforementioned aqueous particles.
[15] The composition of any one of [1] to [14], wherein the amount of the gelling agent contained in the aforementioned aqueous particles is 0.5 to 10 parts by weight with respect to 100 parts by weight of water, which is a constituent component of the aforementioned aqueous particles.
[16] The composition of any one of [1] to [15], wherein the amount of the gelling agent contained in the aforementioned aqueous particles is 0.65 to 5 parts by weight with respect to 100 parts by weight of water, which is a constituent component of the aforementioned aqueous particles.
[17] The composition of any one of [1] to [16], wherein the amount of the gelling agent contained in the aforementioned aqueous particles is 1 to 4 parts by weight with respect to 100 parts by weight of water, which is a constituent component of the aforementioned aqueous particles.
[18] The composition of any one of [1] to [17], wherein the amount of the gelling agent contained in the aforementioned aqueous particles is 1.5 to 3 parts by weight with respect to 100 parts by weight of water, which is a constituent component of the aforementioned aqueous particles.
[19] The composition of any one of [1] to [18], wherein the aforementioned gelling agent comprises at least one selected from the group consisting of (i) agar, (ii) gelatin, (iii) xanthan gum and galactomannan in combination, and (iv) an alginic acid compound.
[20] The composition of any one of [1] to [18], wherein the aforementioned gelling agent comprises agar.

[21] The composition of [19] or [20], wherein the amount of the agar contained in the aforementioned aqueous particles is 0.01 to 10 wt% with respect to the aforementioned composition.

[22] The composition of any one of [19] to [21], wherein the amount of the agar contained in the aforementioned aqueous particles is 0.05 to 7 wt% with respect to the aforementioned composition.

[23] The composition of any one of [19] to [22], wherein the amount of the agar contained in the aforementioned aqueous particles is 0.1 to 5 wt% with respect to the aforementioned composition.

[24] The composition of any one of [19] to [23], wherein the amount of the agar contained in the aforementioned aqueous particles is 0.3 to 3 wt% with respect to the aforementioned composition.

[25] The composition of any one of [19] to [24], wherein the amount of the agar contained in the aforementioned aqueous particles is 0.5 to 2 wt% with respect to the aforementioned composition.

[26] The composition of any one of [19] to [25], wherein the amount of the agar contained in the aforementioned aqueous particles is 0.8 to 1.5 wt% with respect to the aforementioned composition.

[27] The composition of any one of [19] to [26], wherein the amount of the agar contained in the aforementioned aqueous particles is 0.1 to 50 parts by weight with respect to 100 parts by weight of water, which is a constituent component of the aforementioned aqueous particles.

[28] The composition of any one of [19] to [27], wherein the amount of the agar contained in the aforementioned aqueous particles is 0.3 to 10 parts by weight with respect to 100 parts by weight of water, which is a constituent component of the aforementioned aqueous particles.

[29] The composition of any one of [19] to [28], wherein the amount of the agar contained in the aforementioned aqueous particles is 0.5 to 5 parts by weight with respect to 100 parts by weight of water, which is a constituent component of the aforementioned aqueous particles.

[30] The composition of any one of [19] to [29], wherein the amount of the agar contained in the aforementioned aqueous particles is 1 to 4 parts by weight with respect to 100 parts by weight of water, which is a constituent component of the aforementioned aqueous particles.

[31] The composition of any one of [19] to [30], wherein the amount of the agar contained in the aforementioned aqueous particles is 1.5 to 3 parts by weight with respect to 100 parts by weight of water, which is a constituent component of the aforementioned aqueous particles.

[32] The composition of any one of [1] to [31], wherein the amount of the flavoring material contained in the aforementioned aqueous particles is 0.00003 to 30 wt% with respect to the aforementioned composition.

[33] The composition of any one of [1] to [32], wherein the amount of the flavoring material contained in the aforementioned aqueous particles is 0.01 to 30 wt% with respect to the aforementioned composition.

[34] The composition of any one of [1] to [33], wherein the amount of the flavoring material contained in the aforementioned aqueous particles is 0.05 to 28 wt% with respect to the aforementioned composition.

[35] The composition of any one of [1] to [34], wherein the amount of the flavoring material contained in the aforementioned aqueous particles is 0.1 to 25 wt% with respect to the aforementioned composition.

[36] The composition of any one of [1] to [35], wherein the amount of the flavoring material contained in the aforementioned aqueous particles is 0.5 to 23 wt% with respect to the aforementioned composition.

[37] The composition of any one of [1] to [36], wherein the amount of the flavoring material contained in the aforementioned aqueous particles is 1 to 20 wt% with respect to the aforementioned composition.

[38] The composition of any one of [1] to [37], wherein the flavoring material contained in the aforementioned aqueous particles comprises sodium chloride.

[39] The composition of [38], wherein the amount of the sodium chloride contained in the aforementioned aqueous particles is 0.01 to 30 wt% with respect to the aforementioned composition.

[40] The composition of [38] or [39], wherein the amount of the sodium chloride contained in the aforementioned aqueous particles is 0.1 to 25 wt% with respect to the aforementioned composition.

[41] The composition of any one of [38] to [40], wherein the amount of the sodium chloride contained in the aforementioned aqueous particles is 1 to 20 wt% with respect to the aforementioned composition.

[42] The composition of any one of [38] to [41], wherein the amount of the sodium chloride contained in the aforementioned aqueous particles is 3 to 15 wt% with respect to the aforementioned composition.

[43] The composition of any one of [38] to [42], wherein the amount of the sodium chloride contained in the aforementioned aqueous particles is 5 to 12 wt% with respect to the aforementioned composition.

[44] The composition of any one of [38] to [43], wherein the amount of the sodium chloride contained in the aforementioned aqueous particles is 7 to 12 wt% with respect to the aforementioned composition.

[45] The composition of any one of [38] to [44], wherein the aforementioned food is a low-salt food.

[46] The composition of any one of [1] to [45], wherein the flavoring material contained in the aforementioned aqueous particles comprises β-caryophyllene oxide.

[47] The composition of [46], wherein the amount of the β-caryophyllene oxide contained in the aforementioned aqueous particles is 0.00003 to 5 wt% with respect to the aforementioned composition.

[48] The composition of [46] or [47], wherein the amount of the β-caryophyllene oxide contained in the aforementioned aqueous particles is 0.00005 to 1 wt% with respect to the aforementioned composition.

[49] The composition of any one of [46] to [48], wherein the amount of the β-caryophyllene oxide contained in the aforementioned aqueous particles is 0.0001 to 0.5 wt% with respect to the aforementioned composition.

[50] The composition of any one of [46] to [49], wherein the amount of the β-caryophyllene oxide contained in the aforementioned aqueous particles is 0.0003 to 0.1 wt% with respect to the aforementioned composition.

[51] The composition of any one of [46] to [50], wherein the amount of the β-caryophyllene oxide contained in the aforementioned aqueous particles is 0.0005 to 0.05 wt% with respect to the aforementioned composition.

[52] The composition of any one of [1] to [51], wherein the content of the fat or oil in the aforementioned composition is 5 to 95 wt% with respect to the aforementioned composition.

[53] The composition of any one of [1] to [52], wherein the content of the fat or oil in the aforementioned composition is 15 to 80 wt% with respect to the aforementioned composition.

[54] The composition of any one of [1] to [53], wherein the content of the fat or oil in the aforementioned composition is 20 to 60 wt% with respect to the aforementioned composition.

[55] The composition of any one of [1] to [54], wherein the content of the fat or oil in the aforementioned composition is 25 to 50 wt% with respect to the aforementioned composition.

[56] The composition of any one of [1] to [55], wherein the content of the fat or oil in the aforementioned composition is 30 to 40 wt% with respect to the aforementioned composition.

[57] The composition of any one of [1] to [56], wherein the total amount of the constituent components of the aforementioned aqueous particles is 4 to 94 wt% with respect to the aforementioned composition.

[58] The composition of any one of [1] to [57], wherein the total amount of the constituent components of the aforementioned aqueous particles is 15 to 90 wt% with respect to the aforementioned composition.

[59] The composition of any one of [1] to [58], wherein the total amount of the constituent components of the aforementioned aqueous particles is 30 to 80 wt% with respect to the aforementioned composition.

[60] The composition of any one of [1] to [59], wherein the total amount of the constituent components of the aforementioned aqueous particles is 40 to 75 wt% with respect to the aforementioned composition.

[61] The composition of any one of [1] to [60], wherein the total amount of the constituent components of the aforementioned aqueous particles is 50 to 70 wt% with respect to the aforementioned composition.

[62] The composition of any one of [1] to [61], wherein the total amount of the constituent components of the aforementioned aqueous particles is 55 to 65 wt% with respect to the aforementioned composition.

[63] The composition of any one of [1] to [62], wherein the aforementioned fat or oil comprises a flavoring material.

[64] The composition of [63], wherein the amount of the flavoring material contained in the aforementioned fat or oil is 0.0001 to 30 wt% with respect to the aforementioned composition.

[65] The composition of [63] or [64], wherein the amount of the flavoring material contained in the aforementioned fat or oil is 0.001 to 25 wt% with respect to the aforementioned composition.

[66] The composition of any one of [63] to [65], wherein the amount of the flavoring material contained in the aforementioned fat or oil is 0.01 to 20 wt% with respect to the aforementioned composition.

[67] The composition of any one of [63] to [66], wherein the flavoring material contained in the aforementioned fat or oil comprises β-caryophyllene oxide.

[68] The composition of [67], wherein the amount of the β-caryophyllene oxide contained in the aforementioned aqueous particles is 0.0003 to 0.5 wt% with respect to the aforementioned composition.

[69] The composition of [67] or [68], wherein the amount of the β-caryophyllene oxide contained in the aforementioned aqueous particles is 0.0005 to 0.3 wt% with respect to the aforementioned composition.

[70] The composition of any one of [67] to [69], wherein the amount of the β-caryophyllene oxide contained in the aforementioned aqueous particles is 0.001 to 0.1 wt% with respect to the aforementioned composition.

[71] The composition of any one of [67] to [70], wherein the amount of the β-caryophyllene oxide contained in the aforementioned aqueous particles is 0.003 to 0.05 wt% with respect to the aforementioned composition.

[72] The composition of any one of [67] to [71], wherein the amount of the β-caryophyllene oxide contained in the aforementioned aqueous particles is 0.005 to 0.03 wt% with respect to the aforementioned composition.

[73] The composition of any one of [1] to [72], wherein the aforementioned aqueous particle has a median diameter of 5 to 80 μm.

[74] The composition of any one of [1] to [73], wherein the aforementioned aqueous particle has a median diameter of 10 to 75 μm.

[75] The composition of any one of [1] to [74], wherein the aforementioned aqueous particle has a median diameter of 20 to 65 μm.

[76] The composition of any one of [1] to [75], wherein the aforementioned aqueous particle has a median diameter of 30 to 55 μm.

[77] The composition of any one of [1] to [76], wherein the aforementioned aqueous particle has a mean volume diameter of 45 to 135 μm.

[78] The composition of any one of [1] to [77], wherein the aforementioned aqueous particle has a mean volume diameter of 50 to 130 μm.

[79] The composition of any one of [1] to [78], wherein the aforementioned aqueous particle has a mean volume diameter of 60 to 120 μm.

[80] The composition of any one of [1] to [79], wherein the aforementioned aqueous particle has a mean volume diameter of 70 to 110 μm.

[81] The composition of any one of [1] to [80], wherein the proportion of water in the constituent components of the aforementioned aqueous particles is 5 to 95 wt%.

[82] The composition of any one of [1] to [81], wherein the proportion of water in the constituent components of the aforementioned aqueous particles is 10 to 95 wt%.

[83] The composition of any one of [1] to [82], wherein the proportion of water in the constituent components of the aforementioned aqueous particles is 30 to 95 wt%.

[84] The composition of any one of [1] to [83], wherein the proportion of water in the constituent components of the aforementioned aqueous particles is 50 to 95 wt%.

[85] The composition of any one of [1] to [84], wherein the proportion of water in the constituent components of the aforementioned aqueous particles is 60 to 95 wt%.

[86] The composition of any one of [1] to [85], wherein the proportion of water in the constituent components of the aforementioned aqueous particles is 70 to 95 wt%.

[87] The composition of any one of [1] to [86], which is used for improving the quality of a food.

[88] The composition of [87], wherein the quality improvement of food is imparting or enhancing a flavor of a food.

[89] The composition of [87], wherein the quality improvement of food is imparting or enhancing saltiness of a food.

[90] The composition of [87], wherein the quality improvement of food is imparting or enhancing a fat or oil sensation.

[91] The composition of [87], wherein the quality improvement of food is imparting or enhancing an animal fat or oil sensation.

[92] A food comprising a composition comprising

(A) a fat or oil, and
(B) aqueous particles comprising a gelling agent and a flavoring material, and dispersed in the aforementioned fat or oil.

[93] The food of [92], wherein the aforementioned fat or oil comprises an emulsifier.

[94] The food of [93], wherein the amount of the emulsifier contained in the aforementioned fat or oil is 0.01 to 10 wt% with respect to the aforementioned composition.

[95] The food of [93] or [94], wherein the amount of the emulsifier contained in the aforementioned fat or oil is 0.05 to 7 wt% with respect to the aforementioned composition.

[96] The food of any one of [93] to [95], wherein the amount of the emulsifier contained in the aforementioned fat or oil is 0.05 to 5 wt% with respect to the aforementioned composition.

[97] The food of any one of [93] to [96], wherein the amount of the emulsifier contained in the aforementioned fat or oil is 0.1 to 3 wt% with respect to the aforementioned composition.

[98] The food of any one of [92] to [97], wherein the amount of the gelling agent contained in the aforementioned aqueous particles is 0.01 to 20 wt% with respect to the aforementioned composition.

[99] The food of any one of [92] to [98], wherein the amount of the gelling agent contained in the aforementioned aqueous particles is 0.05 to 10 wt% with respect to the aforementioned composition.

[100] The food of any one of [92] to [99], wherein the amount of the gelling agent contained in the aforementioned aqueous particles is 0.1 to 7 wt% with respect to the aforementioned composition.

[101] The food of any one of [92] to [100], wherein the amount of the gelling agent contained in the aforementioned aqueous particles is 0.5 to 5 wt% with respect to the aforementioned composition.

[102] The food of any one of [92] to [101], wherein the amount of the gelling agent contained in the aforementioned aqueous particles is 0.8 to 3 wt% with respect to the aforementioned composition.

[103] The food of any one of [92] to [102], wherein the amount of the gelling agent contained in the aforementioned aqueous particles is 0.8 to 2 wt% with respect to the aforementioned composition.

[104] The food of any one of [92] to [103], wherein the amount of the gelling agent contained in the aforementioned aqueous particles is 0.1 to 50 parts by weight with respect to 100 parts by weight of water, which is a constituent component of the aforementioned aqueous particles.

[105] The food of any one of [92] to [104], wherein the amount of the gelling agent contained in the aforementioned aqueous particles is 0.3 to 25 parts by weight with respect to 100 parts by weight of water, which is a constituent component of the aforementioned aqueous particles.

[106] The food of any one of [92] to [105], wherein the amount of the gelling agent contained in the aforementioned aqueous particles is 0.5 to 10 parts by weight with respect to 100 parts by weight of water, which is a constituent component of the aforementioned aqueous particles.

[107] The food of any one of [92] to [106], wherein the amount of the gelling agent contained in the aforementioned aqueous particles is 0.65 to 5 parts by weight with respect to 100 parts by weight of water, which is a constituent component of the aforementioned aqueous particles.

[108] The food of any one of [92] to [107], wherein the amount of the gelling agent contained in the aforementioned aqueous particles is 1 to 4 parts by weight with respect to 100 parts by weight of water, which is a constituent component of the aforementioned aqueous particles.

[109] The food of any one of [92] to [108], wherein the amount of the gelling agent contained in the aforementioned aqueous particles is 1.5 to 3 parts by weight with respect to 100 parts by weight of water, which is a constituent component of the aforementioned aqueous particles.

[110] The food of any one of [92] to [109], wherein the aforementioned gelling agent comprises at least one selected from the group consisting of (i) agar, (ii) gelatin, (iii) xanthan gum and galactomannan in combination, and (iv) an alginic acid compound.

[111] The food of any one of [92] to [109], wherein the aforementioned gelling agent comprises agar.

[112] The food of [110] or [111], wherein the amount of the agar contained in the aforementioned aqueous particles is 0.01 to 10 wt% with respect to the aforementioned composition.

[113] The food of any one of [110] to [112], wherein the amount of the agar contained in the aforementioned aqueous particles is 0.05 to 7 wt% with respect to the aforementioned composition.

[114] The food of any one of [110] to [113], wherein the amount of the agar contained in the aforementioned aqueous particles is 0.1 to 5 wt% with respect to the aforementioned composition.

[115] The food of any one of [110] to [114], wherein the amount of the agar contained in the aforementioned aqueous particles is 0.3 to 3 wt% with respect to the aforementioned composition.

[116] The food of any one of [110] to [115], wherein the amount of the agar contained in the aforementioned aqueous particles is 0.5 to 2 wt% with respect to the aforementioned composition.

[117] The food of any one of [110] to [116], wherein the amount of the agar contained in the aforementioned aqueous particles is 0.8 to 1.5 wt% with respect to the aforementioned composition.

[118] The food of any one of [110] to [117], wherein the amount of the agar contained in the aforementioned aqueous particles is 0.1 to 50 parts by weight with respect to 100 parts by weight of water, which is a constituent component of the aforementioned aqueous particles.

[119] The food of any one of [110] to [118], wherein the amount of the agar contained in the aforementioned aqueous particles is 0.3 to 10 parts by weight with respect to 100 parts by weight of water, which is a constituent component of the aforementioned aqueous particles.

[120] The food of any one of [110] to [119], wherein the amount of the agar contained in the aforementioned aqueous particles is 0.5 to 5 parts by weight with respect to 100 parts by weight of water, which is a constituent component of the aforementioned aqueous particles.

[121] The food of any one of [110] to [120], wherein the amount of the agar contained in the aforementioned aqueous particles is 1 to 4 parts by weight with respect to 100 parts by weight of water, which is a constituent component of the aforementioned aqueous particles.

[122] The food of any one of [110] to [121], wherein the amount of the agar contained in the aforementioned aqueous particles is 1.5 to 3 parts by weight with respect to 100 parts by weight of water, which is a constituent component of the aforementioned aqueous particles.

[123] The food of any one of [92] to [122], wherein the amount of the flavoring material contained in the aforementioned aqueous particles is 0.00003 to 30 wt% with respect to the aforementioned composition.

[124] The food of any one of [92] to [123], wherein the amount of the flavoring material contained in the aforementioned aqueous particles is 0.01 to 30 wt% with respect to the aforementioned composition.

[125] The food of any one of [92] to [124], wherein the amount of the flavoring material contained in the aforementioned aqueous particles is 0.05 to 28 wt% with respect to the aforementioned composition.

[126] The food of any one of [92] to [125], wherein the amount of the flavoring material contained in the aforementioned aqueous particles is 0.1 to 25 wt% with respect to the aforementioned composition.

[127] The food of any one of [92] to [126], wherein the amount of the flavoring material contained in the aforementioned aqueous particles is 0.5 to 23 wt% with respect to the aforementioned composition.

[128] The food of any one of [92] to [127], wherein the amount of the flavoring material contained in the aforementioned aqueous particles is 1 to 20 wt% with respect to the aforementioned composition.

[129] The food of any one of [92] to [128], wherein the flavoring material contained in the aforementioned aqueous particles comprises sodium chloride.

[130] The food of [129], wherein the amount of the sodium chloride contained in the aforementioned aqueous particles is 0.01 to 30 wt% with respect to the aforementioned composition.

[131] The food of [129] or [130], wherein the amount of the sodium chloride contained in the aforementioned aqueous particles is 0.1 to 25 wt% with respect to the aforementioned composition.

[132] The food of any one of [129] to [131], wherein the amount of the sodium chloride contained in the aforementioned aqueous particles is 1 to 20 wt% with respect to the aforementioned composition.

[133] The food of any one of [129] to [132], wherein the amount of the sodium chloride contained in the aforementioned aqueous particles is 3 to 15 wt% with respect to the aforementioned composition.

[134] The food of any one of [129] to [133], wherein the amount of the sodium chloride contained in the aforementioned aqueous particles is 5 to 12 wt% with respect to the aforementioned composition.

[135] The food of any one of [129] to [134], wherein the amount of the sodium chloride contained in the aforementioned aqueous particles is 7 to 12 wt% with respect to the aforementioned composition.

[136] The food of any one of [129] to [135], which is a low-salt food.

[137] The food of any one of [92] to [136], wherein the flavoring material contained in the aforementioned aqueous particles comprises β-caryophyllene oxide.

[138] The food of [137], wherein the amount of the β-caryophyllene oxide contained in the aforementioned aqueous particles is 0.00003 to 5 wt% with respect to the aforementioned composition.

[139] The food of [137] or [138], wherein the amount of the β-caryophyllene oxide contained in the aforementioned aqueous particles is 0.00005 to 1 wt% with respect to the aforementioned composition.

[140] The food of any one of [137] to [139], wherein the amount of the β-caryophyllene oxide contained in the aforementioned aqueous particles is 0.0001 to 0.5 wt% with respect to the aforementioned composition.

[141] The food of any one of [137] to [140], wherein the amount of the β-caryophyllene oxide contained in the aforementioned aqueous particles is 0.0003 to 0.1 wt% with respect to the aforementioned composition.

[142] The food of any one of [137] to [141], wherein the amount of the β-caryophyllene oxide contained in the aforementioned aqueous particles is 0.0005 to 0.05 wt% with respect to the aforementioned composition.

[143] The food of any one of [92] to [142], which is a frozen food.

[144] The food of any one of [92] to [143], wherein the content of the fat or oil in the aforementioned composition is 5 to 95 wt% with respect to the aforementioned composition.

[145] The food of any one of [92] to [144], wherein the content of the fat or oil in the aforementioned composition is 15 to 80 wt% with respect to the aforementioned composition.

[146] The food of any one of [92] to [145], wherein the content of the fat or oil in the aforementioned composition is 20 to 60 wt% with respect to the aforementioned composition.

[147] The food of any one of [92] to [146], wherein the content of the fat or oil in the aforementioned composition is 25 to 50 wt% with respect to the aforementioned composition.

[148] The food of any one of [92] to [147], wherein the content of the fat or oil in the aforementioned composition is 30 to 40 wt% with respect to the aforementioned composition.

[149] The food of any one of [92] to [148], wherein the total amount of the constituent components of the aforementioned aqueous particles is 4 to 94 wt% with respect to the aforementioned composition.

[150] The food of any one of [92] to [149], wherein the total amount of the constituent components of the aforementioned aqueous particles is 15 to 90 wt% with respect to the aforementioned composition.

[151] The food of any one of [92] to [150], wherein the total amount of the constituent components of the aforementioned aqueous particles is 30 to 80 wt% with respect to the aforementioned composition.

[152] The food of any one of [92] to [151], wherein the total amount of the constituent components of the aforementioned aqueous particles is 40 to 75 wt% with respect to the aforementioned composition.

[153] The food of any one of [92] to [152], wherein the total amount of the constituent components of the aforementioned aqueous particles is 50 to 70 wt% with respect to the aforementioned composition.

[154] The food of any one of [92] to [153], wherein the total amount of the constituent components of the aforementioned aqueous particles is 55 to 65 wt% with respect to the aforementioned composition.

[155] The food of any one of [92] to [154], wherein the aforementioned fat or oil comprises a flavoring material.

[156] The food of [155], wherein the amount of the flavoring material contained in the aforementioned fat or oil is 0.0001 to 30 wt% with respect to the aforementioned composition.

[157] The food of [155] or [156], wherein the amount of the flavoring material contained in the aforementioned fat or oil is 0.001 to 25 wt% with respect to the aforementioned composition.

[158] The food of any one of [155] to [157], wherein the amount of the flavoring material contained in the aforementioned fat or oil is 0.01 to 20 wt% with respect to the aforementioned composition.

[159] The food of any one of [155] to [158], wherein the flavoring material contained in the aforementioned fat or oil comprises β-caryophyllene oxide.

[160] The food of [159], wherein the amount of the β-caryophyllene oxide contained in the aforementioned aqueous particles is 0.0003 to 0.5 wt% with respect to the aforementioned composition.

[161] The food of [159] or [160], wherein the amount of the β-caryophyllene oxide contained in the aforementioned aqueous particles is 0.0005 to 0.3 wt% with respect to the aforementioned composition.

[162] The food of any one of [159] to [161], wherein the amount of the β-caryophyllene oxide contained in the aforementioned aqueous particles is 0.001 to 0.1 wt% with respect to the aforementioned composition.

[163] The food of any one of [159] to [162], wherein the amount of the β-caryophyllene oxide contained in the aforementioned aqueous particles is 0.003 to 0.05 wt% with respect to the aforementioned composition.

[164] The food of any one of [159] to [163], wherein the amount of the β-caryophyllene oxide contained in the aforementioned aqueous particles is 0.005 to 0.03 wt% with respect to the aforementioned composition.

[165] The food of any one of [92] to [164], wherein the aforementioned aqueous particle has a median diameter of 5 to 80 μm.

[166] The food of any one of [92] to [165], wherein the aforementioned aqueous particle has a median diameter of 10 to 75 μm.

[167] The food of any one of [92] to [166], wherein the aforementioned aqueous particle has a median diameter of 20 to 65 μm.

[168] The food of any one of [92] to [167], wherein the aforementioned aqueous particle has a median diameter of 30 to 55 μm.

[169] The food of any one of [92] to [168], wherein the aforementioned aqueous particle has a mean volume diameter of 45 to 135 μm.

[170] The food of any one of [92] to [169], wherein the aforementioned aqueous particle has a mean volume diameter of 50 to 130 μm.

[171] The food of any one of [92] to [170], wherein the aforementioned aqueous particle has a mean volume diameter of 60 to 120 μm.

[172] The food of any one of [92] to [171], wherein the aforementioned aqueous particle has a mean volume diameter of 70 to 110 μm.

[173] The food of any one of [92] to [172], wherein the proportion of water in the constituent components of the aforementioned aqueous particles is 5 to 95 wt%.

[174] The food of any one of [92] to [173], wherein the proportion of water in the constituent components of the aforementioned aqueous particles is 10 to 95 wt%.

[175] The food of any one of [92] to [174], wherein the proportion of water in the constituent components of the aforementioned aqueous particles is 30 to 95 wt%.

[176] The food of any one of [92] to [175], wherein the proportion of water in the constituent components of the aforementioned aqueous particles is 50 to 95 wt%.

[177] The food of any one of [92] to [176], wherein the proportion of water in the constituent components of the aforementioned aqueous particles is 60 to 95 wt%.

[178] The food of any one of [92] to [177], wherein the proportion of water in the constituent components of the aforementioned aqueous particles is 70 to 95 wt%.

[179] The food of any one of [92] to [178], which is a food with improved quality.

[180] A method for producing a food, comprising adding a composition comprising

(A) a fat or oil, and
(B) aqueous particles comprising a gelling agent and a flavoring material, and dispersed in the aforementioned fat or oil.

[181] The production method of [180], wherein the aforementioned fat or oil comprises an emulsifier.

[182] The production method of [181], wherein the amount of the emulsifier contained in the aforementioned fat or oil is 0.01 to 10 wt% with respect to the aforementioned composition.

[183] The production method of [181] or [182], wherein the amount of the emulsifier contained in the aforementioned fat or oil is 0.05 to 7 wt% with respect to the aforementioned composition.

[184] The production method of any one of [181] to [183], wherein the amount of the emulsifier contained in the aforementioned fat or oil is 0.05 to 5 wt% with respect to the aforementioned composition.

[185] The production method of any one of [181] to [184], wherein the amount of the emulsifier contained in the aforementioned fat or oil is 0.1 to 3 wt% with respect to the aforementioned composition.

[186] The production method of any one of [180] to [185], wherein the amount of the gelling agent contained in the aforementioned aqueous particles is 0.01 to 20 wt% with respect to the aforementioned composition.

[187] The production method of any one of [180] to [186], wherein the amount of the gelling agent contained in the aforementioned aqueous particles is 0.05 to 10 wt% with respect to the aforementioned composition.

[188] The production method of any one of [180] to [187], wherein the amount of the gelling agent contained in the aforementioned aqueous particles is 0.1 to 7 wt% with respect to the aforementioned composition.

[189] The production method of any one of [180] to [188], wherein the amount of the gelling agent contained in the aforementioned aqueous particles is 0.5 to 5 wt% with respect to the aforementioned composition.

[190] The production method of any one of [180] to [189], wherein the amount of the gelling agent contained in the aforementioned aqueous particles is 0.8 to 3 wt% with respect to the aforementioned composition.

[191] The production method of any one of [180] to [190], wherein the amount of the gelling agent contained in the aforementioned aqueous particles is 0.8 to 2 wt% with respect to the aforementioned composition.

[192] The production method of any one of [180] to [191], wherein the amount of the gelling agent contained in the aforementioned aqueous particles is 0.1 to 50 parts by weight with respect to 100 parts by weight of water, which is a constituent component of the aforementioned aqueous particles.

[193] The production method of any one of [180] to [192], wherein the amount of the gelling agent contained in the aforementioned aqueous particles is 0.3 to 25 parts by weight with respect to 100 parts by weight of water, which is a constituent component of the aforementioned aqueous particles.

[194] The production method of any one of [180] to [193], wherein the amount of the gelling agent contained in the aforementioned aqueous particles is 0.5 to 10 parts by weight with respect to 100 parts by weight of water, which is a constituent component of the aforementioned aqueous particles.

[195] The production method of any one of [180] to [194], wherein the amount of the gelling agent contained in the aforementioned aqueous particles is 0.65 to 5 parts by weight with respect to 100 parts by weight of water, which is a constituent component of the aforementioned aqueous particles.

[196] The production method of any one of [180] to [195], wherein the amount of the gelling agent contained in the aforementioned aqueous particles is 1 to 4 parts by weight with respect to 100 parts by weight of water, which is a constituent component of the aforementioned aqueous particles.

[197] The production method of any one of [180] to [196], wherein the amount of the gelling agent contained in the aforementioned aqueous particles is 1.5 to 3 parts by weight with respect to 100 parts by weight of water, which is a constituent component of the aforementioned aqueous particles.

[198] The production method of any one of [180] to [197], wherein the aforementioned gelling agent comprises at least one selected from the group consisting of (i) agar, (ii) gelatin, (iii) xanthan gum and galactomannan in combination, and (iv) an alginic acid compound.

[199] The production method of any one of [180] to [197], wherein the aforementioned gelling agent comprises agar.

[200] The production method of [198] or [199], wherein the amount of the agar contained in the aforementioned aqueous particles is 0.01 to 10 wt% with respect to the aforementioned composition.

[201] The production method of any one of [198] to [200], wherein the amount of the agar contained in the aforementioned aqueous particles is 0.05 to 7 wt% with respect to the aforementioned composition.

[202] The production method of any one of [198] to [201], wherein the amount of the agar contained in the aforementioned aqueous particles is 0.1 to 5 wt% with respect to the aforementioned composition.

[203] The production method of any one of [198] to [202], wherein the amount of the agar contained in the aforementioned aqueous particles is 0.3 to 3 wt% with respect to the aforementioned composition.

[204] The production method of any one of [198] to [203], wherein the amount of the agar contained in the aforementioned aqueous particles is 0.5 to 2 wt% with respect to the aforementioned composition.

[205] The production method of any one of [198] to [204], wherein the amount of the agar contained in the aforementioned aqueous particles is 0.8 to 1.5 wt% with respect to the aforementioned composition.

[206] The production method of any one of [198] to [205], wherein the amount of the agar contained in the aforementioned aqueous particles is 0.1 to 50 parts by weight with respect to 100 parts by weight of water, which is a constituent component of the aforementioned aqueous particles.

[207] The production method of any one of [198] to [206], wherein the amount of the agar contained in the aforementioned aqueous particles is 0.3 to 10 parts by weight with respect to 100 parts by weight of water, which is a constituent component of the aforementioned aqueous particles.

[208] The production method of any one of [198] to [207], wherein the amount of the agar contained in the aforementioned aqueous particles is 0.5 to 5 parts by weight with respect to 100 parts by weight of water, which is a constituent component of the aforementioned aqueous particles.

[209] The production method of any one of [198] to [208], wherein the amount of the agar contained in the aforementioned aqueous particles is 1 to 4 parts by weight with respect to 100 parts by weight of water, which is a constituent component of the aforementioned aqueous particles.

[210] The production method of any one of [198] to [209], wherein the amount of the agar contained in the aforementioned aqueous particles is 1.5 to 3 parts by weight with respect to 100 parts by weight of water, which is a constituent component of the aforementioned aqueous particles.

[211] The production method of any one of [180] to [210], wherein the amount of the flavoring material contained in the aforementioned aqueous particles is 0.00003 to 30 wt% with respect to the aforementioned composition.

[212] The production method of any one of [180] to [211], wherein the amount of the flavoring material contained in the aforementioned aqueous particles is 0.01 to 30 wt% with respect to the aforementioned composition.

[213] The production method of any one of [180] to [212], wherein the amount of the flavoring material contained in the aforementioned aqueous particles is 0.05 to 28 wt% with respect to the aforementioned composition.

[214] The production method of any one of [180] to [213], wherein the amount of the flavoring material contained in the aforementioned aqueous particles is 0.1 to 25 wt% with respect to the aforementioned composition.

[215] The production method of any one of [180] to [214], wherein the amount of the flavoring material contained in the aforementioned aqueous particles is 0.5 to 23 wt% with respect to the aforementioned composition.

[216] The production method of any one of [180] to [215], wherein the amount of the flavoring material contained in the aforementioned aqueous particles is 1 to 20 wt% with respect to the aforementioned composition.

[217] The production method of any one of [180] to [216], wherein the flavoring material contained in the aforementioned aqueous particles comprises sodium chloride.

[218] The production method of [217], wherein the amount of the sodium chloride contained in the aforementioned aqueous particles is 0.01 to 30 wt% with respect to the aforementioned composition.

[219] The production method of [217] or [218], wherein the amount of the sodium chloride contained in the aforementioned aqueous particles is 0.1 to 25 wt% with respect to the aforementioned composition.

[220] The production method of any one of [217] to [219], wherein the amount of the sodium chloride contained in the aforementioned aqueous particles is 1 to 20 wt% with respect to the aforementioned composition.

[221] The production method of any one of [217] to [220], wherein the amount of the sodium chloride contained in the aforementioned aqueous particles is 3 to 15 wt% with respect to the aforementioned composition.

[222] The production method of any one of [217] to [221], wherein the amount of the sodium chloride contained in the aforementioned aqueous particles is 5 to 12 wt% with respect to the aforementioned composition.

[223] The production method of any one of [217] to [222], wherein the amount of the sodium chloride contained in the aforementioned aqueous particles is 7 to 12 wt% with respect to the aforementioned composition.

[224] The production method of any one of [217] to [223], wherein the aforementioned food is a low-salt food.

[225] The production method of any one of [180] to [224], wherein the flavoring material contained in the aforementioned aqueous particles comprises $\beta$-caryophyllene oxide.

[226] The production method of [225], wherein the amount of the $\beta$-caryophyllene oxide contained in the aforementioned aqueous particles is 0.00003 to 5 wt% with respect to the aforementioned composition.

[227] The production method of [225] or [226], wherein the amount of the $\beta$-caryophyllene oxide contained in the aforementioned aqueous particles is 0.00005 to 1 wt% with respect to the aforementioned composition.

[228] The production method of any one of [225] to [227], wherein the amount of the $\beta$-caryophyllene oxide contained in the aforementioned aqueous particles is 0.0001 to 0.5 wt% with respect to the aforementioned composition.

[229] The production method of any one of [225] to [228], wherein the amount of the $\beta$-caryophyllene oxide contained in the aforementioned aqueous particles is 0.0003 to 0.1 wt% with respect to the aforementioned composition.

[230] The production method of any one of [225] to [229], wherein the amount of the $\beta$-caryophyllene oxide contained in the aforementioned aqueous particles is 0.0005 to 0.05 wt% with respect to the aforementioned composition.

[231] The production method of any one of [180] to [230], wherein the aforementioned food is a frozen food.

[232] The production method of any one of [180] to [231], wherein the content of the fat or oil in the aforementioned composition is 5 to 95 wt% with respect to the aforementioned composition.

[233] The production method of any one of [180] to [232], wherein the content of the fat or oil in the aforementioned composition is 15 to 80 wt% with respect to the aforementioned composition.

[234] The production method of any one of [180] to [233], wherein the content of the fat or oil in the aforementioned composition is 20 to 60 wt% with respect to the aforementioned composition.

[235] The production method of any one of [180] to [234], wherein the content of the fat or oil in the aforementioned composition is 25 to 50 wt% with respect to the aforementioned composition.

[236] The production method of any one of [180] to [235], wherein the content of the fat or oil in the aforementioned composition is 30 to 40 wt% with respect to the aforementioned composition.

[237] The production method of any one of [180] to [236], wherein the total amount of the constituent components of the aforementioned aqueous particles is 4 to 94 wt% with respect to the aforementioned composition.

[238] The production method of any one of [180] to [237], wherein the total amount of the constituent components of the aforementioned aqueous particles is 15 to 90 wt% with respect to the aforementioned composition.

[239] The production method of any one of [180] to [238], wherein the total amount of the constituent components of the aforementioned aqueous particles is 30 to 80 wt% with respect to the aforementioned composition.

[240] The production method of any one of [180] to [239], wherein the total amount of the constituent components of the aforementioned aqueous particles is 40 to 75 wt% with respect to the aforementioned composition.

[241] The production method of any one of [180] to [240], wherein the total amount of the constituent components of the aforementioned aqueous particles is 50 to 70 wt% with respect to the aforementioned composition.

[242] The production method of any one of [180] to [241], wherein the total amount of the constituent components of the aforementioned aqueous particles is 55 to 65 wt% with respect to the aforementioned composition.

[243] The production method of any one of [180] to [242], wherein the aforementioned fat or oil comprises a flavoring material containing.

[244] The production method of [243], wherein the amount of the flavoring material contained in the aforementioned fat or oil is 0.0001 to 30 wt% with respect to the aforementioned composition.

[245] The production method of [243] or [244], wherein the amount of the flavoring material contained in the aforementioned fat or oil is 0.001 to 25 wt% with respect to the aforementioned composition.

[246] The production method of any one of [243] to [245], wherein the amount of the flavoring material contained in the aforementioned fat or oil is 0.01 to 20 wt% with respect to the aforementioned composition.

[247] The production method of any one of [243] to [246], wherein the flavoring material contained in the aforementioned fat or oil comprises β-caryophyllene oxide.

[248] The production method of [247], wherein the amount of the β-caryophyllene oxide contained in the aforementioned aqueous particles is 0.0003 to 0.5 wt% with respect to the aforementioned composition.

[249] The production method of [247] or [248], wherein the amount of the β-caryophyllene oxide contained in the aforementioned aqueous particles is 0.0005 to 0.3 wt% with respect to the aforementioned composition.

[250] The production method of any one of [247] to [249], wherein the amount of the β-caryophyllene oxide contained in the aforementioned aqueous particles is 0.001 to 0.1 wt% with respect to the aforementioned composition.

[251] The production method of any one of [247] to [250], wherein the amount of the β-caryophyllene oxide contained in the aforementioned aqueous particles is 0.003 to 0.05 wt% with respect to the aforementioned composition.

[252] The production method of any one of [247] to [251], wherein the amount of the β-caryophyllene oxide contained in the aforementioned aqueous particles is 0.005 to 0.03 wt% with respect to the aforementioned composition.

[253] The production method of any one of [180] to [252], wherein the aforementioned aqueous particle has a median diameter of 5 to 80 μm.

[254] The production method of any one of [180] to [253], wherein the aforementioned aqueous particle has a median diameter of 10 to 75 μm.

[255] The production method of any one of [180] to [254], wherein the aforementioned aqueous particle has a median diameter of 20 to 65 μm.

[256] The production method of any one of [180] to [255], wherein the aforementioned aqueous particle has a median diameter of 30 to 55 μm.

[257] The production method of any one of [180] to [256], wherein the aforementioned aqueous particle has a mean volume diameter of 45 to 135 μm.

[258] The production method of any one of [180] to [257], wherein the aforementioned aqueous particle has a mean volume diameter of 50 to 130 μm.

[259] The production method of any one of [180] to [258], wherein the aforementioned aqueous particle has a mean volume diameter of 60 to 120 μm.

[260] The production method of any one of [180] to [259], wherein the aforementioned aqueous particle has a mean volume diameter of 70 to 110 μm.

[261] The production method of any one of [180] to [260], wherein the proportion of water in the constituent components of the aforementioned aqueous particles is 5 to 95 wt%.

[262] The production method of any one of [180] to [261], wherein the proportion of water in the constituent components of the aforementioned aqueous particles is 10 to 95 wt%.

[263] The production method of any one of [180] to [262], wherein the proportion of water in the constituent components of the aforementioned aqueous particles is 30 to 95 wt%.

[264] The production method of any one of [180] to [263], wherein the proportion of water in the constituent components of the aforementioned aqueous particles is 50 to 95 wt%.

[265] The production method of any one of [180] to [264], wherein the proportion of water in the constituent components of the aforementioned aqueous particles is 60 to 95 wt%.

[266] The production method of any one of [180] to [265], wherein the proportion of water in the constituent components of the aforementioned aqueous particles is 70 to 95 wt%.

[267] The production method of any one of [180] to [266], wherein the aforementioned food is a food with improved quality.

[268] A method for improving food quality, comprising adding a composition comprising

(A) a fat or oil, and
(B) aqueous particles comprising a gelling agent and a flavoring material, and dispersed in the aforementioned fat or oil

to a food.

[269] The method of [268], wherein the aforementioned fat or oil comprises an emulsifier.

[270] The method of [269], wherein the amount of the emulsifier contained in the aforementioned fat or oil is 0.01 to 10 wt% with respect to the aforementioned composition.

[271] The method of [269] or [270], wherein the amount of the emulsifier contained in the aforementioned fat or oil is 0.05 to 7 wt% with respect to the aforementioned composition.

[272] The method of any one of [269] to [271], wherein the amount of the emulsifier contained in the aforementioned fat or oil is 0.05 to 5 wt% with respect to the aforementioned composition.

[273] The method of any one of [269] to [272], wherein the amount of the emulsifier contained in the aforementioned fat or oil is 0.1 to 3 wt% with respect to the aforementioned composition.

[274] The method of any one of [268] to [273], wherein the amount of the gelling agent contained in the aforementioned aqueous particles is 0.01 to 20 wt% with respect to the aforementioned composition.

[275] The method of any one of [268] to [274], wherein the amount of the gelling agent contained in the aforementioned aqueous particles is 0.05 to 10 wt% with respect to the aforementioned composition.

[276] The method of any one of [268] to [275], wherein the amount of the gelling agent contained in the aforementioned aqueous particles is 0.1 to 7 wt% with respect to the aforementioned composition.

[277] The method of any one of [268] to [276], wherein the amount of the gelling agent contained in the aforementioned aqueous particles is 0.5 to 5 wt% with respect to the aforementioned composition.

[278] The method of any one of [268] to [277], wherein the amount of the gelling agent contained in the aforementioned aqueous particles is 0.8 to 3 wt% with respect to the aforementioned composition.

[279] The method of any one of [268] to [278], wherein the amount of the gelling agent contained in the aforementioned aqueous particles is 0.8 to 2 wt% with respect to the aforementioned composition.

[280] The method of any one of [268] to [279], wherein the amount of the gelling agent contained in the aforementioned aqueous particles is 0.1 to 50 parts by weight with respect to 100 parts by weight of water, which is a constituent component of the aforementioned aqueous particles.

[281] The method of any one of [268] to [280], wherein the amount of the gelling agent contained in the aforementioned aqueous particles is 0.3 to 25 parts by weight with respect to 100 parts by weight of water, which is a constituent component of the aforementioned aqueous particles.

[282] The method of any one of [268] to [281], wherein the amount of the gelling agent contained in the aforementioned aqueous particles is 0.5 to 10 parts by weight with respect to 100 parts by weight of water, which is a constituent component of the aforementioned aqueous particles.

[283] The method of any one of [268] to [282], wherein the amount of the gelling agent contained in the aforementioned aqueous particles is 0.65 to 5 parts by weight with respect to 100 parts by weight of water, which is a constituent component of the aforementioned aqueous particles.

[284] The method of any one of [268] to [283], wherein the amount of the gelling agent contained in the aforementioned aqueous particles is 1 to 4 parts by weight with respect to 100 parts by weight of water, which is a constituent component of the aforementioned aqueous particles.

[285] The method of any one of [268] to [284], wherein the amount of the gelling agent contained in the aforementioned aqueous particles is 1.5 to 3 parts by weight with respect to 100 parts by weight of water, which is a constituent component of the aforementioned aqueous particles.

[286] The method of any one of [268] to [285], wherein the aforementioned gelling agent comprises at least one selected from the group consisting of (i) agar, (ii) gelatin, (iii) xanthan gum and galactomannan in combination, and (iv) an alginic acid compound.

[287] The method of any one of [268] to [285], wherein the aforementioned gelling agent comprises agar.

[288] The method of [286] or [287], wherein the amount of the agar contained in the aforementioned aqueous particles is 0.01 to 10 wt% with respect to the aforementioned composition.

[289] The method of any one of [286] to [288], wherein the amount of the agar contained in the aforementioned aqueous particles is 0.05 to 7 wt% with respect to the aforementioned composition.

[290] The method of any one of [286] to [289], wherein the amount of the agar contained in the aforementioned aqueous particles is 0.1 to 5 wt% with respect to the aforementioned composition.

[291] The method of any one of [286] to [290], wherein the amount of the agar contained in the aforementioned aqueous particles is 0.3 to 3 wt% with respect to the aforementioned composition.

[292] The method of any one of [286] to [291], wherein the amount of the agar contained in the aforementioned aqueous particles is 0.5 to 2 wt% with respect to the aforementioned composition.

[293] The method of any one of [286] to [292], wherein the amount of the agar contained in the aforementioned aqueous particles is 0.8 to 1.5 wt% with respect to the aforementioned composition.

[294] The method of any one of [286] to [293], wherein the amount of the agar contained in the aforementioned aqueous particles is 0.1 to 50 parts by weight with respect to 100 parts by weight of water, which is a constituent component of the aforementioned aqueous particles.

[295] The method of any one of [286] to [294], wherein the amount of the agar contained in the aforementioned aqueous particles is 0.3 to 10 parts by weight with respect to 100 parts by weight of water, which is a constituent component of the aforementioned aqueous particles.

[296] The method of any one of [286] to [295], wherein the amount of the agar contained in the aforementioned aqueous particles is 0.5 to 5 parts by weight with respect to 100 parts by weight of water, which is a constituent component of the aforementioned aqueous particles.

[297] The method of any one of [286] to [296], wherein the amount of the agar contained in the aforementioned aqueous particles is 1 to 4 parts by weight with respect to 100 parts by weight of water, which is a constituent component of the aforementioned aqueous particles.

[298] The method of any one of [286] to [297], wherein the amount of the agar contained in the aforementioned aqueous particles is 1.5 to 3 parts by weight with respect to 100 parts by weight of water, which is a constituent component of the aforementioned aqueous particles.

[299] The method of any one of [268] to [298], wherein the amount of the flavoring material contained in the aforementioned aqueous particles is 0.00003 to 30 wt% with respect to the aforementioned composition.

[300] The method of any one of [268] to [299], wherein the amount of the flavoring material contained in the aforementioned aqueous particles is 0.01 to 30 wt% with respect to the aforementioned composition.

[301] The method of any one of [268] to [300], wherein the amount of the flavoring material contained in the aforementioned aqueous particles is 0.05 to 28 wt% with respect to the aforementioned composition.

[302] The method of any one of [268] to [301], wherein the amount of the flavoring material contained in the aforementioned aqueous particles is 0.1 to 25 wt% with respect to the aforementioned composition.

[303] The method of any one of [268] to [302], wherein the amount of the flavoring material contained in the aforementioned aqueous particles is 0.5 to 23 wt% with respect to the aforementioned composition.

[304] The method of any one of [268] to [303], wherein the amount of the flavoring material contained in the aforementioned aqueous particles is 1 to 20 wt% with respect to the aforementioned composition.

[305] The method of any one of [268] to [304], wherein the flavoring material contained in the aforementioned aqueous particles comprises sodium chloride.

[306] The method of [305], wherein the amount of the sodium chloride contained in the aforementioned aqueous particles is 0.01 to 30 wt% with respect to the aforementioned composition.

[307] The method of [305] or [306], wherein the amount of the sodium chloride contained in the aforementioned aqueous particles is 0.1 to 25 wt% with respect to the aforementioned composition.

[308] The method of any one of [305] to [307], wherein the amount of the sodium chloride contained in the aforementioned aqueous particles is 1 to 20 wt% with respect to the aforementioned composition.

[309] The method of any one of [305] to [308], wherein the amount of the sodium chloride contained in the aforementioned aqueous particles is 3 to 15 wt% with respect to the aforementioned composition.

[310] The method of any one of [305] to [309], wherein the amount of the sodium chloride contained in the aforementioned aqueous particles is 5 to 12 wt% with respect to the aforementioned composition.

[311] The method of any one of [305] to [310], wherein the amount of the sodium chloride contained in the aforementioned aqueous particles is 7 to 12 wt% with respect to the aforementioned composition.

[312] The method of any one of [305] to [311], wherein the aforementioned food is a low-salt food.

[313] The method of any one of [268] to [312], wherein the flavoring material contained in the aforementioned aqueous particles comprises β-caryophyllene oxide.

[314] The method of [313], wherein the amount of the β-caryophyllene oxide contained in the aforementioned aqueous particles is 0.00003 to 5 wt% with respect to the aforementioned composition.

[315] The method of [313] or [314], wherein the amount of the β-caryophyllene oxide contained in the aforementioned aqueous particles is 0.00005 to 1 wt% with respect to the aforementioned composition.

[316] The method of any one of [313] to [315], wherein the amount of the β-caryophyllene oxide contained in the aforementioned aqueous particles is 0.0001 to 0.5 wt% with respect to the aforementioned composition.

[317] The method of any one of [313] to [316], wherein the amount of the β-caryophyllene oxide contained in the aforementioned aqueous particles is 0.0003 to 0.1 wt% with respect to the aforementioned composition.

[318] The method of any one of [313] to [317], wherein the amount of the β-caryophyllene oxide contained in the aforementioned aqueous particles is 0.0005 to 0.05 wt% with respect to the aforementioned composition.

[319] The method of any one of [268] to [318], wherein the aforementioned food is a frozen food.

[320] The method of any one of [268] to [319], wherein the content of the fat or oil in the aforementioned composition is 5 to 95 wt% with respect to the aforementioned composition.

[321] The method of any one of [268] to [320], wherein the content of the fat or oil in the aforementioned composition is 15 to 80 wt% with respect to the aforementioned composition.

[322] The method of any one of [268] to [321], wherein the content of the fat or oil in the aforementioned composition is 20 to 60 wt% with respect to the aforementioned composition.

[323] The method of any one of [268] to [322], wherein the content of the fat or oil in the aforementioned composition is 25 to 50 wt% with respect to the aforementioned composition.

[324] The method of any one of [268] to [323], wherein the content of the fat or oil in the aforementioned composition is 30 to 40 wt% with respect to the aforementioned composition.

[325] The method of any one of [268] to [324], wherein the total amount of the constituent components of the aforementioned aqueous particles is 4 to 94 wt% with respect to the aforementioned composition.

[326] The method of any one of [268] to [325], wherein the total amount of the constituent components of the aforementioned aqueous particles is 15 to 90 wt% with respect to the aforementioned composition.

[327] The method of any one of [268] to [326], wherein the total amount of the constituent components of the aforementioned aqueous particles is 30 to 80 wt% with respect to the aforementioned composition.

[328] The method of any one of [268] to [327], wherein the total amount of the constituent components of the aforementioned aqueous particles is 40 to 75 wt% with respect to the aforementioned composition.

[329] The method of any one of [268] to [328], wherein the total amount of the constituent components of the aforementioned aqueous particles is 50 to 70 wt% with respect to the aforementioned composition.

[330] The method of any one of [268] to [329], wherein the total amount of the constituent components of the aforementioned aqueous particles is 55 to 65 wt% with respect to the aforementioned composition.

[331] The method of any one of [268] to [330], wherein the aforementioned fat or oil comprises a flavoring material.

[332] The method of [331], wherein the amount of the flavoring material contained in the aforementioned fat or oil is 0.0001 to 30 wt% with respect to the aforementioned composition.

[333] The method of [331] or [332], wherein the amount of the flavoring material contained in the aforementioned fat or oil is 0.001 to 25 wt% with respect to the aforementioned composition.

[334] The method of any one of [331] to [333], wherein the amount of the flavoring material contained in the aforementioned fat or oil is 0.01 to 20 wt% with respect to the aforementioned composition.

[335] The method of any one of [331] to [334], wherein the flavoring material contained in the aforementioned fat or oil comprises $\beta$-caryophyllene oxide.

[336] The method of [335], wherein the amount of the $\beta$-caryophyllene oxide contained in the aforementioned aqueous particles is 0.0003 to 0.5 wt% with respect to the aforementioned composition.

[337] The method of [335] or [336], wherein the amount of the $\beta$-caryophyllene oxide contained in the aforementioned aqueous particles is 0.0005 to 0.3 wt% with respect to the aforementioned composition.

[338] The method of any one of [335] to [337], wherein the amount of the $\beta$-caryophyllene oxide contained in the aforementioned aqueous particles is 0.001 to 0.1 wt% with respect to the aforementioned composition.

[339] The method of any one of [335] to [338], wherein the amount of the $\beta$-caryophyllene oxide contained in the aforementioned aqueous particles is 0.003 to 0.05 wt% with respect to the aforementioned composition.

[340] The method of any one of [335] to [339], wherein the amount of the $\beta$-caryophyllene oxide contained in the aforementioned aqueous particles is 0.005 to 0.03 wt% with respect to the aforementioned composition.

[341] The method of any one of [268] to [340], wherein the aforementioned aqueous particle has a median diameter of 5 to 80 $\mu$m.

[342] The method of any one of [268] to [341], wherein the aforementioned aqueous particle has a median diameter of 10 to 75 $\mu$m.

[343] The method of any one of [268] to [342], wherein the aforementioned aqueous particle has a median diameter of 20 to 65 $\mu$m.

[344] The method of any one of [268] to [343], wherein the aforementioned aqueous particle has a median diameter of 30 to 55 $\mu$m.

[345] The method of any one of [268] to [344], wherein the aforementioned aqueous particle has a mean volume diameter of 45 to 135 $\mu$m.

[346] The method of any one of [268] to [345], wherein the aforementioned aqueous particle has a mean volume diameter of 50 to 130 $\mu$m.

[347] The method of any one of [268] to [346], wherein the aforementioned aqueous particle has a mean volume diameter of 60 to 120 $\mu$m.

[348] The method of any one of [268] to [347], wherein the aforementioned aqueous particle has a mean volume diameter of 70 to 110 $\mu$m.

[349] The method of any one of [268] to [348], wherein the proportion of water in the constituent components of the aforementioned aqueous particles is 5 to 95 wt%.

[350] The method of any one of [268] to [349], wherein the proportion of water in the constituent components of the aforementioned aqueous particles is 10 to 95 wt%.

[351] The method of any one of [268] to [350], wherein the proportion of water in the constituent components of the aforementioned aqueous particles is 30 to 95 wt%.

[352] The method of any one of [268] to [351], wherein the proportion of water in the constituent components of the aforementioned aqueous particles is 50 to 95 wt%.

[353] The method of any one of [268] to [352], wherein the proportion of water in the constituent components of the aforementioned aqueous particles is 60 to 95 wt%.

[354] The method of any one of [268] to [353], wherein the proportion of water in the constituent components of the aforementioned aqueous particles is 70 to 95 wt%.

[355] The method of any one of [268] to [354], wherein the quality improvement of food is imparting or enhancing the flavor of a food.

[356] The method of any one of [268] to [354], wherein the quality improvement of food is imparting or enhancing saltiness of a food.

[357] The method of any one of [268] to [354], wherein the quality improvement of food is imparting or enhancing a fat or oil sensation.

[358] The method of any one of [268] to [354], wherein the quality improvement of food is imparting or enhancing an animal fat or oil sensation.

[Advantageous Effects of Invention]

According to the present invention, a composition for a food that can be preferably used for improving the quality of foods is provided. In one embodiment, the composition for foods of the present invention can impart natural flavors (e.g., saltiness, etc.) to foods, and can also enhance flavors (e.g., saltiness etc.) of foods. In another embodiment, the composition for foods of the present invention can effectively impart a fat or oil sensation to foods and can effectively enhance a fat or oil sensation in foods. Furthermore, the composition for foods of the present invention can impart an animal fat or oil sensation to foods and can effectively enhance an animal fat or oil sensation in foods.

According to the present invention, moreover, foods with improved quality and production methods thereof are provided. In one embodiment, the food of the present invention can have natural flavors (e.g., saltiness etc.) and enhanced flavors (e.g., saltiness etc.). In one embodiment, according to the production method of the food of the present invention, foods having natural flavors (e.g., saltiness etc.) and foods having enhanced flavors (e.g., saltiness etc.) can be produced. In another embodiment, the food of the present invention can have a preferable fat or oil sensation, and an enhanced preferable fat or oil sensation. In another embodiment, according to the production method of the food of the present invention, foods having a preferable fat or oil sensation, and foods having an enhanced preferable fat or oil sensation can be produced. Furthermore, the food of the present invention can have an animal fat or oil sensation, and an enhanced animal fat or oil sensation. According to the production method of the food of the present invention, foods having a preferable animal fat or oil sensation food, and foods having an enhanced preferable animal fat or oil sensation can be produced.

Also, according to the present invention, methods for improving food quality are provided. In one embodiment, according to the method of the present invention, natural flavors (e.g., saltiness etc.) can be imparted to foods and the flavors of foods (e.g., saltiness etc.) can be enhanced. In another embodiment, according to the method of the present invention, a fat or oil sensation can be effectively imparted to foods and a fat or oil sensation in food can be effectively enhanced. Furthermore, according to the method of the present invention, an animal fat or oil sensation can be imparted to foods and an animal fat or oil sensation in foods can be enhanced.

[Description of Embodiments]

One of the characteristics of the composition of the present invention is that it contains (A) a fat or oil and (B) aqueous particles containing a gelling agent.

In the present invention, "fat or oil" refers to a substance whose main component is acylglycerol (triglyceride, diglyceride, monoglyceride, etc.). Generally, one that has flowability at ordinary temperature (20°C) is sometimes called "oil", and one that does not have flowability is sometimes called "fat", and "fat or oil" is a concept encompassing both of them. Fat or oil used in the present invention is not particularly limited as long as it is edible (edible fat or oil). For example, edible vegetable fats and oils, such as rapeseed oil (including canola oil), soybean oil, corn oil, sesame oil, rice oil, rice bran oil, rice germ oil, safflower oil, coconut oil, palm oil, palm kernel oil, sunflower oil, linseed oil, olive oil, grapeseed oil, and cottonseed oil; edible animal fats and oils, such as beef tallow, lard, chicken fat, mutton tallow, and whale oil can be mentioned. In addition, a transesterified oil obtained by transesterifying the aforementioned fat or oil, a hydrogenated oil obtained by hydrogenating the aforementioned fat or oil or the like can also be used. Fat or oil used in the present invention may be purified (e.g., salad oil, etc.). These fats or oils may be used alone or in combination of two or more kinds thereof.

The content of fat or oil in the composition of the present invention is preferably 5 wt% or more, more preferably 15 wt% or more, further preferably 20 wt% or more, further more preferably 25 wt% or more, particularly preferably 30 wt% or more, with respect to the composition of the present invention. In addition, the content of fat or oil in the composition of the present invention is preferably 95 wt% or less, more preferably 80 wt% or less, further preferably 60 wt% or less, further more preferably 50 wt% or less, particularly preferably 40 wt% or less, with respect to the composition of the present invention.

(A) Fat or oil contained in the composition of the present invention preferably contains an emulsifier. By containing an emulsifier in (A) fat or oil, (B) aqueous particles can be stably dispersed in (A) fat or oil, regardless of the amount of (A) fat or oil.

The emulsifier used in the present invention is not particularly limited as long as it is edible, and those that can be used for the preparation of water-in-oil emulsions are preferred. For example, sucrose fatty acid esters (e.g., sucrose oleate, etc.), glycerin fatty acid esters (e.g., glycerin saturated fatty acid monoesters, polyglycerin fatty acid esters (e.g., polyglycerin condensed ricinoleate, polyglycerin oleate, etc.), organic acid monoglycerides, etc.), propylene glycol fatty acid esters, sorbitan fatty acid esters and the like can be mentioned. As used herein, "water-in-oil emulsion" refers to a composition having a water-in-oil emulsion structure (i.e., an emulsion structure in which water droplets are dispersed in an oil phase) in which an oil phase is the external phase (continuous phase) and a water phase is the internal phase (dispersed phase).

When (A) fat or oil contains an emulsifier, the amount of the emulsifier contained in (A) fat or oil is preferably 0.01 wt% or more, more preferably 0.05 wt% or more, particularly preferably 0.1 wt% or more, with respect to the composition of the present invention, from the aspect of effective improvement of food quality. In this case, the amount of the emulsifier contained in (A) fat or oil is preferably 10 wt% or less, more preferably 7 wt% or less, further preferably 5 wt% or less, particularly preferably 3 wt% or less, with respect to the composition of the present invention, from the aspect of effective improvement of food quality.

The "aqueous particles" contained in the composition of the present invention refer to particles containing at least water as a constituent component. The proportion of water in the constituent components of the aqueous particles is generally 5 wt% or more, preferably 10 wt% or more, more preferably 30 wt% or more. The aqueous particles preferably contain water as a main component. In this case, the proportion of water with respect to the constituent components of the aqueous particles is generally 50 wt% or more, preferably 60 wt%, more preferably 70 wt% or more. The upper limit of the proportion of water in the constituent components of the aqueous particles is not particularly limited and is generally 95 wt% or less.

As described later, the aqueous particles contained in the composition of the present invention may contain flavoring materials and other components (food material, food additive, and the like) as constituent constituents thereof, and when these components contain water, the amount of said water is included in the amount of water, which is the constituent component of the aqueous particles. However, even when said water is contained in the flavoring materials or other ingredients, if it is held inside these components and cannot be transferred to outside or flow out, the amount of said water is not included in the amount of water, which is the constituent component of the aqueous particles, because it cannot be mixed with other water constituting the aqueous particles.

Examples of water contained in (B) aqueous particles include, but are not limited to, purified water such as distilled water, ion-exchanged water, etc., tap water, alkaline electrolyzed water and the like. Any water compatible for food production may be used without any restriction.

(B) Aqueous particles contained in the composition of the present invention preferably contain a gelling agent. Since the (B) aqueous particles contain a gelling agent, the composition of the present invention can effectively improve the quality of foods.

In the present invention, the "gelling agent" refers to a food additive used to gel foods or food raw materials. Examples of the gelling agent used in the present invention include agar, gelatin, alginic acid compound, carrageenan, pectin, curdlan, tamarind seed gum, gellan gum (native gellan gum), and the like. As used herein, the "alginic acid compound" is a general term for alginic acid, alginate salts (e.g., sodium alginate, etc.), and alginate esters (e.g., propylene glycol alginate, etc.). That is, alginic acid compound is at least one compound selected from the group consisting of alginic acid, alginate salts (e.g., sodium alginate, etc.), and alginate esters (e.g., propylene glycol alginate, etc.).

The gelling agent used in the present invention may be a combination of plural (two or more) substances. For example, it is known that xanthan gum and galactomannan (e.g., guar gum, tara gum, locust bean gum, etc.) do not form gels by themselves, but have the property of forming gels when combined (Science of Food Functionality, Part 1, Chapter 15, Section 2, 2.2(5), edited by the Editorial Committee of Science of Food Functionality, Industrial Technology Service Center Co., Ltd., p. 483, 2008). Therefore, "xanthan gum not in combination with galactomannan" is not included in the gelling agent of the present invention because it is not generally used to gel foods or food raw materials, but "xanthan gum and galactomannan in combination" is encompassed in the gelling agent. It is also known that galactomannan can form gels by combining with carrageenan, and "carrageenan and galactomannan in combination" and "galactomannan in combination with carrageenan" are encompassed in the gelling agent of the present invention.

In the present invention, when xanthan gum and galactomannan (e.g., guar gum, tara gum, locust bean gum, etc.) are used in combination as gelling agents, the weight ratio of xanthan gum and galactomannan (xanthan gum:galactomannan) is not particularly limited as long as gel is formed and is preferably 1:0.1 to 10, more preferably 1:0.2 to 5, particularly preferably 1:0.5 to 2.

The gelling agent used in the present invention is preferably the following (i) to (iv).

(i) agar
(ii) gelatin
(iii) xanthan gum and galactomannan in combination (more preferably xanthan gum and guar gum in combination, xanthan gum and locust bean gum in combination, particularly preferably xanthan gum and locust bean gum in combination)
(iv) alginic acid compound (more preferably, alginic acid, particularly preferably, sodium alginate)

The gelling agent used in the present invention is most preferably agar. When (B) aqueous particles contain agar, the composition of the present invention can particularly effectively improve the quality of foods.

The production method of a gelling agent used in the present invention is not particularly limited, and a gelling agent may be produced by a method known per se or a method analogous thereto. In one embodiment, agar can be produced by freezing or drying the mucilage (boiled extract) of red algae (e.g., Agar, Gracilaria, etc.), and the like. Alternatively, a commercially available gelling agent may also be used in the present invention.

In the present invention, the aforementioned gelling agents may be used alone or in combination of two or more kinds thereof.

The amount of the gelling agent contained in (B) aqueous particles is preferably 0.01 wt% or more, more preferably 0.05 wt% or more, further preferably 0.1 wt% or more, further more preferably 0.5 wt% or more, particularly preferably 0.8 wt% or more, with respect to the composition of the present invention, from the aspect of effective improvement of food quality. The amount of the gelling agent contained in (B) aqueous particles is preferably 20 wt% or less, more preferably 10 wt% or less, further preferably 7 wt% or less, further more preferably 5 wt% or less, particularly preferably 3 wt% or less, most preferably 2 wt% or less, with respect to the composition of the present invention, from the aspect of effective improvement of food quality.

The amount of gelling agent contained in (B) aqueous particles is preferably 0.1 parts by weight or more, more preferably 0.3 parts by weight or more, further preferably 0.5 parts by weight or more, further more preferably 0.65 parts by weight or more, particularly preferably 1 parts by weight or more, most preferably 1.5 parts by weight or more, with respect to 100 parts by weight of water, which is a constituent component of (B) aqueous particles, from the aspect of effective improvement of food quality. The amount of gelling agent contained in (B) aqueous particles is preferably 50 parts by weight or less, more preferably 25 parts by weight or less, further preferably 10 parts by weight or less, further more preferably 5 parts by weight or less, particularly preferably 4 parts by weight or less, most preferably 3 parts by weight or less, with respect to 100 parts by weight of water, which is a constituent component of (B) aqueous particles, from the aspect of effective improvement of food quality.

In one embodiment, when (B) aqueous particles contain agar, the amount of agar contained in (B) aqueous particles is preferably 0.01 wt% or more, more preferably 0.05 wt% or more, further preferably 0.1 wt% or more, further more preferably 0.3 wt% or more, particularly preferably 0.5 wt% or more, most preferably 0.8 wt% or more, with respect to the composition of the present invention, from the aspect of effective improvement of food quality. In this case, the amount of agar contained in (B) aqueous particles is preferably 10 wt% or less, more preferably 7 wt% or less, further preferably 5 wt% or less, further more preferably 3 wt% or less, particularly preferably 2 wt% or less, most preferably 1.5 wt% or less, with respect to the composition of the present invention, from the aspect of effective improvement of food quality.

In one embodiment, when (B) aqueous particles contain agar, the amount of agar contained in (B) aqueous particles is preferably 0.1 parts by weight or more, more preferably 0.3 parts by weight or more, further preferably 0.5 parts by weight or more, further more preferably 1 parts by weight or more, particularly preferably 1.5 parts by weight or more, with respect to 100 parts by weight of water, which is a constituent component of (B) aqueous particles, from the aspect of effective improvement of food quality. In this case, the amount of agar contained in (B) aqueous particles is preferably 50 parts by weight or less, more preferably 10 parts by weight or less, further preferably 5 parts by weight or less, further more preferably 4 parts by weight or less, particularly preferably 3 parts by weight or less, with respect to 100 parts by weight of water, which is a constituent component of (B) aqueous particles, from the aspect of effective improvement of food quality.

(B) Aqueous particles containing a gelling agent are preferably gelled (in a gel state).

(B) Aqueous particles preferably contain a flavoring material.

In foods with high and low concentrations of flavoring materials in the food, i.e., foods produced such that the concentration of flavoring materials in a specific part of the food (e.g., surface part, etc.) is higher than in other parts (e.g., center part of the food, etc.), the concentration of flavoring materials in the entire food sometimes becomes uniform over time due to the transfer of moisture in the food, and as a result, the flavor derived from the material (particularly, the flavor perceived immediately after the food is placed in the mouth and chewed) may be felt weaker than immediately after production of the food. In addition, when the concentration of the flavoring material is set high in advance in the food formulation design in consideration of such a decrease in flavor over time, problems in that a natural flavor cannot be imparted to the food and the like may occur.

On the other hand, aqueous particles (gel-like particles) containing a gelling agent are less susceptible to an influence by the transfer of moisture in food, and uniform concentration of the flavoring material contained in such aqueous particles can be prevented in the entire food. Therefore, by adding a flavoring material to a food by using the composition of the present invention, the deterioration of the flavor of the food over time can be effectively prevented.

In the present invention, the "flavoring material" refers to a food material used to impart or enhance a flavor. As used herein, the "flavor" is a concept that encompasses taste (e.g., saltiness, sweetness, sourness, bitterness, umami, pungent taste, etc.), aroma (retronasal aroma), and sensation (e.g., rich taste, etc.) that are achieved by a combination of taste, aroma, and texture. Specific examples of the flavoring material include sodium chloride, salt substitutes (e.g., potassium chloride, etc.), sweetener (e.g., saccharides such as sucrose and the like, high-intensity sweeteners such as aspartame, acesulfame K, etc.), acidulants (e.g., citric acid, tartaric acid, vinegar, etc.), bitter substances (e.g., caffeine, etc.), umami substances (e.g., sodium glutamate, sodium inosinate, etc.), pungent taste substances (e.g., capsaicin, etc.), flavorings (e.g., methional, isovaleric acid, 1-octen-3-ol, octanoic acid, decanoic acid, β-caryophyllene oxide, etc.), rich taste substances (e.g., glutathione, glutamylvalylglycine, etc.), extracts (e.g., beef extract, pork extract, chicken extract, yeast extract, etc.), amino acids (e.g., glycine, alanine, arginine, etc.), protein hydrolysates, reaction flavors, seasonings (e.g., savory seasonings, flavor seasonings, soy sauce, etc.), sauces (e.g., Worcestershire sauce, etc.), stocks, aromatic vegetables, and the like.

The flavoring material used in the present invention may consist of a single substance, or may be a combination of multiple (two or more) substances.

The production method of a flavoring material used in the present invention is not particularly limited, and a flavoring material may be produced by a method known per se or a method analogous thereto. Alternatively, a commercially available flavoring material may also be used in the present invention.

In the present invention, the flavoring material may be used alone or in combination of two or more kinds thereof.

In one embodiment, when (B) aqueous particles contain a flavoring material, a taste material can be preferably used. In the present invention, the "taste material" is a food material used to impart or potentiate a taste. Specifically, among the aforementioned specific examples of the flavoring material, sodium chloride, salt substitutes, sweeteners, acidulants, bitter substances, umami substances, and pungent taste substances can be considered as taste materials. Of these, sodium chloride is particularly preferred.

In foods that use taste materials such as sodium chloride and the like, the aforementioned flavor deteriorates over time due to the uniform concentration of the taste materials in the entire food, which is generally referred to as "taste blur". Foods that are designed to have a high concentration of taste materials (e.g., sodium chloride, etc.) in advance in consideration of this taste blur can have problems of not having a natural taste (e.g., saltiness, etc.) and the like (for example, the intensity of taste, quality of taste, and time when taste can be felt are different compared to normally blended foods). Moreover, the food may have a problem of excessive intake of a taste material (e.g., sodium chloride, etc.). By adding a taste material (e.g., sodium chloride, etc.) to a food by using the composition of the present invention, the deterioration of the taste (e.g., sodium chloride, etc.) of the food over time can be effectively prevented and thus the amount of use of the taste material (e.g., sodium chloride, etc.) can be reduced.

When (B) aqueous particles contain a flavoring material, the amount of the flavoring material contained in (B) aqueous particles can be appropriately adjusted according to the type and the like of flavoring material and is not particularly limited. Generally, it is 0.00003 to 30 wt%, preferably 0.01 to 30 wt%, more preferably 0.05 to 28 wt%, further preferably 0.1 to 25 wt%, further more preferably 0.5 to 23 wt%, particularly preferably 1 to 20 wt%, with respect to the composition of the present invention.

In one embodiment, when (B) aqueous particles contain sodium chloride, the amount of sodium chloride contained in (B) aqueous particles is preferably 0.01 wt% or more, more preferably 0.1 wt% or more, further preferably 1 wt% or more, further more preferably 3 wt% or more, particularly preferably 5 wt% or more, most preferably 7 wt% or more, with respect to the composition of the present invention, from the aspect of imparting sufficient saltiness to foods. In this case, the amount of sodium chloride contained in (B) aqueous particles is preferably 30 wt% or less, more preferably 25 wt% or less, further preferably 20 wt% or less, further more preferably 15 wt% or less, particularly preferably 12 wt% or less, with respect to the composition of the present invention, from the aspect of imparting natural saltiness (quality, intensity, and time when taste can be felt are similar to those of sodium chloride) to foods and preventing excessive sodium chloride intake.

In one embodiment, when (B) aqueous particles contain β-caryophyllene oxide, the amount of β-caryophyllene oxide contained in (B) aqueous particles is preferably 0.00003 wt% or more, more preferably 0.00005 wt% or more, further preferably 0.0001 wt% or more, further more preferably 0.0003 wt% or more, particularly preferably 0.0005 wt% or more, with respect to the composition of the present invention, from the aspect of sufficiently imparting a fat or oil sensation (particularly, an animal fat or oil sensation) to foods. , In this case, the amount of β-caryophyllene oxide contained in (B) aqueous particles is preferably 5 wt% or less, more preferably 1 wt% or less, further preferably 0.5 wt% or less, further more preferably 0.1 wt% or less, particularly preferably 0.05 wt% or less, with respect to the composition of the present invention, from the aspect of efficiently imparting a fat or oil sensation (particularly, an animal fat or oil sensation) to foods.

(B) Aqueous particles are preferably dispersed in the (A) fat or oil contained in the composition of the present invention. In the present invention, that the aqueous particles "are dispersed" in fat or oil refers to a state in which the aqueous particles are suspended or floating in fat or oil (dispersion medium) without coagulation. (B) Aqueous particles are preferably uniformly dispersed throughout (A) fat or oil, but (B) aqueous particles may be unevenly dispersed in a portion of (A) fat or oil.

The total amount of the constituent components of the aqueous particles (e.g., water, gelling agent, flavoring material, and the like) is preferably 4 wt% or more, more preferably 15 wt% or more, further preferably 30 wt% or more, further more preferably 40 wt% or more, particularly preferably 50 wt% or more, most preferably 55 wt% or more, with respect to the composition of the present invention, from the aspect of effective improvement of food quality. In addition, the total amount of the constituent components of the aqueous particles is preferably 94 wt% or less, more preferably 90 wt% or less, further preferably 80 wt% or less, further more preferably 75 wt% or less, particularly preferably 70 wt% or less, most preferably 65 wt% or less, with respect to the composition of the present invention, from the aspect of effective improvement of food quality.

In one embodiment, the median diameter of aqueous particles is preferably 5 μm or more, more preferably 10 μm or more, further preferably 20 μm or more, particularly preferably 30 μm or more, from the aspect of effective improvement of food quality. In one embodiment, the median diameter of aqueous particles is preferably 80 μm or less, more preferably 75 μm or less, further preferably 65 μm or less, particularly preferably 55 μm or less, from the aspect of effective improvement of food quality. In the present invention, the "median diameter" of aqueous particles refers to the 50% particle diameter (D50) in a volume-based cumulative particle size distribution curve measured by a laser diffraction/scattering method. More specifically, it refers to the particle diameter at which the cumulative volume from the fine particle side is 50% when the total volume of the aqueous particle population is 100% in a volume-based cumulative particle size distribution curve measured using a laser diffraction/scattering type particle size distribution measuring device (e.g., "Microtrac ASVR HRA model: 9320-X100" manufactured by NIKKISO CO., LTD.).

In one embodiment, the mean volume diameter of aqueous particles is preferably 45 μm or more, more preferably 50 μm or more, further preferably 60 μm or more, particularly preferably 70 μm or more, from the aspect of effective improvement of food quality. In one embodiment, the mean volume diameter of aqueous particles is preferably 135 μm or less, more preferably 130 μm or less, further preferably 120 μm or less, particularly preferably 110 μm or less, from the aspect of effective improvement of food quality. In the present invention, the "mean volume diameter" of aqueous particles is calculated from the volume-based particle size distribution measured by the laser diffraction/scattering method using the following formula:

$$\text{Mean volume diameter (MV)} = \Sigma(v_i \cdot d_i)/\Sigma(v_i)$$

wherein $v_i$ is the volume per particle, and $d_i$ is the particle diameter per particle.

The composition of the present invention may contain other components (food material, food additive, and the like) in addition to the aforementioned components, as long as the purpose of the present invention is not impaired.

In one embodiment, (A) fat or oil contained in the composition of the present invention may contain a flavoring material. When (A) fat or oil contains a predetermined flavoring material, the composition of the present invention can impart an animal fat or oil sensation to foods even without containing the animal fat or oil. Such composition of the present invention can be used as a substitute for animal fat or oil (e.g., beef tallow, lard, chicken oil, etc.). As used herein, the "animal fat or oil sensation" refers to the sensory property (taste, aroma, texture, etc.) unique to foods containing an animal fat or oil as one of the raw materials. The animal fat or oil sensation encompasses, for example, a lard sensation and the like. The "lard sensation" refers to the sensory property (lard-like taste, aroma, texture, etc.) unique to foods using lard as one of the raw materials.

When (A) fat or oil contains a flavoring material, the amount of the flavoring material contained in (A) fat or oil can be appropriately adjusted according to the type and the like of flavoring material and is not particularly limited. Generally, it is 0.0001 to 30 wt%, preferably 0.001 to 25 wt%, more preferably 0.01 to 20 wt%, with respect to the composition of the present invention.

In one embodiment, when (A) fat or oil contains β-caryophyllene oxide, the amount of β-caryophyllene oxide contained in (A) fat or oil is preferably 0.0003 wt% or more, more preferably 0.0005 wt% or more, further preferably 0.001 wt% or more, further more preferably 0.003 wt% or more, particularly preferably 0.005 wt% or more, with respect to the composition of the present invention, from the aspect of effectively imparting an animal fat or oil sensation (e.g., lard sensation, etc.). In this case, the amount of β-caryophyllene oxide contained in (A) fat or oil is preferably 0.5 wt% or less, more preferably 0.3 wt% or less, further preferably 0.1 wt% or less, further more preferably 0.05 wt% or less, particularly preferably 0.03 wt% or less, with respect to the composition of the present invention, from the aspect of effectively imparting an animal fat or oil sensation (e.g., lard sensation, etc.).

The production method of the composition of the present invention is not particularly limited, and the composition of the present invention can be produced using a water-in-oil emulsion. In one specific embodiment, the composition of the present invention, in which (A) fat or oil contains an emulsifier, (B) aqueous particles contain a gelling agent and a flavoring material, and is dispersed in the (A) fat or oil can be produced, for example, by the following steps (1) to (4).

(1A) An emulsifier is added to the fat or oil, and the mixture is mixed and heated (e.g., 50 to 95°C) as necessary to dissolve them (the obtained liquid is hereinafter to be referred to as "SOLUTION A").
(2) A gelling agent and a flavoring material are added to the water, mixed, and heated (e.g., 50 to 95°C) as necessary (the obtained liquid is hereinafter to be referred to as "SOLUTION B").
(3) While stirring SOLUTION A, SOLUTION B is gradually added to prepare a water-in-oil emulsion in which SOLUTION A is the continuous phase and SOLUTION B is the dispersed phase. The preparation of the water-in-oil emulsion can be performed under heating (e.g., 50 to 95°C) as necessary.
(4) The obtained water-in-oil emulsion is cooled (e.g., 0 to 20°C) as necessary to obtain the composition of the present invention.

In one embodiment, when the composition of the present invention contains (A) a fat or oil, and (B) aqueous particles containing a gelling agent and a flavoring material dispersed in the fat or oil, the composition of the present invention can be produced, for example, by the following steps (1a) to (3a).

(1a) A gelling agent and a flavoring material are added to the water, mixed, and heated (e.g., 50 to 95°C) as necessary (the obtained liquid is hereinafter to be referred to as "SOLUTION B").
(2a) While stirring fat or oil (hereinafter to be referred to as "SOLUTION A") heated (e.g., 50 to 95°C) as necessary, SOLUTION B is gradually added to prepare a water-in-oil emulsion in which SOLUTION A is the continuous phase and SOLUTION B is the dispersed phase. The preparation of the water-in-oil emulsion can be performed under heating (e.g., 50 to 95°C) as necessary.
(3a) The obtained water-in-oil emulsion is cooled (e.g., 0 to 20°C) as necessary to obtain the composition of the present invention.

The composition of the present invention is preferably used for foods. In the present invention, the composition "for food" refers to a composition used for foods or raw materials thereof (food raw materials).

The types of foods in which the composition of the present invention can be used are not particularly limited. Examples thereof include livestock foods (including livestock processed foods) such as hamburger steak, meatball, gyoza dumpling, shumai, sausage, salad chicken, and the like; agricultural foods (including processed agricultural foods) such as rice dishes (including processed rice products such as fried rice, pilaf, seasoned rice, vinegared rice, and the like), bread, noodles (e.g., Chinese noodles (boiled Chinese noodles, steamed Chinese noodles, etc.), udon, soba, pasta, somen, etc. (including chilled noodles, fried noodles, and non-fried noodles)), salad (e.g., potato salad, macaroni salad, long-life salad, etc.), pickles and the like; fishery foods (including processed fishery foods) such as kamaboko, chikuwa, hanpen, fish sausage, and the like; soups (including dried soups) such as corn soup, consomme soup (e.g., chicken, pork, beef, etc.), potage, soup with egg, soup with wakame seaweed, soup with shark fin, Chinese-style soup, curry-flavored soup, ramen soup, clear soup, miso soup, and the like; confectioneries such as cookie, cake, and the like; and refrigerated foods, frozen foods, and the like of these food groups. The production method of the foods in which the composition of the present invention can be used is not particularly limited, and the foods can be produced by a method known per se or a method analogous thereto.

In one embodiment, the food in which the composition of the present invention can be used may be a heat-treatment food. That is, in one embodiment, the composition of the present invention can be used for a heat-treatment food or a raw material thereof. As used herein, the "heat-treatment food" refers to a food that can be heat-treated at least once between production thereof and eating thereof. The heat treatment applied to the heat-treatment food can be performed by any method as long as it does not impair the purpose of the present invention, and the heat treatment can be performed by any method such as baking, frying (oil-frying, deep-frying), boiling, steaming, microwave irradiation (microwave heating), far-infrared irradiation (oven heating), and the like.

When the composition of the present invention is used for heat-treatment foods or raw materials thereof (that is, when the composition of the present invention is a composition for heat-treatment foods), the heat treatment applied to the heat-treatment food is preferably performed after the composition of the present invention is added to the heat-treatment food. In one embodiment, by heat treating a heat-treatment food to which the composition of the present invention in which aqueous particles contains a gelling agent and a flavoring material has been added, the aqueous particles (gel-like particles) contained in the composition of the present invention melt by the heat treatment, and the flavor derived from the flavoring material can be felt more prominently. In this case, the heat treatment applied to the heat-treatment food is particularly preferably performed immediately before eating the heat-treatment food.

In one embodiment, the food in which the composition of the present invention can be used may be a frozen food. That is, in one embodiment, the composition of the present invention can be used for a frozen food or a raw material thereof.

Frozen foods can be included in heat-treatment foods because they can be subjected to a heat treatment (e.g., microwave heating, etc.) for thawing before eating.

In one embodiment, the food in which the composition of the present invention can be used may be a low-salt food. That is, in one embodiment, the composition of the present invention can be used for a low-salt food or a raw material thereof. In one embodiment, when (B) aqueous particles contained in the composition of the present invention contain sodium chloride, the composition of the present invention is, as mentioned above, particularly useful for imparting saltiness to low-salt foods because it can impart natural saltiness while reducing the amount of sodium chloride used. As used herein, the "low-salt food" refers to a food whose sodium chloride concentration at the time of eating is lower than the general sodium chloride concentration of said food.

The method of adding the composition of the present invention to a food or raw materials thereof is not particularly limited, and the composition can be added by a method known per se or a method analogous thereto, according to the type of food, and the like. In one embodiment, the composition of the present invention can be added such that it adheres to the surface of a food or raw materials thereof. In another embodiment, the composition of the present invention can be added by kneading into the food or raw materials thereof.

The composition of the present invention can improve the quality of foods. In one embodiment, the composition of the present invention can impart foods with a flavor (e.g., saltiness, soy sauce flavor, sauce flavor, etc.)., In one embodiment, the composition of the present invention can enhance the flavors of foods (e.g., saltiness, soy sauce flavor, sauce flavor, etc.).

In the present invention, the quality of foods can be evaluated by a method known per se or a method analogous thereto. For example, flavors of foods (e.g., saltiness, soy sauce flavor, sauce flavor, etc.) can be evaluated by sensory evaluation by a trained expert panel, and the like.

In one embodiment, the composition of the present invention can effectively impart a fat or oil sensation to foods. In one embodiment, the composition of the present invention can effectively enhance a fat or oil sensation in foods. In the present invention, the "fat or oil sensation" refers to a pleasant sensation (e.g., taste, aroma, texture, etc.) felt when a food containing fat or oil is placed in the mouth, and includes, for example, a mouth-coating feel, a rich feel, and the like. The "mouse-coating feel" refers to the sensation of the mouth being coated with a thin layer of fat or oil, which is felt prominently when a food containing fat or oil is placed in the mouth. The presence or absence and the degree of a fat or oil sensation (e.g., mouse-coating feel, etc.) can be evaluated by sensory evaluation and the like by a trained expert panel.

The composition of the present invention can impart an animal fat or oil sensation (e.g., lard sensation, etc.) to foods. In addition, the composition of the present invention can enhance an animal fat or oil sensation of foods. The presence or absence and the degree of an animal fat or oil sensation (e.g., lard sensation, etc.) can be evaluated by sensory evaluation and the like by a trained expert panel.

The present invention also provides a food containing the composition of the present invention (at times referred to as "the food of the present invention" in the present specification).

The type of the food of the present invention is not particularly limited. Specific examples include those similar to the aforementioned foods for which the composition of the present invention can be used.

The production method of the food of the present invention is not particularly limited as long as it includes adding the composition of the present invention, and general production steps of foods may be included as appropriate according to the kind and the like of the food.

In the production method of the food of the present invention, the method of adding the composition of the present invention is not particularly limited, and it can be added by a method known per se or a method analogous thereto, according to the kind and the like of the food. In one embodiment, the composition of the present invention can be added such that it adheres to the surface of a food or raw materials thereof.

In one embodiment, when the food of the present invention is a heat-treatment food, the production method of the food of the present invention can include subjecting the food to a heat treatment (e.g., baking, frying, boiling, steaming, microwave irradiation, far-infrared irradiation, etc.). In this case, the heat treatment is preferably performed after adding the composition of the present invention to the food, particularly preferably performed immediately before eating the food.

The food of the present invention may be improved in quality. In one embodiment, the food of the present invention may be a food with a natural flavor (e.g., saltiness, soy sauce flavor, sauce flavor, etc.) or a food with an enhanced flavor (e.g., saltiness, etc.).

In one embodiment, the food of the present invention may be a food with a fat or oil sensation or a food with an enhanced fat or oil sensation. In addition, the food of the present invention may be a food with an animal fat or oil sensation (e.g., lard sensation, etc.) or a food with an enhanced animal fat or oil sensation.

The present invention also provides a method for improving food quality, including adding the composition of the present invention to foods (at times referred to as "the method of the present invention" in the present specification).

The method of the present invention can be performed in the same manner as the aforementioned method for producing the food of the present invention, and preferred embodiments are also the same.

The method of the present invention can improve the quality of foods. In one embodiment, the method of the present invention can impart natural flavors (e.g., saltiness, soy sauce flavor, sauce flavor, etc.) to foods, and can also enhance flavors of foods (e.g., saltiness, soy sauce flavor, sauce flavor, etc.). Therefore, in one embodiment, the method of the present invention may be a method for imparting or enhancing the flavors of foods.

In one embodiment, the method of the present invention can effectively impart a fat or oil sensation to foods, and can effectively enhance a fat or oil sensation in foods. Therefore, in one embodiment, the method of the present invention may be a method for imparting or enhancing a fat or oil sensation of a food.

The method of the present invention can impart an animal fat or oil sensation (e.g., lard sensation, etc.) to foods, and can also enhance an animal fat or oil sensation in foods. Therefore, the method of the present invention can be a method for imparting or enhancing an animal fat or oil sensation in foods.

While the present invention is explained in more detail in the following Examples, the present invention is not limited in any manner by the Examples.

Unless otherwise specified, all of the raw materials used in the following Examples are commercially available for foods.

In the present specification, when "%" and "parts" are written in this specification, they mean "wt%" and "parts by weight" unless otherwise specified.

[Example]

<Experimental Example 1>

(Example 1)

A composition in which aqueous particles containing a gelling agent are dispersed in fat or oil was prepared by the following steps (1) to (4) (hereinafter also to be referred to as "the composition of Example 1").

(1) Sucrose fatty acid ester (sucrose oleate, "Ryoto Sugar Ester 0-170" manufactured by Mitsubishi Chemical Corporation) was added to rapeseed oil in the amounts (unit: parts by weight) shown in Table 1 below, mixed, and dissolved by heating to 90°C (the obtained liquid is hereinafter referred to as "SOLUTION A").
(2) Sodium chloride and agar ("Gel Up J-1630" manufactured by San-Ei Gen F.F.I., Inc.) were added to water in the amounts (unit: parts by weight) shown in Table 1 below, mixed, and heated to 70°C (the obtained liquid is hereinafter referred to as "SOLUTION B").
(3) At 90°C, SOLUTION B was gradually added while stirring SOLUTION A to prepare a water-in-oil emulsion with SOLUTION A as the continuous phase and SOLUTION B as the dispersed phase. The stirring speed was started from 500 rpm and gradually increased to 5000 rpm. The stirring time (starting from the point when SOLUTION B was first added to SOLUTION A) was 8 min in total.
(4) The obtained water-in-oil emulsion was cooled to 0 to 5°C to obtain the composition of Example 1.

(Example 2)

In the same manner as in Example 1 except that in step (2), gelatin ("GBL-250" manufactured by Nitta Gelatin Inc.) was mixed, instead of agar, with water in the amount (unit: parts by weight) shown in Table 1 below, a composition in which aqueous particles containing a gelling agent are dispersed in fat or oil was produced (hereinafter also to be referred to as "the composition of Example 2").

(Example 3)

In the same manner as in Example 1 except that in step (2), sodium alginate ("Snow Algin H" manufactured by Fuji Chemical Industries Co., Ltd.) was mixed, agar with water in the amount (unit: parts by weight) shown in Table 1 below, a composition in which aqueous particles containing a gelling agent are dispersed in fat or oil was produced (hereinafter also to be referred to as "the composition of Example 3").

(Comparative Example 1)

In the same manner as in Example 1 except that in step (2), guar gum ("Bistop D-2029" manufactured by San-Ei Gen F.F.I., Inc.) was mixed, instead of agar, with water in the amount (unit: parts by weight) shown in Table 1 below, a composition in which aqueous particles not containing a gelling agent but containing a thickener are dispersed in fat or oil was produced (hereinafter also to be referred to as "the composition of Comparative Example 1").

(Comparative Example 2)

In the same manner as in Example 1 except that in step (2), xanthan gum ("Bistop D-3000" manufactured by San-Ei Gen F.F.I., Inc.) was mixed, instead of agar, with water in the amount (unit: parts by weight) shown in Table 1 below, a composition in which aqueous particles not containing a gelling agent but containing a thickener are dispersed in fat or oil was produced (hereinafter also to be referred to as "the composition of Comparative Example 2").

(Example 4)

In the same manner as in Example 1 except that in step (2), xanthan gum ("Bistop D-3000" manufactured by San-Ei Gen F.F.I., Inc.) and locust bean gum were mixed, instead of agar, with water in the amount (unit: parts by weight) shown in Table 1 below, a composition in which aqueous particles containing a gelling agent are dispersed in fat or oil was produced (hereinafter also to be referred to as "the composition of Example 4").

[Table 1]

|  | Example 1 | Example 2 | Example 3 | Comparative Example 1 | Comparative Example 2 | Example 4 |
|---|---|---|---|---|---|---|
| rapeseed oil | 38 | 38 | 38 | 38 | 38 | 38 |
| sucrose fatty acid ester | 2 | 2 | 2 | 2 | 2 | 2 |
| sodium chloride (purified salt) | 10 | 10 | 10 | 10 | 10 | 10 |
| agar | 0.9 |  |  |  |  |  |
| gelatin |  | 1.2 |  |  |  |  |
| sodium alginate |  |  | 0.9 |  |  |  |
| guar gum |  |  |  | 0.3 |  |  |
| xanthan gum |  |  |  |  | 0.3 | 0.18 |
| locust bean gum |  |  |  |  |  | 0.18 |
| water | 49.1 | 50 | 50 | 50 | 50 | 50 |
| total (parts by weight) | 100 | 101.2 | 100.9 | 100.3 | 100.3 | 100.36 |

[Preparation of test sample for sensory evaluation]

The compositions (32.6 g) of Examples 1 to 4 and Comparative Examples 1 and 2 were added to cooked rice (200 g, "Sato no Gohan" manufactured by Sato Foods Co., Ltd.) heated in a microwave oven (600 W, 2 min), and mixed well to coat the surface of the cooked rice with the compositions (hereinafter cooked rice mixed with "the composition of Example 1" or the like is also to be referred to as "the cooked rice of Example 1" or the like). Then, each cooked rice of Examples 1 to 4 and Comparative Examples 1 and 2 was packed in a tray lined with kitchen paper, and rapidly cooled to -40°C using a blast chiller to freeze, and then stored in a freezer (-20°C) for 1 to 2 days.

[Preparation of standard sample for sensory evaluation]

·Product with equivalent sodium chloride amount

10% Saline solution (32.56 g) was added to cooked rice (200 g, "Sato no Gohan" manufactured by Sato Foods Co., Ltd.) heated in a microwave oven (600 W, 2 min), and mixed well. Then, the cooked rice mixed with 10% saline solution was packed in a tray lined with kitchen paper, and rapidly cooled to -40°C using a blast chiller to freeze, and then stored in a freezer (-20°C) for 1 to 2 days.

[Sensory evaluation]

Test samples (cooked rice of Examples 1 to 4 and Comparative Examples 1 and 2) and standard samples (product with equivalent sodium chloride amount) stored in a frozen state were thawed by heating in a microwave oven (600 W, 2 min). An expert panel consisting of four trained panelists ate each cooked rice and evaluated the intensity of saltiness of the test samples (intensity of saltiness felt immediately after the test sample is placed in the mouth and chewed) by consensus according to the following criteria. The sodium chloride concentration of each cooked rice at the time of eating was 1.4 wt%.

[Evaluation criteria]

⊙: Very intense saltiness compared to standard sample (product with equivalent sodium chloride amount)
O: Slightly intense saltiness compared to standard sample (product with equivalent sodium chloride amount)
Δ: Equivalent saltiness to standard sample (product with equivalent sodium chloride amount)
✕: Weak saltiness compared to standard sample (product with equivalent sodium chloride amount)

The results are shown in Table 2 below. In the evaluation results shown in Table 2, "Δ - ○" means that it is between Δ and ○, and "⊙ - ○" means that it is between ⊙ and O.

[Table 2]

|  | Example 1 | Example 2 | Example 3 | Comparative Example 1 | Comparative Example 2 | Example 4 |
|---|---|---|---|---|---|---|
| evaluation results | ⊙ | ○ | ⊙ | Δ - ○ | Δ - ○ | ⊙ - ○ |

As shown in Table 2, cooked rice mixed with the compositions of Examples 1 to 4, in which aqueous particles containing a gelling agent (agar, gelatin, sodium alginate, or xanthan gum and locust bean gum in combination) are dispersed in fat or oil, all had a clearly stronger saltiness than the standard sample.

On the other hand, the intensity of the saltiness of cooked rice mixed with the compositions of Comparative Examples 1 and 2, in which aqueous particles not containing a gelling agent but containing a thickener (guar gum alone, xanthan gum alone) are dispersed in fat or oil, was almost the same as that of the standard sample.

<Experimental Example 2>

(Example 5)

A composition in which aqueous particles containing a gelling agent are dispersed in fat or oil was prepared by the following steps (1) to (4) (hereinafter also to be referred to as "the composition of Example 5").

(1) Sucrose fatty acid ester (sucrose oleate, "Ryoto Sugar Ester O-170" manufactured by Mitsubishi Chemical Corporation) was added to rapeseed oil in the amounts (unit: parts by weight) shown in Table 3 below, mixed, and dissolved by heating to 90°C (the obtained liquid is hereinafter referred to as "SOLUTION A").
(2) Sodium chloride and agar ("Gel Up J-1630" manufactured by San-Ei Gen F.F.I., Inc.) were added to water in the amounts (unit: parts by weight) shown in Table 3 below, mixed, and heated to 70°C (the obtained liquid is hereinafter referred to as "SOLUTION B").
(3) At 90°C, SOLUTION B was gradually added while stirring SOLUTION A to prepare a water-in-oil emulsion with SOLUTION A as the continuous phase and SOLUTION B as the dispersed phase. The stirring speed was started from 500 rpm and gradually increased to 5000 rpm. The stirring time (starting from the point when SOLUTION B was first added to SOLUTION A) was 8 min in total.
(4) The obtained water-in-oil emulsion was cooled to 0 to 5°C to obtain the composition of Example 5.

(Comparative Example 3)

In the same manner as in Example 5 except that in step (2), agar was not used and the amount of water was changed to 50 parts by weight as shown in Table 3 below, a composition in which aqueous particles not containing a gelling agent are dispersed in fat or oil was produced (hereinafter also to be referred to as "the composition of Comparative Example 3").

(Example 6)

In the same manner as in Example 5 except that in step (1), glycerin saturated fatty acid monoester ("Emulgy MS" manufactured by Riken Vitamin Co., Ltd.), polyglycerin condensed ricinoleic acid ester ("SY Glyster CRS-75" manufactured by Sakamoto Yakuhin Kogyo Co., Ltd.), and polyglycerin oleic acid ester ("Ryoto Polyglycerol O-50D" manufactured by Mitsubishi Chemical Corporation) were mixed, instead of sucrose fatty acid ester, with rapeseed oil in the amounts (unit: parts by weight) shown in Table 3 below, and in step (2), the amount of water was changed to 50.75 parts by weight as shown in Table 3 below, a composition in which aqueous particles containing a gelling agent are dispersed in fat or oil was produced (hereinafter also to be referred to as "the composition of Example 6").

(Comparative Example 4)

In the same manner as in Example 5 except that in step (1), glycerin saturated fatty acid monoester ("Emulgy MS" manufactured by Riken Vitamin Co., Ltd.), polyglycerin condensed ricinoleic acid ester ("SY Glyster CRS-75" manufactured by Sakamoto Yakuhin Kogyo Co., Ltd.), and polyglycerin oleic acid ester ("Ryoto Polyglycerol O-50D" manufactured by Mitsubishi Chemical Corporation) were mixed, instead of sucrose fatty acid ester, with rapeseed oil in the amounts (unit: parts by weight) shown in Table 3 below, and in step (2), agar was not used and the amount of water was changed to 51.65 parts by weight as shown in Table 3 below, a composition in which aqueous particles not containing a gelling agent are dispersed in fat or oil was produced (hereinafter also to be referred to as "the composition of Comparative Example 4").

[Table 3]

|  | Example 5 | Comparative Example 3 | Example 6 | Comparative Example 4 |
|---|---|---|---|---|
| rapeseed oil | 38 | 38 | 38 | 38 |
| glycerin saturated fatty acid monoester |  |  | 0.03 | 0.03 |
| polyglycerin condensed ricinoleic acid ester |  |  | 0.20 | 0.20 |
| polyglycerin oleic acid ester |  |  | 0.12 | 0.12 |
| sucrose fatty acid ester | 2 | 2 |  |  |
| sodium chloride (purified salt) | 10 | 10 | 10 | 10 |
| agar | 0.9 |  | 0.9 |  |
| water | 49.1 | 50 | 50.75 | 51. 65 |
| total (parts by weight) | 100 | 100 | 100 | 100 |

[Preparation of test sample for sensory evaluation]

The compositions (32.6 g) of Examples 5, 6 and Comparative Examples 3, 4 were added to cooked rice (200 g, "Sato no Gohan" manufactured by Sato Foods Co., Ltd.) heated in a microwave oven (600 W, 2 min), and mixed well to coat the surface of the cooked rice with the compositions (hereinafter cooked rice mixed with "the composition of Example 5" or the like is to be referred to as "the cooked rice of Example 5" or the like). Then, each cooked rice of Examples 5, 6 and Comparative Examples 3, 4 was packed in a tray lined with kitchen paper, and rapidly cooled to -40°C using a blast chiller to freeze, and then stored in a freezer (-20°C) for 1 to 2 days.

[Preparation of standard sample for sensory evaluation]

·Product with equivalent sodium chloride amount

10% Saline solution (32.56 g) was added to cooked rice (200 g, "Sato no Gohan" manufactured by Sato Foods Co., Ltd.) heated in a microwave oven (600 W, 2 min), and mixed well. Then, the cooked rice mixed with 10% saline solution was packed in a tray lined with kitchen paper, and rapidly cooled to -40°C using a blast chiller to freeze, and then stored in a freezer (-20°C) for 1 to 2 days.

·Product with increased sodium chloride amount

In the same manner as in the product with equivalent sodium chloride amount except that the amount of 10% saline solution to be added was changed to 34.57 g, 36.84 g, 42.42 g, or 50.00 g as shown in Table 4 below, standard samples were respectively prepared (hereinafter each standard sample is to be referred to as "1.47% product", "1.56% product", "1.75% product", "2% product", as shown in Table 4 below).

[Table 4]

|  | product with equivalent sodium chloride amount | 1.47% product | 1.56% product | 1.75% product | 2% product |
|---|---|---|---|---|---|
| 10% saline solution amount (g) added to cooked rice (200 g) | 32.56 | 34.57 | 36.84 | 42.42 | 50.00 |
| sodium chloride concentration (wt%) at the time of eating cooked rice | 1.40 | 1.47 | 1.56 | 1.75 | 2.00 |

[Preparation of reference sample for sensory evaluation]

·Unfrozen stored product (product without development of taste blur)

10% Saline solution (32.56 g) was added to cooked rice (200 g, "Sato no Gohan" manufactured by Sato Foods Co., Ltd.) heated in a microwave oven (600 W, 2 min), and mixed well. Thereafter, it was used immediately in the below-mentioned sensory evaluation (evaluation II).

·Unemulsified product

To cooked rice (200 g, "Sato no Gohan" manufactured by Sato Foods Co., Ltd.) heated in a microwave oven (600 W, 2 min) were directly (without emulsifying SOLUTION A and SOLUTION B) added SOLUTION A (i.e., a mixture of 38 parts by weight of rapeseed oil and 2 parts by weight of sucrose fatty acid ester) prepared in step (1) of Example 5 and SOLUTION B (i.e., a mixture of 49.1 parts by weight of water, 10 parts by weight of salt, and 0.9 parts by weight of agar) prepared in step (2) of Example 5, and they were mixed well. The amount of SOLUTION A added (amount added to 200 g of cooked rice) was 13.02 g, and the amount of SOLUTION B added (amount added to 200 g of cooked rice) was 19.53 g.
Then, the cooked rice mixed with SOLUTION A and SOLUTION B was packed in a tray lined with kitchen paper, and rapidly cooled to -40°C using a blast chiller to freeze, and then stored in a freezer (-20°C).

[Sensory evaluation]

·Evaluation I

Test samples (cooked rice of Examples 5, 6 and Comparative Examples 3, 4) and standard samples (product with equivalent sodium chloride amount, 1.47% product, 1.56% product, 1.75% product and 2% product) stored in a frozen state were thawed by heating in a microwave oven (600 W, 2 min). An expert panel consisting of four trained panelists ate each cooked rice and evaluated the intensity of saltiness of the test samples (intensity of saltiness felt immediately after the test sample is placed in the mouth and chewed) by consensus by comparison with the standard sample. In detail, the evaluation of each test sample was performed by selecting a standard sample whose saltiness intensity was felt to be equivalent to that of the test sample (sodium chloride concentration of cooked rice at the time of eating: 1.4 wt%). The results are shown in Table 5 below. In the evaluation results shown in Table 5, "corresponding to 1.47% product - 1.56% product" means that it is between 1.47% product and 1.56% product.

[Table 5]

|  | evaluation results |
|---|---|
| Example 5 | corresponding to 1.75% product |
| Comparative Example 3 | corresponding to 1.47% product - 1.56% product |
| Example 6 | corresponding to 1.56% product |

(continued)

|  | evaluation results |
| --- | --- |
| Comparative Example 4 | corresponding to 1.47% product |

As shown in Table 5, cooked rice mixed with the composition of Example 5, in which aqueous particles containing a gelling agent are dispersed in fat or oil had a clearly stronger saltiness than the cooked rice mixed with the composition of Comparative Example 3, in which aqueous particles not containing a gelling agent are dispersed in fat or oil. In addition, the cooked rice mixed with the composition of Example 6, in which aqueous particles containing a gelling agent are dispersed in fat or oil had a clearly stronger saltiness than the cooked rice mixed with the composition of Comparative Example 4, in which aqueous particles not containing a gelling agent are dispersed in fat or oil.

In particular, the cooked rice mixed with the composition of Example 5 was imparted with a natural saltiness. On the other hand, the cooked rice mixed with the composition of Comparative Example 3 or 4 had a soggy texture and lacked consistency.

·Evaluation II

Standard samples (product with equivalent sodium chloride amount, 1.47% product, 1.56% product, 1.75% product and 2% product) stored in a frozen state were thawed by heating in a microwave oven (600 W, 2 min). An expert panel consisting of four trained panelists ate each cooked rice. Then the expert panel ate the reference sample (unfrozen stored product) and evaluated the intensity of saltiness of the reference samples (intensity of saltiness felt immediately after the reference sample is placed in the mouth and chewed) by consensus by comparison with the standard sample. In detail, the evaluation of reference sample was performed by selecting a standard sample whose saltiness intensity was felt to be equivalent to that of the reference sample (sodium chloride concentration of cooked rice at the time of eating: 1.4 wt%).

The evaluation result for the reference sample (unfrozen stored product) was "corresponding to 2% product", and a strong saltiness was clearly felt in the reference sample.

The saltiness of the reference sample (unfrozen stored product) was stronger than that of the standard sample (product with equivalent sodium chloride amount) which has the same sodium chloride concentration of cooked rice at the time of eating. This suggests that a decrease in saltiness (taste blur) occurred in the standard sample, which was cooked rice stored frozen.

·Evaluation III

Reference sample (unemulsified product) and standard samples (product with equivalent sodium chloride amount, 1.47% product, 1.56% product, 1.75% product and 2% product) stored in a frozen state were thawed by heating in a microwave oven (600 W, 2 min). A panel of four experts ate each cooked rice and evaluated the intensity of saltiness of the reference sample (unemulsified product) (intensity of saltiness felt immediately after the test sample is placed in the mouth and chewed) by consensus by comparison with the standard sample. In detail, the evaluation of reference sample was performed by selecting a standard sample whose saltiness intensity was felt to be equivalent to that of the reference sample (sodium chloride concentration of cooked rice at the time of eating: 1.4 wt%).

The evaluation result of the reference sample (unemulsified product) was "corresponding to product with equivalent sodium chloride amount (sodium chloride concentration of cooked rice at the time of eating: 1.4 wt%)". Furthermore, the reference sample had an unusual flavor that was presumably derived from the emulsifier.

Since the intensity of saltiness was not improved in the reference sample (unemulsified product), it was confirmed that the intensity of saltiness is not improved even when the components of SOLUTION A and SOLUTION B used to produce the composition of Example 5 are directly added.

<Experimental Example 3>

(Preparation Example 3-1)

A composition in which aqueous particles containing a gelling agent are dispersed in fat or oil was prepared by the following steps (1) to (4) (hereinafter also to be referred to as "the composition of Preparation Example 3-1").
(1) Sucrose fatty acid ester (sucrose oleate, "Ryoto Sugar Ester 0-170" manufactured by Mitsubishi Chemical Corporation) was added to Canola oil (manufactured by J-OIL MILLS, INC.) in the amounts (unit: g) shown in Table 7 below, mixed, and heated at 90°C for 5 min (the obtained liquid is hereinafter referred to as "SOLUTION A").

(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 7 below, mixed, and dissolved (the obtained liquid is hereinafter referred to as "SOLUTION B").

(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.

[Table 6]

|  | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1000 |
| from 2 min after start of stirring until 3 min after start of stirring | 10 | 1500 |
| from 3 min after start of stirring until 4 min after start of stirring | 10 | 2000 |
| from 4 min after start of stirring until 5 min after start of stirring | 10 | 2500 |
| from 5 min after start of stirring until 8 min after start of stirring | 10 | 5000 |

(4) The obtained water-in-oil emulsion was ice-cooled while mixing with a spatula to obtain the composition of Preparation Example 3-1.

(Preparation Example 3-2)

In the same manner as in Preparation Example 3-1 except that in step (2), sodium chloride and locust bean gum (manufactured by Sansho Co., Ltd.) were added, instead of sodium chloride and agar, to water heated to 100°C in the amount (unit: g) shown in Table 7 below, a composition in which aqueous particles are dispersed in fat or oil was produced (hereinafter also to be referred to as "the composition of Preparation Example 3-2").

(Preparation Example 3-3)

In the same manner as in Preparation Example 3-1 except that in step (2), sodium chloride and κ-carrageenan (manufactured by San-Ei Gen F.F.I., Inc.) were added, instead of sodium chloride and agar, to water heated to 100°C in the amount (unit: g) shown in Table 7 below, a composition in which aqueous particles containing a gelling agent are dispersed in fat or oil was produced (hereinafter also to be referred to as "the composition of Preparation Example 3-3").

(Preparation Example 3-4)

In the same manner as in Preparation Example 3-1 except that in step (2), sodium chloride and sodium alginate (manufactured by Fuji Chemical Industries Co., Ltd.) were added, instead of sodium chloride and agar, to water heated to 100°C in the amount (unit: g) shown in Table 7 below, a composition in which aqueous particles containing a gelling agent are dispersed in fat or oil was produced (hereinafter also to be referred to as "the composition of Preparation Example 3-4").

(Preparation Example 3-5)

In the same manner as in Preparation Example 3-1 except that in step (2), sodium chloride and ʟ-carrageenan (manufactured by San-Ei Gen F.F.I., Inc.) were added, instead of sodium chloride and agar, to water heated to 100°C in the amount (unit: g) shown in Table 7 below, a composition in which aqueous particles containing a gelling agent are dispersed in fat or oil was produced (hereinafter also to be referred to as "the composition of Preparation Example 3-5").

(Preparation Example 3-6)

In the same manner as in Preparation Example 3-1 except that in step (2), sodium chloride alone was added, instead of sodium chloride and agar, to water heated to 100°C in the amount (unit: g) shown in Table 7 below, a composition in which aqueous particles are dispersed in fat or oil was produced (hereinafter also to be referred to as "the composition of Preparation Example 3-6").

[Table 7]

|  | Preparation Example | | | | | |
|---|---|---|---|---|---|---|
|  | 3-1 | 3-2 | 3-3 | 3-4 | 3-5 | 3-6 |
| sodium chloride | 10.0 | 10.0 | 10.0 | 10.0 | 10.0 | 10.0 |
| agar | 0.9 |  |  |  |  |  |
| locust bean gum |  | 0.6 |  |  |  |  |
| κ-carrageenan |  |  | 0.3 |  |  |  |
| sodium alginate |  |  |  | 1.2 |  |  |
| ι-carrageenan |  |  |  |  | 0.3 |  |
| water | 49.1 | 49.4 | 49.7 | 48.8 | 49.7 | 50.0 |
| sucrose fatty acid ester | 2.0 | 2.0 | 2.0 | 2.0 | 2.0 | 2.0 |
| canola oil | 38.0 | 38.0 | 38.0 | 38.0 | 38.0 | 38.0 |
| total (g) | 100.0 | 100.0 | 100.0 | 100.0 | 100.0 | 100.0 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 3-1 to 3-6, and they were mixed well (hereinafter cooked rice mixed with "the composition of Preparation Example 3-1" or the like is also to be referred to as "the cooked rice of Preparation Example 3-1" or the like). The amount of each of the compositions of Preparation Examples 3-1 to 3-6 added to cooked rice was 16.3 g per 100 g of the cooked rice. Then, each cooked rice of Preparation Examples 3-1 to 3-6 was packed in a tray lined with kitchen paper, and rapidly cooled to -40°C for 30 min using a blast chiller to freeze, and then stored in a freezer (-15°C) for 1 to 2 weeks.

[Preparation of standard sample for sensory evaluation]

Rice (unwashed rice, 450 parts by weight) was soaked in 675 parts by weight of water for 30 min, and then cooked in normal cooking mode using an IH rice cooker. To the obtained cooked rice was added saline solution and they were mixed well to prepare cooked rice with a sodium chloride concentration of 0.80 to 1.4 wt% at the time of eating. The sodium chloride concentration of each saline solution added to cooked rice was as shown in Table 8 below, and the amount of each saline solution added to cooked rice was 16.3 g per 100 g of the cooked rice. Preparation of the standard sample was completed 5 min before the sensory evaluation (described below).

[Table 8]

|  | standard sample | | | | | | |
|---|---|---|---|---|---|---|---|
|  | 1 | 2 | 3 | 4 | 5 | 6 | 7 |
| sodium chloride concentration (%) at the time of eating | 0.80 | 0.90 | 1.00 | 1.10 | 1.20 | 1.30 | 1. 40 |
| amount of saline solution (g) added to cooked rice (100 g) | 16.3 | 16.3 | 16.3 | 16.3 | 16.3 | 16.3 | 16.3 |
| sodium chloride concentration (wt%) of saline solution | 5.71 | 6.42 | 7.13 | 7.85 | 8.56 | 9.28 | 9.99 |

[Sensory evaluation]

Test samples (cooked rice of Preparation Examples 3-1 to 3-6) stored in a frozen state were thawed by heating in a microwave oven (600 W, 2 min per about 100 g of cooked rice). An expert panel consisting of two trained panelists ate cooked rice and rated the intensity of saltiness of each test sample (intensity of saltiness felt immediately after the test sample is placed in the mouth and chewed) in increments of 0.5 points according to the following scale. The average score of the two panelists was calculated. The expert panel was trained in advance so that the panelists would have a common understanding of how much the saltiness intensity should change to cause a 0.5 point change in the rating. The sodium chloride concentration of each test sample at the time of eating was 1.4 wt%.

[Evaluation scale]

7 points: saltiness equivalent to that of standard sample 7 (sodium chloride concentration at time of eating: 1.40 wt%)
6 points: saltiness equivalent to that of standard sample 6 (sodium chloride concentration at time of eating: 1.30 wt%)
5 points: saltiness equivalent to that of standard sample 5 (sodium chloride concentration at time of eating: 1.20 wt%)
4 points: saltiness equivalent to that of standard sample 4 (sodium chloride concentration at time of eating: 1.10 wt%)
3 points: saltiness equivalent to that of standard sample 3 (sodium chloride concentration at time of eating: 1.00 wt%)
2 points: saltiness equivalent to that of standard sample 2 (sodium chloride concentration at time of eating: 0.90 wt%)
1 point: saltiness equivalent to that of standard sample 1 (sodium chloride concentration at time of eating: 0.80 wt%)

The results are shown in Table 9 below.

[Table 9]

| Preparation Example | 3-1 | 3-2 | 3-3 | 3-4 | 3-5 | 3-6 |
|---|---|---|---|---|---|---|
| evaluation results | 5.25 | 3.75 | 4.50 | 5.50 | 4.50 | 3.25 |

As shown in Table 9, the cooked rice mixed with the composition of Preparation Example 3-1, 3-3, 3-4, or 3-5 in which aqueous particles containing a gelling agent (agar, κ-carrageenan, sodium alginate, or ʟ-carrageenan) are dispersed in fat or oil had a strong saltiness, and the deterioration in saltiness over time was suppressed. In particular, the cooked rice mixed with the composition of Preparation Example 3-1 in which aqueous particles containing agar are dispersed in fat or oil, and the cooked rice mixed with the composition of Preparation Example 3-4 in which aqueous particles containing sodium alginate are dispersed in fat or oil effectively suppressed the deterioration in saltiness over time.

<Experimental Example 4>

(Preparation Examples 4-1 to 4-6)

Compositions in which aqueous particles containing a gelling agent are dispersed in fat or oil were prepared by the following steps (1) to (4) (hereinafter also to be respectively referred to as "the composition of Preparation Example 4-1" to "the composition of Preparation Example 4-6").

(1) Sucrose fatty acid ester (sucrose oleate, "Ryoto Sugar Ester O-170" manufactured by Mitsubishi Chemical Corporation) was added to Canola oil (manufactured by J-OIL MILLS, INC.) in the amounts (unit: g) shown in Table 10 below, mixed, and heated at 90°C for 5 min (the obtained liquid is hereinafter referred to as "SOLUTION A").
(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 10 below, mixed, and dissolved (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.
(4) The obtained water-in-oil emulsion was ice-cooled while mixing with a spatula to respectively obtain the compositions of Preparation Examples 4-1 to 4-6.

[Table 10]

| | Preparation Example | | | | | |
|---|---|---|---|---|---|---|
| | 4-1 | 4-2 | 4-3 | 4-4 | 4-5 | 4-6 |
| sodium chloride | 10.0 | 10.0 | 10.0 | 10.0 | 10.0 | 10.0 |
| agar | 0.3 | 0.6 | 0.9 | 1.2 | 1.8 | 2.4 |
| water | 49.7 | 49.4 | 49.1 | 48.8 | 48.2 | 47.6 |
| sucrose fatty acid ester | 2.0 | 2.0 | 2.0 | 2.0 | 2.0 | 2.0 |
| canola oil | 38.0 | 38.0 | 38.0 | 38.0 | 38.0 | 38.0 |
| total (g) | 100.0 | 100.0 | 100.0 | 100.0 | 100.0 | 100.0 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 4-1 to 4-6, and they were mixed well (hereinafter cooked rice mixed with "the composition of Preparation Example 4-1" or the like is also to be referred to as "the cooked rice of Preparation Example 4-1" or the like). The amount of each of the compositions of Preparation Examples 4-1 to 4-6 added to cooked rice was 16.3 g per 100 g of the cooked rice. Then, each cooked rice of Preparation Examples 4-1 to 4-6 was packed in a tray lined with kitchen paper, and rapidly cooled to -40°C for 30 min using a blast chiller to freeze, and then stored in a freezer (-15°C) for 1 to 2 weeks.

[Sensory evaluation]

Test samples (cooked rice of Preparation Examples 4-1 to 4-6) stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the cooked rice of Preparation Example 4-3 as the standard. The sodium chloride concentration of each test sample at the time of eating was 1.4 wt%.

[Evaluation scale]

⊙: strong saltiness compared to the cooked rice of Preparation Example 4-3
○: saltiness equivalent to that of the cooked rice of Preparation Example 4-3
△: somewhat weaker saltiness compared to the cooked rice of Preparation Example 4-3
×: clearly weaker saltiness compared to the cooked rice of Preparation Example 4-3

The results are shown in Table 11 below. In the evaluation results shown in Table 11, "△ - ○" means that it is between △ and ○, and "○ - ⊙" means that it is between ○ and ⊙.

[Table 11]

| Preparation Example | 4-1 | 4-2 | 4-3 | 4-4 | 4-5 | 4-6 |
|---|---|---|---|---|---|---|
| evaluation results | △ | △ - ○ | standard | ○ - ⊙ | ○ | △ |

As shown in Table 11, the intensity of saltiness of the cooked rice mixed with the composition of Preparation Example 4-2 (the amount of agar contained in the aqueous particles is 0.6 wt% based on the composition), the composition of Preparation Example 4-4 (the amount of agar contained in the aqueous particles is 1.2 wt% based on the composition), or the composition of Preparation Example 4-5 (the amount of agar contained in the aqueous particles is 1.8 wt% based on the composition) was equal to that of the cooked rice mixed with the composition of Preparation Example 4-3, or stronger than that of the cooked rice mixed with the composition of Preparation Example 4-3.

<Experimental Example 5>

(Preparation Examples 5-1 to 5-5)

Compositions in which aqueous particles containing a gelling agent are dispersed in fat or oil were prepared by the following steps (1) to (4) (hereinafter also to be respectively referred to as "the composition of Preparation Example 5-1" to "the composition of Preparation Example 5-5").

(1) Sucrose fatty acid ester (sucrose oleate, "Ryoto Sugar Ester 0-170" manufactured by Mitsubishi Chemical Corporation) was added to Canola oil (manufactured by J-OIL MILLS, INC.) in the amounts (unit: g) shown in Table 12 below, mixed, and heated at 90°C for 5 min (the obtained liquid is hereinafter referred to as "SOLUTION A"). In Preparation Example 5-5, sucrose fatty acid ester was not used, and heated canola oil was used as it was as SOLUTION A.
(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 12 below, mixed, and dissolved (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.
(4) The obtained water-in-oil emulsion was ice-cooled while mixing with a spatula to respectively obtain the compositions of Preparation Examples 5-1 to 5-5.

[Table 12]

|  | Preparation Example | | | | |
| --- | --- | --- | --- | --- | --- |
|  | 5-1 | 5-2 | 5-3 | 5-4 | 5-5 |
| sodium chloride | 10.0 | 10.0 | 10.0 | 10.0 | 10.0 |
| agar | 0.9 | 0.9 | 0.9 | 0.9 | 0.9 |
| water | 49.1 | 49.1 | 49.1 | 49.1 | 49.1 |
| sucrose fatty acid ester | 0.1 | 2.0 | 5.0 | 10.0 |  |
| canola oil | 40.0 | 40.0 | 40.0 | 40.0 | 40.0 |
| total (g) | 100.1 | 102.0 | 105.0 | 110.0 | 100.0 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 5-1 to 5-5, and they were mixed well (hereinafter cooked rice mixed with "the composition of Preparation Example 5-1" or the like is also to be referred to as "the cooked rice of Preparation Example 5-1" or the like). The amount of each of the compositions of Preparation Examples 5-1 to 5-5 added to cooked rice was, as shown in Table 13 below, 16.28 to 17.23 g per 100 g of the cooked rice. Then, each cooked rice of Preparation Examples 5-1 to 5-5 was packed in a tray lined with kitchen paper, and rapidly cooled to -40°C for 30 min using a blast chiller to freeze, and then stored in a freezer (-15°C) for 1 to 2 weeks.

[Table 13]

| Preparation Example | 5-1 | 5-2 | 5-3 | 5-4 | 5-5 |
| --- | --- | --- | --- | --- | --- |
| amount of composition added (g) per 100 g of cooked rice | 16.30 | 16.66 | 17.23 | 16.56 | 16.28 |

[Preparation of reference sample for sensory evaluation]

A non-emulsified mixture (hereinafter also to be referred to as "NC mixture") was prepared by mixing 10.0 parts by weight of sodium chloride ("Special Grade Salt Nakuru M" manufactured by Naikai Salt Industries Co., Ltd.), 50.0 parts by weight of water. and 40.0 parts by weight of canola oil (manufactured by J-OIL MILLS, INC.). Then, rice (unwashed rice, 450 parts by weight) was soaked in 675 parts by weight of water for 30 min, and then cooked in normal cooking mode using an IH rice cooker. To the obtained cooked rice was added the NC mixture, and they were mixed well. The amount of the NC mixture added to cooked rice was 16.28 g per 100 g of the cooked rice. Then, the cooked rice mixed with the NC mixture was packed in a tray lined with kitchen paper, rapidly cooled to -40°C for 30 min using a blast chiller to freeze, transferred to a pouch, and then stored in a freezer (-15°C) for 1 to 2 weeks.

[Sensory evaluation]

Test samples (cooked rice of Preparation Examples 5-1 to 5-5) and reference sample stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the reference sample as the standard. The sodium chloride concentration of each test sample at the time of eating was 1.4 wt%.

[Evaluation scale]

⊙: clearly stronger saltiness compared to reference sample
O: stronger saltiness compared to reference sample
Δ: saltiness equivalent to that of reference sample
×: weaker saltiness compared to reference sample

The results are shown in Table 14 below. In the evaluation results shown in Table 14, "Δ - ○" means that it is between Δ and O.

[Table 14]

| Preparation Example | 5-1 | 5-2 | 5-3 | 5-4 | 5-5 |
|---|---|---|---|---|---|
| evaluation results | ⊙ | ⊙ | ○ | Δ - ○ | ○ |

As shown in Table 14, cooked rice mixed with the composition of Preparation Example 5-1 (the amount of emulsifier contained in fat or oil is 0.1 wt% based on the composition), the composition of Preparation Example 5-2 (the amount of emulsifier contained in fat or oil is 2 wt% based on the composition), the composition of Preparation Example 5-3 (the amount of emulsifier contained in fat or oil is 4.8 wt% based on the composition), the composition of Preparation Example 5-4 (the amount of emulsifier contained in fat or oil is 9.1 wt% based on the composition), or the composition of 5-5 (no emulsifier used) had a stronger saltiness than the reference sample.

<Experimental Example 6>

(Preparation Example 6-1)

A composition in which aqueous particles containing a gelling agent are dispersed in fat or oil was prepared by the following steps (1) to (4) (hereinafter also to be referred to as "the composition of Preparation Example 6-1").

(1) Sucrose fatty acid ester (sucrose oleate, "Ryoto Sugar Ester 0-170" manufactured by Mitsubishi Chemical Corporation) (2.0 g) was added to Canola oil (manufactured by J-OIL MILLS, INC.) (38.0 g), mixed, and heated at 90°C for 5 min (the obtained liquid is hereinafter referred to as "SOLUTION A").
(2) Sodium chloride ("Special Grade Salt Nakuru M" manufactured by Naikai Salt Industries Co., Ltd.) (10.0 g) and agar ("Gel Up J-1630" manufactured by San-Ei Gen F.F.I., Inc.) (0.9 g) were added to water (49.1 g) heated to 100°C, mixed, and dissolved (the obtained liquid is hereinafter referred to as "SOLUTION B").
(3) At 90°C, SOLUTION B shown in Table 6 was gradually added while stirring SOLUTION A with a stirrer ("Labolution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6.
(4) The obtained water-in-oil emulsion was ice-cooled while mixing with a spatula to obtain the composition of Preparation Example 6-1.

(Preparation Example 6-2)

In the same manner as in Preparation Example 6-1 except that in step (1), polyglycerin fatty acid ester ("Sunsoft Q-1710S" manufactured by Taiyo Kagaku Co., Ltd.) instead of sucrose fatty acid ester was added to canola oil, a composition in which aqueous particles containing a gelling agent are dispersed in fat or oil was produced (hereinafter also to be referred to as "the composition of Preparation Example 6-2").

(Preparation Example 6-3)

In the same manner as in Preparation Example 6-1 except that in step (1), polyglycerin fatty acid ester (polyglycerin condensed ricinoleic acid ester, "Poem PR-100" manufactured by Riken Vitamin Co., Ltd.) instead of sucrose fatty acid ester was added to canola oil, a composition in which aqueous particles containing a gelling agent are dispersed in fat or oil was produced (hereinafter also to be referred to as "the composition of Preparation Example 6-3").

(Preparation Example 6-4)

In the same manner as in Preparation Example 6-1 except that in step (1), organic acid monoglyceride ("Poem K-30" manufactured by Riken Vitamin Co., Ltd.) instead of sucrose fatty acid ester was added to canola oil, a composition in which aqueous particles containing a gelling agent are dispersed in fat or oil was produced (hereinafter also to be referred to as "the composition of Preparation Example 6-4").

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 6-1 to 6-4, and they were mixed well (hereinafter cooked rice mixed with "the composition of Preparation Example 6-1" or the like is also to be referred to as "the cooked rice of Preparation Example 6-1" or the like). The amount of each of the compositions of Preparation Examples 6-1 to 6-4 added to cooked rice was 16.3 g per 100 g of the cooked rice. Then, each cooked rice of Preparation Examples 6-1 to 6-4 was packed in a tray lined with kitchen paper, and rapidly cooled to -40°C using a blast chiller to freeze, and then stored in a freezer (-20°C).

[Preparation of reference sample for sensory evaluation]

[Preparation of standard sample for sensory evaluation]

Rice (unwashed rice, 450 parts by weight) was soaked in 675 parts by weight of water for 30 min, and then cooked in normal cooking mode using an IH rice cooker. To the obtained cooked rice (100 g) were added sodium chloride("Special Grade Salt Nakuru M" manufactured by Naikai Salt Industries Co., Ltd.) (1.63 g), canola oil (manufactured by J-OIL MILLS, INC.) (6.52 g) and water (8.15 g) and they were mixed well. Thereafter, cooked rice mixed with sodium chloride, canola oil and water was packed in a tray lined with kitchen paper, and rapidly cooled to -40°C using a blast chiller to freeze, and then stored in a freezer (-20°C).

[Sensory evaluation]

Test samples (cooked rice of Preparation Examples 6-1 to 6-4) and reference sample stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the cooked rice of Preparation Example 6-1 as the standard. The sodium chloride concentration of each test sample at the time of eating was 1.4 wt%.

[Evaluation scale]

⊙: strong saltiness compared to the cooked rice of Preparation Example 6-1

O: saltiness equivalent to that of the cooked rice of Preparation Example 6-1

Δ: somewhat weaker saltiness compared to the cooked rice of Preparation Example 6-1

×: clearly weaker saltiness compared to the cooked rice of Preparation Example 6-1 (corresponding to reference sample)

The results are shown in Table 15 below.

[Table 15]

| Preparation Example | 6-1 | 6-2 | 6-3 | 6-4 |
|---|---|---|---|---|
| evaluation results | standard | Δ | Δ | ○ |

As shown in Table 15, the intensity of saltiness of the cooked rice mixed with the composition of Preparation Example 6-4 (using organic acid monoglyceride as emulsifier) was equal to that of the cooked rice mixed with the composition of Preparation Example 6-1 (using sucrose fatty acid ester as emulsifier).

In addition, when the composition has a structure in which aqueous particles are dispersed in fat or oil, a certain level of effectiveness was confirmed in preventing the deterioration of saltiness over time.

<Experimental Example 7>

(Preparation Examples 7-1 to 7-4)

Compositions in which aqueous particles containing a gelling agent are dispersed in fat or oil were prepared by the following steps (1) to (4) (hereinafter also to be respectively referred to as "the composition of Preparation Example 7-1" to "the composition of Preparation Example 7-4").

(1) Sucrose fatty acid ester (sucrose oleate, "Ryoto Sugar Ester 0-170" manufactured by Mitsubishi Chemical Corporation) was added to Canola oil (manufactured by J-OIL MILLS, INC.) in the amounts (unit: g) shown in Table 16 below, mixed, and heated at 90°C for 5 min (the obtained liquid is hereinafter referred to as "SOLUTION A").

(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 16 below, mixed, and dissolved (the obtained liquid is hereinafter referred to as "SOLUTION B").

(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase.

(4) The obtained water-in-oil emulsion was ice-cooled while mixing with a spatula to respectively obtain the composition of Preparation Examples 7-1 to 7-4.

[Table 16]

| | Preparation Example | | | |
|---|---|---|---|---|
| | 7-1 | 7-2 | 7-3 | 7-4 |
| sodium chloride | 10.0 | 6.67 | 8.33 | 11. 67 |
| agar | 0.9 | 0.6 | 0.75 | 1. 05 |
| water | 49.1 | 32.73 | 40.92 | 57.28 |
| sucrose fatty acid ester | 2.0 | 3.0 | 2.5 | 1.5 |
| canola oil | 38.0 | 57.0 | 47.5 | 28.5 |
| total (g) | 100.0 | 100.0 | I 100.0 | 100.0 |

In Preparation Example 7-1, step (3), SOLUTION B was added to SOLUTION A as shown in Table 6, and the stirring speed was gradually increased as shown in Table 6.

In Preparation Example 7-2, step (3), SOLUTION B was added to SOLUTION A as shown in Table 17 below, and the stirring speed was gradually increased as shown in Table 17 below.

In Preparation Example 7-3, step (3), SOLUTION B was added to SOLUTION A as shown in Table 18 below, and the stirring speed was gradually increased as shown in Table 18 below.

In Preparation Example 7-4, step (3), SOLUTION B was added to SOLUTION A as shown in Table 19 below, and the stirring speed was gradually increased as shown in Table 19 below.

[Table 17]

| | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1000 |
| from 2 min after start of stirring until 3 min after start of stirring | 10 | 1500 |
| from 3 min after start of stirring until 4 min after start of stirring | 10 | 2000 |
| from 4 min after start of stirring until 5 min after start of stirring | 0 | 2500 |
| from 5 min after start of stirring until 8 min after start of stirring | 0 | 5000 |

[Table 18]

| | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1000 |
| from 2 min after start of stirring until 3 min after start of stirring | 10 | 1500 |
| from 3 min after start of stirring until 4 min after start of stirring | 10 | 2000 |
| from 4 min after start of stirring until 5 min after start of stirring | 10 | 2500 |
| from 5 min after start of stirring until 8 min after start of stirring | 0 | 5000 |

[Table 19]

| | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1000 |
| from 2 min after start of stirring until 3 min after start of stirring | 10 | 1500 |
| from 3 min after start of stirring until 4 min after start of stirring | 10 | 2000 |
| from 4 min after start of stirring until 5 min after start of stirring | 10 | 2500 |
| from 5 min after start of stirring until 8 min after start of stirring | 20 | 5000 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 7-1 to 7-4, and they were mixed well (hereinafter cooked rice mixed with "the composition of Preparation Example 7-1" or the like is also to be referred to as "the cooked rice of Preparation Example 7-1" or the like). The amount of each of the compositions of Preparation Examples 7-1 to 7-4 added to cooked rice was 13.64 to 26.58 g per 100 g of the cooked rice, as shown in Table 20 below. Then, each cooked rice of Preparation Examples 7-1 to 7-4 was packed in a tray lined with kitchen paper, rapidly cooled to -40°C using a blast chiller to freeze, and then stored in a freezer (-20°C).

[Table 20]

| Preparation Example | 7-1 | 7-2 | 7-3 | 7-4 |
|---|---|---|---|---|
| amount of composition added (g) per 100 g of cooked rice | 16.28 | 26.58 | 20.19 | 13.64 |

[Preparation of reference sample for sensory evaluation]

A non-emulsified mixture (hereinafter also to be referred to as "NC mixture") was prepared by mixing 10.0 parts by weight of sodium chloride ("Special Grade Salt Nakuru M" manufactured by Naikai Salt Industries Co., Ltd.), 50.0 parts by weight of water. and 40.0 parts by weight of canola oil (manufactured by J-OIL MILLS, INC.). Then, rice (unwashed rice, 450 parts by weight) was soaked in 675 parts by weight of water for 30 min, and then cooked in normal cooking mode using an IH rice cooker. To the obtained cooked rice was added the NC mixture, and they were mixed well. The amount of the NC mixture added to cooked rice was 16.28 g per 100 g of the cooked rice. Then, the cooked rice mixed with the NC mixture was packed in a tray lined with kitchen paper, rapidly cooled to -40°C using a blast chiller to freeze, and then stored in a freezer (-20°C).

[Sensory evaluation]

Test samples (cooked rice of Preparation Examples 7-1 to 7-4) and reference sample stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the cooked rice of Preparation Example 7-1 as the standard. The sodium chloride concentration of each test sample at the time of eating was 1.4 wt%.

[Evaluation scale]

⊙: strong saltiness compared to the cooked rice of Preparation Example 7-1
○: saltiness equivalent to that of the cooked rice of Preparation Example 7-1
Δ: somewhat weaker saltiness compared to the cooked rice of Preparation Example 7-1
×: clearly weaker saltiness compared to the cooked rice of Preparation Example 7-1 (corresponding to reference sample)

The results are shown in Table 21 below.

[Table 21]

| Preparation Example | 7-1 | 7-2 | 7-3 | 7-4 |
|---|---|---|---|---|
| evaluation results | standard | Δ | Δ | Δ |

As shown in Table 21, the intensity of saltiness of the cooked rice mixed with the composition of Preparation Example 7-1 (the total amount of the constituent components of the aqueous particles is 60 wt% based on the composition) was rather stronger than that of the cooked rice mixed with the composition of Preparation Example 7-2 (the total amount of the constituent components of the aqueous particles is 40 wt% based on the composition), the cooked rice mixed with the composition of Preparation Example 7-3 (the total amount of the constituent components of the aqueous particles is 50 wt% based on the composition), or the cooked rice mixed with the composition of Preparation Example 7-4 (the total amount of the constituent components of the aqueous particles is 70 wt% based on the composition). In all of the compositions of Preparation Examples 7-1 to 7-4, a certain level of effectiveness was confirmed in preventing the deterioration of saltiness over time.

<Experimental Example 8>

(Preparation Example 8-1)

A composition in which aqueous particles containing a gelling agent are dispersed in fat or oil was prepared by the following steps (1) to (4) (hereinafter also to be referred to as "the composition of Preparation Example 8-1").

(1) Sucrose fatty acid ester (sucrose oleate, "Ryoto Sugar Ester 0-170" manufactured by Mitsubishi Chemical Corporation) (2.0 g) was added to Canola oil (manufactured by J-OIL MILLS, INC.) (38.0 g), mixed, and heated at 90°C for 5 min (the obtained liquid is hereinafter referred to as "SOLUTION A").

(2) Sodium chloride ("Special Grade Salt Nakuru M" manufactured by Naikai Salt Industries Co., Ltd.) (10.0 g) and agar ("Gel Up J-1630" manufactured by San-Ei Gen F.F.I., Inc.) (0.9 g) were added to water (49.1 g) heated to 100°C, mixed, and dissolved (the obtained liquid is hereinafter referred to as "SOLUTION B").

(3) At 90°C, SOLUTION B shown in Table 22 below was gradually added while stirring SOLUTION A with a stirrer ("Labolution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 22 below.

[Table 22]

| | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1000 |
| from 2 min after start of stirring until 3 min after start of stirring | 10 | 2000 |
| from 3 min after start of stirring until 4 min after start of stirring | 10 | 3000 |
| from 4 min after start of stirring until 5 min after start of stirring | 10 | 3000 |
| from 5 min after start of stirring until 8 min after start of stirring | 10 | 3000 |

(4) The obtained water-in-oil emulsion was ice-cooled while mixing with a spatula to obtain the composition of Preparation Example 8-1.

(Preparation Example 8-2)

In the same manner as in Preparation Example 8-1 except that in step (3), SOLUTION B was gradually added to SOLUTION A as shown in Table 23 below and the stirring speed was gradually increased as shown in Table 23 below, a composition in which aqueous particles are dispersed in fat or oil was produced (hereinafter also to be referred to as "the composition of Preparation Example 8-2").

[Table 23]

| | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1000 |
| from 2 min after start of stirring until 3 min after start of stirring | 10 | 2000 |
| from 3 min after start of stirring until 4 min after start of stirring | 10 | 3000 |
| from 4 min after start of stirring until 5 min after start of stirring | 10 | 4000 |
| from 5 min after start of stirring until 8 min after start of stirring | 10 | 4000 |

(Preparation Example 8-3)

In the same manner as in Preparation Example 8-1 except that in step (3), SOLUTION B was gradually added to SOLUTION A as shown in Table 6 and the stirring speed was gradually increased as shown in Table 6, a composition in which aqueous particles are dispersed in fat or oil was produced (hereinafter also to be referred to as "the composition of Preparation Example 8-3").

(Preparation Example 8-4)

In the same manner as in Preparation Example 8-1 except that in step (3), SOLUTION B was gradually added to SOLUTION A as shown in Table 24 below and the stirring speed was gradually increased as shown in Table 24 below, a composition in which aqueous particles are dispersed in fat or oil was produced (hereinafter also to be referred to as "the composition of Preparation Example 8-4").

[Table 24]

|  | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1600 |
| from 2 min after start of stirring until 3 min after start of stirring | 10 | 2700 |
| from 3 min after start of stirring until 4 min after start of stirring | 10 | 3800 |
| from 4 min after start of stirring until 5 min after start of stirring | 10 | 4900 |
| from 5 min after start of stirring until 8 min after start of stirring | 10 | 6000 |

(Preparation Example 8-5)

In the same manner as in Preparation Example 8-1 except that in step (3), SOLUTION B was gradually added to SOLUTION A as shown in Table 25 below and the stirring speed was gradually increased as shown in Table 25 below, a composition in which aqueous particles are dispersed in fat or oil was produced (hereinafter also to be referred to as "the composition of Preparation Example 8-5").

[Table 25]

|  | amount of SOLUTION B added (g) | stirring speed (rpm) |
|---|---|---|
| from start of stirring until 1 min after start of stirring | 10 | 500 |
| from 1 min after start of stirring until 2 min after start of stirring | 10 | 1800 |
| from 2 min after start of stirring until 3 min after start of stirring | 10 | 3100 |
| from 3 min after start of stirring until 4 min after start of stirring | 10 | 4400 |
| from 4 min after start of stirring until 5 min after start of stirring | 10 | 5700 |
| from 5 min after start of stirring until 8 min after start of stirring | 10 | 7000 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 8-1 to 8-5, and they were mixed well (hereinafter cooked rice mixed with "the composition of Preparation Example 8-1" or the like is also to be referred to as "the cooked rice of Preparation Example 8-1" or the like). The amount of each of the compositions of Preparation Examples 8-1 to 8-5 added to cooked rice was 16.3 g per 100 g of the cooked rice. Then, each cooked rice of Preparation Examples 8-1 to 8-5 was packed in a tray lined with kitchen paper, and rapidly cooled to -40°C using a blast chiller to freeze, and then stored in a freezer (-20°C).

[Sensory evaluation]

Test samples (cooked rice of Preparation Examples 8-1 to 8-5) stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the cooked rice of Preparation Example 8-3 as the standard. The sodium chloride concentration of each test sample at the time of eating was 1.4 wt%.

[Evaluation scale]

⊙: strong saltiness compared to the cooked rice of Preparation Example 8-3
○: saltiness equivalent to that of the cooked rice of Preparation Example 8-3
Δ: somewhat weaker saltiness compared to the cooked rice of Preparation Example 8-3
×: clearly weaker saltiness compared to the cooked rice of Preparation Example 8-3

The results are shown in Table 26 below. In the evaluation results shown in Table 26, "Δ - ○" means that it is between Δ and O.

[Table 26]

| Preparation Example | 8-1 | 8-2 | 8-3 | 8-4 | 8-5 |
|---|---|---|---|---|---|
| evaluation results | Δ - ○ | Δ - ○ | standard | ○ | Δ - ○ |

[Measurement of median diameter of aqueous particles]

The median diameter (50% particle diameter in the cumulative particle size distribution curve based on volume) and the mean volume diameter of the aqueous particles were measured by the laser diffraction/scattering method for each composition of Preparation Examples 8-1 to 8-5. In detail, the median diameter of the aqueous particles was determined by determining the particle diameter (50% particle diameter) at the point where the cumulative volume from the microparticle side is 50% when the total volume of the aqueous particle group is 100%, in the cumulative particle size distribution curve measured (relative refractive index: 120A000I) using a laser diffraction/scattering type particle size distribution measuring device (NIKKISO CO., LTD., Microtrack ASVR HRA model: 9320-X100). The mean volume diameter was calculated using the following formula, based on the volume-based particle size distribution measured using the laser diffraction/scattering type particle size distribution measuring device.

$$\text{mean volume diameter } (MV) = \Sigma(v_i \cdot d_i)/\Sigma(v_i)$$

wherein $v_i$ indicates the volume per particle, and $d_i$ indicates the particle diameter per particle.
The results are shown in Table 27 below.

[Table 27]

| Preparation Example | 8-1 | 8-2 | 8-3 | 8-4 | 8-5 |
|---|---|---|---|---|---|
| median diameter of aqueous particles (D50) (μm) | 42.47 | 50.36 | 37.67 | 32.71 | 34.78 |
| mean volume diameter of aqueous particles (MV) (μm) | 92.13 | 104.1 | 85.51 | 73.91 | 72.96 |

As shown in Table 27, the intensity of saltiness of the cooked rice mixed with the composition of Preparation Example 8-1 (with median diameter of 42.47 μm and mean volume diameter of 92.13 μm of aqueous particles), the composition of Preparation Example 8-2 (with median diameter 50.36 μm and mean volume diameter of 104.1 μm of aqueous particles), the composition of Preparation Example 8-4 (with median diameter of 32.71 μm and mean volume diameter of 73.91 μm of aqueous particles) or the composition of Preparation Example 8-5 (with median diameter of 34.78 μm and mean volume diameter of 72.96 μm of aqueous particles) was equal to that of the cooked rice mixed with the composition of Preparation Example 8-3 (with median diameter of 37.67 μm and mean volume diameter of 85.51 μm of aqueous particles).

<Experimental Example 9>

(Preparation Examples 9-1 and 9-2)

Compositions in which aqueous particles containing a gelling agent are dispersed in fat or oil were prepared by the following steps (1) to (4) (hereinafter also to be respectively referred to as "the composition of Preparation Example 9-1" and "the composition of Preparation Example 9-2").

(1) Sucrose fatty acid ester (sucrose oleate, "Ryoto Sugar Ester O-170" manufactured by Mitsubishi Chemical Corporation) was added to Canola oil (manufactured by J-OIL MILLS, INC.) in the amounts (unit: g) shown in Table 28 below, mixed, and heated at 90°C for 5 min (the obtained liquid is hereinafter referred to as "SOLUTION A").

(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 28 below, mixed, and dissolved (the obtained liquid is hereinafter referred to as "SOLUTION B").

(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.

(4) The obtained water-in-oil emulsion was ice-cooled while mixing with a spatula to respectively obtain the compositions of Preparation Examples 9-1 and 9-2.

[Table 28]

|  | Preparation Example | |
| --- | --- | --- |
|  | 9-1 | 9-2 |
| water | 54.1 | 49.1 |
| agar | 0.9 | 0.9 |
| sodium chloride | 5.0 | 10.0 |
| sucrose fatty acid ester | 2.0 | 2.0 |
| canola oil | 38.0 | 38.0 |
| total (g) | 100.0 | 100.0 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 9-1 and 9-2, and they were mixed well (hereinafter cooked rice mixed with "the composition of Preparation Example 9-1" or the like is also to be referred to as "the cooked rice of Preparation Example 9-1" or the like). The amount of the composition of Preparation Example 9-1 added to cooked rice was 38.9 g per 100 g of the cooked rice and the amount of the composition of Preparation Example 9-2 added to cooked rice was 16.3 g per 100 g of the cooked rice. Then, each cooked rice of Preparation Examples 9-1 and 9-2 was packed in a tray lined with kitchen paper, and rapidly cooled to -40°C using a blast chiller to freeze, and then stored in a freezer (-20°C).

[Sensory evaluation]

Test samples (cooked rice of Preparation Examples 9-1 and 9-2) stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the cooked rice of Preparation Example 9-2 as the standard. The sodium chloride concentration of each test sample at the time of eating was 1.4 wt%.

[Evaluation scale]

⊙: clearly strong saltiness compared to the cooked rice of Preparation Example 9-2 (25% increase)
○: strong saltiness compared to the cooked rice of Preparation Example 9-2 (about 10% increase)
Δ: saltiness equivalent to that of the cooked rice of Preparation Example 9-2

×: weaker saltiness compared to the cooked rice of Preparation Example 9-2 (10% decrease)

The results are shown in Table 29 below. In the evaluation results shown in Table 29, "× - Δ" means that it is between × and Δ.

[Table 29]

| Preparation Example | 9-1 | 9-2 |
|---|---|---|
| evaluation results | × - Δ | standard |

The cooked rice mixed with each of the compositions of Preparation Examples 9-1 and 9-2 had an enhanced saltiness. However, as shown in Table 29, the cooked rice mixed with the composition of Preparation Example 9-2 (the amount of sodium chloride contained in the aqueous particles was 10 wt% based on the composition) had a stronger saltiness compared the cooked rice mixed with the composition of Preparation Example 9-1 (the amount of sodium chloride contained in the aqueous particles was 5 wt% based on the composition).

<Experimental Example 10>

(Preparation Example 10-1)

A composition in which aqueous particles containing a gelling agent are dispersed in fat or oil was prepared by the following steps (1) to (4) (hereinafter also to be referred to as "the composition of Preparation Example 10-1").

(1) Sucrose fatty acid ester (sucrose oleate, "Ryoto Sugar Ester O-170" manufactured by Mitsubishi Chemical Corporation) was added to Canola oil (manufactured by J-OIL MILLS, INC.) in the amounts (unit: g) shown in Table 30 below, mixed, and heated at 90°C for 5 min (the obtained liquid is hereinafter referred to as "SOLUTION A").
(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 30 below, mixed, and dissolved (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6.
(4) The obtained water-in-oil emulsion was ice-cooled while mixing with a spatula to obtain the composition of Preparation Example 10-1.

(Preparation Example 10-2)

In the same manner as in Example 10-1 except that in step (2), potassium chloride ("Super KARI" manufactured by AKO KASEI Co., LTD. and agar were added, instead of sodium chloride and agar, to water heated to 100°C in the amount (unit: g) shown in Table 30 below, a composition in which aqueous particles containing a gelling agent are dispersed in fat or oil was produced (hereinafter also to be referred to as "the composition of Preparation Example 10-2").

(Preparation Example 10-3)

In the same manner as in Example 10-1 except that in step (2), sodium chloride, potassium chloride ("Super KARI" manufactured by AKO KASEI Co., LTD.) and agar were added, instead of sodium chloride and agar, to water heated to 100°C in the amount (unit: g) shown in Table 30 below, a composition in which aqueous particles containing a gelling agent are dispersed in fat or oil was produced (hereinafter also to be referred to as "the composition of Preparation Example 10-3").

[Table 30]

| | Preparation Example | | |
|---|---|---|---|
| | 10-1 (NC-1) | 10-2 (NC-2) | 10-3 (NC-3) |
| water | 49.1 | 49.1 | 49.1 |
| agar | 0.9 | 0.9 | 0.9 |

(continued)

| | Preparation Example | | |
|---|---|---|---|
| | 10-1 (NC-1) | 10-2 (NC-2) | 10-3 (NC-3) |
| sodium chloride | 10.0 | | 5.0 |
| potassium chloride | | 10.0 | 5.0 |
| canola oil | 38.0 | 38.0 | 38.0 |
| sucrose fatty acid ester | 2.0 | 2.0 | 2.0 |
| total | 100.0 | 100.0 | 100.0 |

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added each of the compositions of Preparation Examples 10-1 to 10-3, and they were mixed well (hereinafter cooked rice mixed with "the composition of Preparation Example 10-1" or the like is also to be referred to as "the cooked rice of Preparation Example 10-1" or the like). The amount of each of the compositions of Preparation Examples 10-1 to 10-3 added to cooked rice was 16.3 g per 100 g of the cooked rice. Then, each cooked rice of Preparation Examples 10-1 to 10-3 was packed in a tray lined with kitchen paper, and rapidly cooled to -40°C using a blast chiller to freeze, and then stored in a freezer (-20°C).

[Preparation of reference sample for sensory evaluation]

Non-emulsified mixtures (hereinafter also to be respectively referred to as "NC-1 mixture" to "NC-3 mixture") were prepared by mixing the materials used for preparing each of the compositions of Preparation Examples 10-1 to 10-3. Then, rice (unwashed rice, 450 parts by weight) was soaked in 675 parts by weight of water for 30 min, and then cooked in normal cooking mode using an IH rice cooker. To the obtained cooked rice was added the NC-1 mixture, NC-2 mixture or NC-3 mixture, and they were mixed well (hereinafter cooked rice mixed with "NC-1 mixture" or the like is also to be referred to as "the cooked rice of NC-1" or the like). The amount of the NC-1 mixture to NC-3 mixture added to cooked rice was 16.3 g per 100 g of the cooked rice. Thereafter, the cooked rice of NC-1 to NC-3 was packed in a tray lined with kitchen paper, rapidly cooled to -40°C using a blast chiller to freeze, and then stored in a freezer (-20°C).

[Sensory evaluation]

Test sample (cooked rice of Preparation Example 10-1) and reference sample (cooked rice of NC-1) stored in a frozen state were thawed by heating in a microwave oven (600 W, 2 min per about 100 g of cooked rice). An expert panel consisting of three trained panelists ate cooked rice and rated the intensity of saltiness of each test sample (intensity of saltiness felt from when the test sample is placed in the mouth until the end of eating) by consensus according to the following scale, with the cooked rice of NC-1 as the standard.

[Evaluation scale]

⊙: clearly strong saltiness compared to the cooked rice of NC-1 (25% increase)
○: strong saltiness compared to the cooked rice of NC-1 (about 10% increase)
Δ: saltiness equivalent to that of the cooked rice of NC-1
×: weaker saltiness compared to the cooked rice of NC-1 (10% decrease)

Test sample (cooked rice of Preparation Example 10-2) and reference sample (cooked rice of NC-2) stored in a frozen state were thawed by heating in a microwave oven (600 W, 2 min per about 100 g of cooked rice). An expert panel consisting of three trained panelists ate cooked rice and rated the astringency and bitterness of test samples (astringency and bitterness derived from potassium chloride) by consensus according to the following scale, with the cooked rice of NC-2 as the standard.

[Evaluation scale]

⊙: clearly strong astringency and bitterness compared to the cooked rice of NC-2 (25% increase)
○: strong astringency and bitterness compared to the cooked rice of NC-2 (about 10% increase)
Δ: astringency and bitterness equivalent to those of the cooked rice of NC-2
×: weaker astringency and bitterness compared to the cooked rice of NC-2 (10% decrease)

Test sample (cooked rice of Preparation Example 10-3) and reference sample (cooked rice of NC-3) stored in a frozen state were thawed by heating in a microwave oven (600 W, 2 min per about 100 g of cooked rice). An expert panel consisting of three trained panelists ate cooked rice and rated the intensity of saltiness (intensity of saltiness felt from when the test sample is placed in the mouth until the end of eating), and astringency and bitterness of test samples (astringency and bitterness derived from potassium chloride) by consensus according to the following scale, with the cooked rice of NC-3 as the standard.

[Evaluation scale]

⊙: clearly strong saltiness, astringency and bitterness compared to the cooked rice of NC-3 (25% increase)
○: strong saltiness, astringency and bitterness compared to the cooked rice of NC-3 (about 10% increase)
Δ: saltiness, astringency and bitterness equivalent to those of the cooked rice of NC-3
×: weaker saltiness, astringency and bitterness compared to the cooked rice of NC-3 (10% decrease)

The results are shown in Table 31 below. In the evaluation results shown in Table 31, "○ - ⊙" means that it is between ○ and ⊙.

[Table 31]

| Preparation Example | | 10-1 | 10-2 | 10-3 |
|---|---|---|---|---|
| evaluation results | saltiness | ⊙ | | ○ |
| | astringency and bitterness | | ○ - ⊙ | ○ - ⊙ |

As shown in Table 31, the deterioration in saltiness over time was suppressed in the cooked rice mixed with the composition of Preparation Example 10-1. In the cooked rice mixed with the composition of Preparation Example 10-2, the deterioration in astringency and bitterness (astringency and bitterness derived from potassium chloride) over time was suppressed. The deterioration in saltiness, astringency and bitterness over time was suppressed in the cooked rice mixed with the composition of Preparation Example 10-3.

<Experimental Example 11>

(Preparation Example 11)

A composition in which aqueous particles containing a gelling agent are dispersed in fat or oil was prepared by the following steps (1) to (4) (hereinafter also to be referred to as "the composition of Preparation Example 11").

(1) Sucrose fatty acid ester (sucrose oleate, "Ryoto Sugar Ester O-170" manufactured by Mitsubishi Chemical Corporation) (2 g) was added to canola oil (manufactured by J-OIL MILLS, INC.) (38 g), mixed, and heated at 90°C for 5 min (the obtained liquid is hereinafter referred to as "SOLUTION A").
(2) Agar ("Gel Up J-1630" manufactured by San-Ei Gen F.F.I., Inc.) (0.9 g) was mixed and dissolved in soy sauce ("ITSUDEMO SHINSEN SHIBORITATE NAMASHOYU" manufactured by Kikkoman Corporation, sodium chloride content: 16.0 g sodium chloride per 100 g product) (59.1 g) (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.

(4) The obtained water-in-oil emulsion was ice-cooled while mixing with a spatula to obtain the composition of Preparation Example 11.

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice was added the composition of Preparation Example 11, and they were mixed well (hereinafter cooked rice mixed with the composition of Preparation Example 11 is also to be referred to as "the cooked rice of Preparation Example 11). The amount of the composition of Preparation Example 11 added to cooked rice was 17.4 g per 100 g of the cooked rice. Then, the cooked rice of Preparation Example 11 was packed in a tray lined with kitchen paper, and rapidly cooled to -40°C using a blast chiller to freeze, and then stored in a freezer (-20°C).

Frozen fried rice ("HONKAKU ITAME CHAHAN" manufactured by Nichirei Foods, Inc.) was heated in a microwave oven according to the cooking instructions on the product package. To the obtained fried rice was added the composition of Preparation Example 11, and they were mixed well (hereinafter fried rice mixed with "the composition of Preparation Example 11" is also to be referred to as "the fried rice of Preparation Example 11). The amount of the composition of Preparation Example 11 added to fried rice was 10.0 g per 200 g of the fried rice. Then, the fried rice of Preparation Example 11 was packed in a tray lined with kitchen paper, and rapidly cooled to -40°C using a blast chiller to freeze, and then stored in a freezer (-20°C).

[Preparation of reference sample for sensory evaluation]

Rice (unwashed rice, 450 parts by weight) was soaked in 675 parts by weight of water for 30 min, and then cooked in normal cooking mode using an IH rice cooker. To the obtained cooked rice were added salad oil and soy sauce and they were mixed well (hereinafter the cooked rice mixed with salad oil and soy sauce is also to be referred to as "the cooked rice of NC"). The amounts of the salad oil and soy sauce added to cooked rice were 7.1 g of salad oil per 100 g of the cooked rice and 10.3 g of soy sauce per 100 g of the cooked rice. Then, the cooked rice of NC was packed in a tray lined with kitchen paper, and rapidly cooled to -40°C using a blast chiller to freeze, and then stored in a freezer (-20°C).

In addition, cooked rice mixed with salad oil and soy sauce in the same manner as for the cooked rice of NC was prepared immediately before the sensory evaluation (described below) (hereinafter also to be referred to as "the cooked rice of PC").

Frozen fried rice ("HONKAKU ITAME CHAHAN" manufactured by Nichirei Foods, Inc.) was heated in a microwave oven according to the cooking instructions on the product package. To the obtained fried rice were added salad oil and soy sauce and they were mixed well (hereinafter the cooked rice mixed with salad oil and soy sauce is also to be referred to as "the fried rice of NC"). The amounts of the salad oil and soy sauce added to fried rice were 4.1 g of salad oil per 200 g of the fried rice and 5.9 g of soy sauce per 200 g of the fried rice. Then, the fried rice of NC was packed in a tray lined with kitchen paper, and rapidly cooled to -40°C using a blast chiller to freeze, and then stored in a freezer (-20°C).

In addition, fried rice mixed with salad oil and soy sauce in the same manner as for the fried rice of NC was prepared immediately before the sensory evaluation (described below) (hereinafter also to be referred to as "the fried rice of PC").

[Sensory evaluation]

Test sample (cooked rice of Preparation Example 11) and reference sample (cooked rice of NC) stored in a frozen state were thawed by heating in a microwave oven (600 W, 2 min per about 100 g of cooked rice). An expert panel consisting of three trained panelists ate cooked rice and evaluated the intensity of saltiness and soy sauce flavor of test samples by consensus according to the following scale, with the cooked rice of NC as the standard. In addition, the expert panel ate the cooked rice of PC and evaluated the intensity of saltiness and soy sauce flavor by consensus according to the following scale.

[Evaluation scale]

⊙: saltiness or soy sauce flavor clearly felt strongly compared to the cooked rice of NC
○: saltiness or soy sauce flavor strongly felt compared to the cooked rice of NC
△: saltiness or soy sauce flavor equivalent to that of the cooked rice of NC

×: saltiness or soy sauce flavor weakly felt compared to the cooked rice of NC

The results are shown in Table 32 below. In the evaluation results shown in Table 32, "○ - ⊙" means that it is between ○ and ⊙, and "Δ - ○" means that it is between Δ and ○.

[Table 32]

|  |  | PC | Preparation Example 11 |
|---|---|---|---|
| evaluation results | saltiness | ⊙ | ○ - ⊙ |
|  | soy sauce flavor | ⊙ | Δ - ○ |

Test sample (fried rice of Preparation Example 11) and reference sample (fried rice of NC) stored in a frozen state were thawed by heating in a microwave oven (600 W, 2 min per about 100 g of fried rice). An expert panel consisting of three trained panelists ate cooked rice and evaluated the intensity of saltiness and soy sauce flavor of test samples by consensus according to the following scale, with the fried rice of NC as the standard. In addition, the expert panel ate the fried rice of PC, which was free of deterioration of flavor over time, and evaluated the intensity of saltiness and soy sauce flavor by consensus according to the following scale.

[Evaluation scale]

⊙: saltiness or soy sauce flavor clearly felt strongly compared to the fried rice of NC
○: saltiness or soy sauce flavor strongly felt compared to the fried rice of NC
Δ: saltiness or soy sauce flavor equivalent to that of the fried rice of NC
×: saltiness or soy sauce flavor weakly felt compared to the fried rice of NC

The results are shown in Table 33 below. In the evaluation results shown in Table 33, "○ - ⊙" means that it is between ○ and ⊙.

[Table 33]

|  |  | PC | Preparation Example 11 |
|---|---|---|---|
| evaluation results | saltiness | ⊙ | ○ |
|  | soy sauce flavor | ⊙ | ○ - ⊙ |

As shown in Table 32, the deterioration in saltiness and soy sauce flavor over time was suppressed in the cooked rice mixed with the composition of Preparation Example 11. In addition, as shown in Table 33, the deterioration in saltiness and soy sauce flavor over time was also suppressed in the fried rice mixed with the composition of Preparation Example 11.

<Experimental Example 12>

(Preparation Example 12-1)

A composition in which aqueous particles containing a gelling agent are dispersed in fat or oil was prepared by the following steps (1) to (4) (hereinafter also to be referred to as "the composition of Preparation Example 12-1").

(1) Sucrose fatty acid ester (sucrose oleate, "Ryoto Sugar Ester O-170" manufactured by Mitsubishi Chemical Corporation) was added to salad oil in the amounts (unit: g) shown in Table 34 below, mixed, and heated at 90°C for 5 min (the obtained liquid is hereinafter referred to as "SOLUTION A").
(2) Sodium chloride ("Special Grade Salt Nakuru M" manufactured by Naikai Salt Industries Co., Ltd.) and agar ("Gel Up J-1630" manufactured by San-Ei Gen F.F.I., Inc.) were added to water heated to 100°C in the amounts (unit: g) shown in Table 34 below, mixed, and dissolved (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.
(4) The obtained water-in-oil emulsion was ice-cooled while mixing with a spatula to obtain the composition of Preparation Example 12-1.

(Preparation Example 12-2)

In the same manner as in Example 12-1 except that in step (2), water and Worcestershire sauce ("Bulldog Worcestershire Sauce" manufactured by BULL-DOG SAUCE CO., LTD., sodium chloride content: 9.10 g per 100 g of product) were mixed in the amounts shown in Table 34 below (unit: g), and agar was added and dissolved therein while warming in hot water at 80°C, a composition in which aqueous particles are dispersed in fat or oil was produced (hereinafter also to be referred to as "the composition of Preparation Example 12-2").

[Table 34]

|  | Preparation Example | |
| --- | --- | --- |
|  | 12-1 | 12-2 |
| water | 49.1 | 29.55 |
| sodium chloride | 10.0 | |
| Worcestershire sauce | | 29.55 |
| agar | 0.9 | 0.9 |
| salad oil | 38.0 | 38.0 |
| sucrose fatty acid ester | 2.0 | 2.0 |
| total (g) | 100.0 | 100.0 |

[Preparation of test sample for sensory evaluation]

170 g of steamed Chinese noodles (manufactured by Toyo Suisan Kaisha, Ltd., sodium chloride content: 0.35 g of sodium chloride per 100 g of product) were heated in a microwave oven (600 W, 3 min) and lightly loosened, and then 14 g of the composition of Preparation Example 12-1 was added and mixed well (hereinafter, the steamed Chinese noodles mixed with the composition of Preparation Example 12-1 are also to be referred to as "the steamed Chinese noodles of Preparation Example 12-1"). Then, the steamed Chinese noodles of Preparation Example 12-1 were spread on a tray lined with kitchen paper, and rapidly cooled to -40°C for 30 min using a blast chiller to freeze, transferred to a pouch and then stored in a freezer (-15°C) for 1 to 2 weeks.

170 g of steamed Chinese noodles (manufactured by Toyo Suisan Kaisha, Ltd., sodium chloride content: 0.35 g of sodium chloride per 100 g of product) were heated in a microwave oven (600 W, 3 min) and lightly loosened, and then 78 g of the composition of Preparation Example 12-2 was added and mixed well (hereinafter, the steamed Chinese noodles mixed with the composition of Preparation Example 12-2 are also to be referred to as "the steamed Chinese noodles of Preparation Example 12-2"). Then, the steamed Chinese noodles of Preparation Example 12-2 were spread on a tray lined with kitchen paper, and rapidly cooled to -40°C for 30 min using a blast chiller to freeze, transferred to a pouch and then stored in a freezer (-15°C) for 1 to 2 weeks.

[Preparation of reference sample for sensory evaluation]

170 g of steamed Chinese noodles (manufactured by Toyo Suisan Kaisha, Ltd., sodium chloride content: 0.35 g of sodium chloride per 100 g of product) were heated in a microwave oven (600 W, 3 min) and lightly loosened, and then water (7 g), sodium chloride (1.4 g) and salad oil (5.6 g) were added and mixed well (hereinafter also to be referred to as "the steamed Chinese noodles of NC-1"). Then, the steamed Chinese noodles of NC-1 were spread on a tray lined with kitchen paper, and rapidly cooled to -40°C for 30 min using a blast chiller to freeze, transferred to a pouch and then stored in a freezer (-15°C) for 1 to 2 weeks.

In addition, steamed Chinese noodles mixed with water, sodium chloride and salad oil in the same manner as for the steamed Chinese noodles of NC-1 were prepared several minutes before the sensory evaluation (described below) (hereinafter also to be referred to as "the steamed Chinese noodles of PC-1").

170 g of steamed Chinese noodles (manufactured by Toyo Suisan Kaisha, Ltd., sodium chloride content: 0.35 g of sodium chloride per 100 g of product) were heated in a microwave oven (600 W, 3 min) and lightly loosened, and then water (23 g), salad oil (31.0 g) and Worcestershire sauce (23 g) were added and mixed well (hereinafter also to be referred to as "the steamed Chinese noodles of NC-2"). Then, the steamed Chinese noodles of NC-2 were spread on a tray lined with kitchen paper, and rapidly cooled to -40°C for 30 min using a blast chiller to freeze, transferred to a pouch and then stored in a freezer (-15°C) for 1 to 2 weeks.

In addition, steamed Chinese noodles mixed with water, salad oil and Worcestershire sauce in the same manner as for the steamed Chinese noodles of NC-2 were prepared several minutes before the sensory evaluation (described below) (hereinafter also to be referred to as "the steamed Chinese noodles of PC-2").

[Sensory evaluation]

The test sample (steamed Chinese noodles of Preparation Example 12-1) and reference sample (steamed Chinese noodles of NC-1) stored in a frozen state were thawed by heating in a microwave oven (600 W, 2 min). An expert panel consisting of three trained panelists ate steamed Chinese noodles and rated the intensity of saltiness of the test sample by consensus according to the following scale, with the steamed Chinese noodles of NC-1 as the standard. In addition, the expert panel ate the steamed Chinese noodles of PC-1, which was free of deterioration of flavor over time, and evaluated the intensity of saltiness by consensus according to the following scale. The sodium chloride concentration of the test sample and reference sample at the time of eating was each 1.09 wt%.

[Evaluation scale]

⊙: saltiness clearly felt strongly compared to the steamed Chinese noodles of NC-1
○: saltiness strongly felt compared to the steamed Chinese noodles of NC-1
Δ: saltiness equivalent to that of the steamed Chinese noodles of NC-1
✕: saltiness weakly felt compared to the steamed Chinese noodles of NC-1

The results are shown in Table 35 below. In the evaluation results shown in Table 35, "⊙ - ○" means that it is between ⊙ and ○.

[Table 35]

|  | PC-1 | Preparation Example 12-1 |
|---|---|---|
| evaluation results | ⊙ | ⊙ - ○ |

The test sample (steamed Chinese noodles of Preparation Example 12-2) and reference sample (steamed Chinese noodles of NC-2) stored in a frozen state were thawed by heating in a microwave oven (600 W, 2 min). An expert panel consisting of three trained panelists ate steamed Chinese noodles and rated the intensity of saltiness and sauce flavor of the test sample by consensus according to the following scale, with the steamed Chinese noodles of NC-2 as the standard. In addition, the expert panel ate the steamed Chinese noodles of PC-2, which was free of deterioration of flavor over time, and evaluated the intensity of saltiness and sauce flavor by consensus according to the following scale. The sodium chloride concentration of the test sample and reference sample at the time of eating was each 1.09 wt%.

[Evaluation scale]

⊙: saltiness or sauce flavor clearly felt strongly compared to the steamed Chinese noodles of NC-2
○: saltiness or sauce flavor strongly felt compared to the steamed Chinese noodles of NC-2
Δ: saltiness or sauce flavor equivalent to that of the steamed Chinese noodles of NC-2
✕: saltiness or sauce flavor weakly felt compared to the steamed Chinese noodles of NC-2

The results are shown in Table 36 below. In the evaluation results shown in Table 36, "⊙ - ○" means that it is between ⊙ and ○.

[Table 36]

| evaluation results | | PC-2 | Preparation Example 12-2 |
|---|---|---|---|
| | saltiness | Δ | Δ |
| | sauce flavor | ⊙ | ⊙ - ○ |

As shown in Table 35, the deterioration in saltiness over time was suppressed in the steamed Chinese noodles mixed with the composition of Preparation Example 12-1. In addition, as shown in Table 36, the deterioration in sauce flavor over time was suppressed in the steamed Chinese noodles mixed with the composition of Preparation Example 12-2.

<Experimental Example 13>

(Preparation Example 13)

A composition in which aqueous particles containing a gelling agent are dispersed in fat or oil was prepared by the following steps (1) to (4) (hereinafter also to be referred to as "the composition of Preparation Example 13").

(1) Sucrose fatty acid ester (sucrose oleate, "Ryoto Sugar Ester O-170" manufactured by Mitsubishi Chemical Corporation) (2 g) was added to rice oil (manufactured by J-OIL MILLS, INC.) (38 g), mixed, and heated at 90°C for 5 min (the obtained liquid is hereinafter referred to as "SOLUTION A").
(2) Agar ("Gel Up J-1630" manufactured by San-Ei Gen F.F.I., Inc.) (0.9 g) was added to sushi vinegar (59.1 g), mixed, and dissolved (the obtained liquid is hereinafter referred to as "SOLUTION B").
The sushi vinegar used in this Experimental Example 13 was prepared by mixing 180 g of grain vinegar (manufactured by Mizkan), 45 g of refined sugar (manufactured by Mitsui DM Sugar Co., Ltd.), and 18 g of salt ("Special Grade Salt Nakuru M" manufactured by Naikai Salt Industries Co., Ltd.).
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.
(4) The obtained water-in-oil emulsion was ice-cooled while mixing with a spatula to obtain the composition of Preparation Example 13.

[Preparation of test sample for sensory evaluation]

Rice (unwashed rice, 450 parts by weight) was soaked in 675 parts by weight of water for 30 min, and then cooked in normal cooking mode using an IH rice cooker. To the obtained cooked rice (250 g) was added the composition of Preparation Example 13 (21.2 g), and they were mixed well (hereinafter cooked rice mixed with the composition of Preparation Example 13 is also to be referred to as "the vinegared rice of Preparation Example 13"). Then, the vinegared rice of Preparation Example 13 was formed into sushi rice balls (20 g each) and rapidly cooled to -40°C using a blast chiller to freeze, and then stored in a freezer (-20°C).

[Preparation of reference sample for sensory evaluation]

Rice (unwashed rice, 450 parts by weight) was soaked in 675 parts by weight of water for 30 min, and then cooked in normal cooking mode using an IH rice cooker. To the obtained cooked rice (250 g) were added sushi vinegar (12.7 g) and rice oil (8.5 g), and they were mixed well (hereinafter cooked rice mixed with sushi vinegar and rice oil is also to be referred to as "the vinegared rice of Cont"). Then, the vinegared rice of Cont was formed into sushi rice balls (weight of each: 20 g) and rapidly cooled to -40°C using a blast chiller to freeze, and then stored in a freezer (-20°C).

[Sensory evaluation]

The test sample (vinegared rice of Preparation Example 13) and reference sample (vinegared rice of Cont) stored in a frozen state were thawed by heating in a microwave oven (600 W, 2 sec for one sushi rice ball). An expert panel consisting of three trained panelists ate sushi rice balls and rated the intensity of sushi vinegar feel (vinegar taste and aroma) of the test sample by consensus according to the following scale, with the vinegared rice of Cont as the standard.

[Evaluation scale]

⊙: clearly strong sushi vinegar feel compared to the vinegared rice of Cont
○: strong sushi vinegar feel compared to the vinegared rice of Cont
Δ: sushi vinegar feel equivalent to that of the vinegared rice of Cont
×: weak sushi vinegar feel compared to the vinegared rice of Cont

The results are shown in Table 37 below. In the evaluation results shown in Table 37, "○ - ⊙" means that it is between ○ and ⊙.

[Table 37]

|  | Preparation Example 13 |
| --- | --- |
| evaluation results | ○ - ⊙ |

As shown in Table 37, the deterioration in sushi vinegar feel over time was suppressed in the cooked rice mixed with the composition of Preparation Example 13.

<Experimental Example 14>

(Preparation Example 14-1)

A composition in which aqueous particles containing a gelling agent are dispersed in fat or oil was prepared by the following steps (1) to (4) (hereinafter also to be referred to as "the composition of Preparation Example 14-1").

(1) Sucrose fatty acid ester (sucrose oleate, "Ryoto Sugar Ester O-170" manufactured by Mitsubishi Chemical Corporation) was added to Canola oil (manufactured by J-OIL MILLS, INC.) in the amounts (unit: g) shown in Table 38 below, mixed, and heated at 90°C for 5 min (the obtained liquid is hereinafter referred to as "SOLUTION A").
(2) Agar ("Gel Up J-1630" manufactured by San-Ei Gen F.F.I., Inc.) was added to water heated to 100°C in the amounts (unit: g) shown in Table 38 below, mixed, and dissolved (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.
(4) The obtained water-in-oil emulsion was ice-cooled while mixing with a spatula to obtain the composition of Preparation Example 14-1.

(Preparation Example 14-2)

In the same manner as in Preparation Example 14-1 except that in step (1), lard was used instead of canola oil, a composition in which aqueous particles containing a gelling agent are dispersed in fat or oil was produced (hereinafter also to be referred to as "the composition of Preparation Example 14-2").

(Preparation Example 14-3)

In the same manner as in Preparation Example 14-1 except that in step (1), sucrose fatty acid ester and β-caryophyllene oxide (10000 weight ppm product) were added, instead of adding sucrose fatty acid ester, to canola oil in the amounts (unit: g) shown in Table 38 below, a composition in which aqueous particles containing a gelling agent are dispersed in fat or oil was produced (hereinafter also to be referred to as "the composition of Preparation Example 14-3").

[Table 38]

|  | Preparation Example | | |
| --- | --- | --- | --- |
|  | 14-1 | 14-2 | 14-3 |
| water | 59.1 | 59.1 | 59.1 |
| agar | 0.9 | 0.9 | 0.9 |
| canola oil | 38.0 |  | 37.0 |
| sucrose fatty acid ester | 2.0 | 2.0 | 2.0 |
| lard |  | 38.0 |  |
| β-caryophyllene oxide |  |  | 1.0 |
| total (g) | 100.0 | 100.0 | 100.0 |

[Preparation of standard sample for sensory evaluation]

(1) Pork thigh meat (fat removed) and sodium chloride were mixed in the proportion (unit: wt%) shown in Table 39 below and mixed in a food mixer (manufactured by Hobart) for 1 min. Thereafter, soft wheat-flour, bread crumbs, dextrin ("SANDECK #30" manufactured by Sanwa Starch Co., Ltd.) and tap water were added in the proportions (unit: wt%) shown in Table 39 below and mixed in a food mixer for 5 min.
(2) To the mixture obtained in the above-mentioned (1) was added lard in the proportion (unit: wt%) shown in Table 39 below, and the mixture was thoroughly mixed with a spatula.
(3) The mixture obtained in the above-mentioned (2) was formed by hand into balls (weight of one ball: 30±2 g).
(4) The meatballs obtained in the above-mentioned (3) were cooled by leaving them in a freezer (-20°C) for 180 min.
(5) The meatballs cooled in the above-mentioned (4) were cooked in a microwave oven (600 W, 30 seconds/ball) to obtain cooked meatballs (hereinafter also to be referred to as "meatballs of PC").

[Table 39]

| raw material name | blending proportion (wt%) |
| --- | --- |
| pork thigh meat | 69.13 |
| soft wheat-flour | 0.84 |
| bread crumbs | 5.02 |
| dextrin | 5.00 |
| sodium chloride | 0.80 |
| tap water | 9.21 |
| lard | 10.00 |
| total | 100.00 |

In the same manner as for the meatballs of PC except that in step (2), the composition of Preparation Example 14-1 was used instead of lard, cooked meatballs were obtained (hereinafter also to be referred to as "the meatballs of Preparation Example 14-1").

[Preparation of test sample for sensory evaluation]

In the same manner as for the meatballs of PC except that in step (2), the composition of Preparation Example 14-2 was used instead of lard, cooked meatballs were obtained (hereinafter also to be referred to as "the meatballs of Preparation Example 14-2").
In the same manner as for the meatballs of PC except that in step (2), the composition of Preparation Example 14-3 was used instead of lard, cooked meatballs were obtained (hereinafter also to be referred to as "the meatballs of Preparation Example 14-3").

[Preparation of reference sample for sensory evaluation]

In the same manner as for the meatballs of PC, except that the materials used in the preparation of the composition of Preparation Example 14-2 were mixed in the amounts shown in Table 38 to prepare an unemulsified mixture, and the mixture was used instead of lard in step (2), heat-cooked meatballs were obtained (hereinafter also to be referred to as "the meatballs of NC-1").

In the same manner as for the meatballs of PC except that the materials used in the preparation of the composition of Preparation Example 14-3 were mixed in the amounts shown in Table 38 to prepare an unemulsified mixture and the mixture was used instead of lard in step (2), heat-cooked meatballs were obtained (hereinafter also to be referred to as "the meatballs of NC-2").

[Sensory evaluation]

An expert panel consisting of three trained panelists ate test samples (meatballs of Preparation Example 14-2 and 14-3) and reference samples (meatballs of NC-1 and NC-2) and rated the lard sensation (lard-like taste, aroma, texture) of these samples by consensus in increments of 0.1 point according to the evaluation scale in which the meatballs of PC are "5 points" and the meatballs of Preparation Example 14-1 are "1 point".

The results are shown in Table 40 below.

[Table 40]

|  | NC-1 | Preparation Example 14-2 | NC-2 | Preparation Example 14-3 |
|---|---|---|---|---|
| score | 2.6 | 3.2 | 2.5 | 2.9 |

As shown in Table 40, the cooked meatballs using the composition of Preparation Example 14-2 were superior in the lard sensation. Also, the cooked meatballs using the composition of Preparation Example 14-3 were superior in the lard sensation.

<Experimental Example 15>

(Preparation Example 15-1)

A composition in which aqueous particles containing a gelling agent are dispersed in fat or oil was prepared by the following steps (1) to (4) (hereinafter also to be referred to as "the composition of Preparation Example 15-1").

(1) Sucrose fatty acid ester (sucrose oleate, "Ryoto Sugar Ester O-170" manufactured by Mitsubishi Chemical Corporation) was added to grapeseed oil (manufactured by J-OIL MILLS, INC.) in the amounts (unit: g) shown in Table 41 below, mixed, and heated at 90°C for 5 min (the obtained liquid is hereinafter referred to as "SOLUTION A").
(2) Agar ("Gel Up J-1630" manufactured by San-Ei Gen F.F.I., Inc.) were added to water heated to 100°C in the amounts (unit: g) shown in Table 41 below, mixed, and dissolved (the obtained liquid is hereinafter referred to as "SOLUTION B").
(3) At 90°C, SOLUTION B shown in Table 6 below was gradually added while stirring SOLUTION A with a stirrer ("Labo-lution" manufactured by PRIMIX Corporation) to prepare a water-in-oil emulsion with SOLUTION A as the continuous phase and SOLUTION B as the dispersed phase. The stirring speed was started from 500 rpm and gradually increased to 5000 rpm as shown in Table 6 below.
(4) The obtained water-in-oil emulsion was ice-cooled while mixing with a spatula to obtain the composition of Preparation Example 15-1.

(Preparation Example 15-2)

In the same manner as in Preparation Example 15-1 except that in step (2), flavoring A (flavoring containing 4.2 wt% of β-caryophyllene oxide) and agar were added, instead of agar, to water heated to 100°C in the amount (unit: g) shown in Table 41 below, a composition in which aqueous particles containing a gelling agent are dispersed in fat or oil was produced (hereinafter also to be referred to as "the composition of Preparation Example 15-2").

(Preparation Example 15-3)

In the same manner as in Preparation Example 15-1 except that in step (2), seasoning A (seasoning containing 0.24 wt% of flavoring A) and agar were added, instead of agar, to water heated to 100°C in the amount (unit: g) shown in Table 41 below, a composition in which aqueous particles containing a gelling agent are dispersed in fat or oil was produced (hereinafter also to be referred to as "the composition of Preparation Example 15-3").

[Table 41]

| | Preparation Example | | |
|---|---|---|---|
| | 15-1 | 15-2 | 15-3 |
| grapeseed oil | 38.0 | 38.0 | 38.0 |
| sucrose fatty acid ester | 2.0 | 2.0 | 2.0 |
| flavoring A | | 0.76 | |
| seasoning A | | | 7.6 7.6 |
| agar | 0.9 | 0.9 | 0.9 |
| water | 59.10 | 58.34 | 51. 50 |
| total (g) | 100.0 | 100.0 | 100.0 |

[Preparation of standard sample for sensory evaluation]

The material shown in Table 42 below (soy sauce, protein hydrolysate, sodium chloride, sugar, pork extract, chicken extract, dried sardine stock, sodium glutamate, nucleic acid, garlic paste, white pepper, and hot water) were mixed in the proportion (unit: weight %) shown in Table 42 below to prepare a soy sauce ramen soup (hereinafter also to be referred to as "the soup of control plot 1").

[Table 42]

| raw material name | blending proportion (wt%) |
|---|---|
| soy sauce | 2.00 |
| protein hydrolysate | 0.50 |
| sodium chloride | 0.93 |
| sugar | 0.20 |
| pork extract | 0.20 |
| chicken extract | 0.20 |
| dried sardine stock | 0.20 |
| sodium glutamate | 0.13 |
| nucleic acid | 0.01 |
| garlic paste | 0.03 |
| white pepper | 0.01 |
| hot water | 95.59 |
| total | 100.00 |

[Preparation of test sample for sensory evaluation]

The composition of Preparation Example 15-1 was mixed with the soup of control plot 1 in the proportion (unit: wt%) shown in Table 43 below (hereinafter also to be referred to as "the soup of test plot 1").
The proportions shown in Table 43 below are all calculated based on the amount of the soup of control plot 1 as 100 wt%.

The composition of Preparation Example 15-2 was mixed with the soup of control plot 1 in the proportion (unit: wt%) shown in Table 43 below (hereinafter also to be referred to as "the soup of test plot 2").

The composition of Preparation Example 15-3 was mixed with the soup of control plot 1 in the proportion (unit: wt%) shown in Table 43 below (hereinafter also to be referred to as "the soup of test plot 3").

[Preparation of reference sample for sensory evaluation]

Lard and water were mixed with the soup of control plot 1 in the proportions (unit: wt%) shown in Table 43 below (hereinafter also to be referred to as "the soup of comparison plot 1").

Grapeseed oil and water were mixed with the soup of control plot 1 in the proportions (unit: wt%) shown in Table 43 below (hereinafter also to be referred to as "the soup of comparison plot 2").

Grapeseed oil, sucrose fatty acid ester, agar and water were mixed with the soup of control plot 1 in the proportions (unit: wt%) shown in Table 43 below (hereinafter also to be referred to as "the soup of comparison plot 3").

Flavoring A and water were mixed with the soup of control plot 1 in the proportions (unit: wt%) shown in Table 43 below (hereinafter also to be referred to as "the soup of comparison plot 4").

Grapeseed oil, sucrose fatty acid ester, flavoring A, agar and water were mixed with the soup of control plot 1 in the proportions (unit: wt%) shown in Table 43 below (hereinafter also to be referred to as "the soup of comparison plot 5").

Seasoning A and water were mixed with the soup of control plot 1 in the proportions (unit: wt%) shown in Table 43 below (hereinafter also to be referred to as "the soup of comparison plot 6").

Grapeseed oil, sucrose fatty acid ester, seasoning A, agar and water were mixed with the soup of control plot 1 in the proportions (unit: wt%) shown in Table 43 below (hereinafter also to be referred to as "the soup of comparison plot 7").

[Table 43]

| | control plot 1 | comparison plot 1 | comparison plot 2 | comparison plot 3 | test plot 1 | comparison plot 4 | comparison plot 5 | test plot 2 | comparison plot 6 | comparison plot 7 | test plot 3 |
|---|---|---|---|---|---|---|---|---|---|---|---|
| Preparation Example 15-1 | | | | | 0.263 | | | | | | |
| Preparation Example 15-2 | | | | | | | | 0.263 | | | |
| Preparation Example 15-3 | | | | | | | | | | | 0.263 |
| lard | | 0.100 | | | | | | | | | |
| grapeseed oil | | | 0.100 | 0.100 | | | 0.100 | | | 0.100 | |
| sucrose fatty acid ester | | | | 0.005 | | | 0.005 | | | 0.005 | |
| flavoring A | | | | | | 0.002 | 0.002 | | | | |
| seasoning A | | | | | | | | | 0.02 | 0.020 | |
| agar | | | | 0.002 | | | 0.002 | | | 0.002 | |
| water | | 0.163 | 0.163 | 0.155 | | 0.261 | 0.153 | | 0.243 | 0.135 | |

EP 4 595 773 A1

56

[Sensory evaluation]

An expert panel consisting of six trained panelists ate test sample (soups of test plots 1 to 3) and reference sample (soups of comparison plots 1 to 7), and rated the "mouse-coating feel" (sensation of the mouth being coated with a thin layer of fat or oil, which is felt prominently when a food containing fat or oil is placed in the mouth) and the lard-like flavor (taste and aroma) of these samples by consensus in increments of 0.1 point according to the evaluation scale in which the soup of control plot 1 is "0 point" and the sample with the most superior mouth-coating feel and lard-like flavoring Among the test sample and reference sample is "5 points".

The results are shown in Table 44 below.

[Table 44]

| | control plot 1 | comparison plot 1 | comparison plot 2 | comparison plot 3 | test plot 1 | comparison plot 4 | comparison plot 5 | test plot 2 | comparison plot 6 | comparison plot 7 | test plot 3 |
|---|---|---|---|---|---|---|---|---|---|---|---|
| mouse-coating feel | 0 | 0.7 | 0.5 | 0.5 | 2 | 0.7 | 1.3 | 3 | 1 | 1.7 | 5 |
| lard-like flavor | 0 | 0.7 | 0 | 0 | 0 | 0 | 0 | 0 | 1 | 1.7 | 5 |

As shown in Table 44, the soup using the composition of Preparation Example 15-1 (soup of test plot 1) and the soup using the composition of Preparation Example 15-2 (soup of test plot 2) were superior in the mouth-coating feel. Also, the soup using the composition of Preparation Example 15-3 (soup of test plot 3) was most superior in the mouth-coating feel and lard-like flavor.

The above-mentioned test results suggest that, by adding a composition containing (A) a fat or oil, and (B) aqueous particles containing a gelling agent and a flavoring material, and dispersed in the aforementioned fat or oil to foods, it is possible to prevent the deterioration in flavor of the foods over time (taste blur) and to impart a fat or oil sensation and an animal fat or oil sensation, and that the quality of foods can be improved by using the composition.

[Industrial Applicability]

According to the present invention, a composition for a food that can be preferably used for improving the quality of foods is provided. In one embodiment, the composition for foods of the present invention can impart natural flavors (e.g., saltiness, etc.) to foods, and can also enhance flavors (e.g., saltiness etc.) of foods. In another embodiment, the composition for foods of the present invention can effectively impart a fat or oil sensation to foods and can effectively enhance a fat or oil sensation in foods. Furthermore, the composition for foods of the present invention can impart an animal fat or oil sensation to foods and can effectively enhance an animal fat or oil sensation in foods.

According to the present invention, moreover, foods with improved quality and production methods thereof are provided. In one embodiment, the food of the present invention can have natural flavors (e.g., saltiness etc.) and enhanced flavors (e.g., saltiness etc.). In one embodiment, according to the production method of the food of the present invention, foods having natural flavors (e.g., saltiness etc.) and foods having enhanced flavors (e.g., saltiness etc.) can be produced. In another embodiment, the food of the present invention can have a preferable fat or oil sensation, and an enhanced preferable fat or oil sensation. In another embodiment, according to the production method of the food of the present invention, foods having a preferable fat or oil sensation, and foods having an enhanced preferable fat or oil sensation can be produced. Furthermore, the food of the present invention can have an animal fat or oil sensation, and an enhanced animal fat or oil sensation. According to the production method of the food of the present invention, foods having a preferable animal fat or oil sensation food, and foods having an enhanced preferable animal fat or oil sensation can be produced.

Also, according to the present invention, methods for improving food quality are provided. In one embodiment, according to the method of the present invention, natural flavors (e.g., saltiness etc.) can be imparted to foods and the flavors of foods (e.g., saltiness etc.) can be enhanced. In another embodiment, according to the method of the present invention, a fat or oil sensation can be effectively imparted to foods and a fat or oil sensation in food can be effectively enhanced. Furthermore, according to the method of the present invention, an animal fat or oil sensation can be imparted to foods and an animal fat or oil sensation in foods can be enhanced.

This application is based on a patent application No. 2022-155032 filed in Japan (filing date: September 28, 2022), the contents of which are incorporated in full herein.

**Claims**

1. A composition for a food, comprising

   (A) a fat or oil, and
   (B) aqueous particles comprising a gelling agent and a flavoring material, and dispersed in said fat or oil.

2. The composition according to claim 1, wherein said fat or oil comprises an emulsifier.

3. The composition according to claim 1 or claim 2, wherein the amount of the gelling agent contained in said aqueous particles is 0.01 to 20 wt% with respect to said composition.

4. The composition according to claim 1 or claim 2, wherein said gelling agent comprises at least one selected from the group consisting of (i) agar, (ii) gelatin, (iii) xanthan gum and galactomannan in combination, and (iv) an alginic acid compound.

5. The composition according to claim 1 or claim 2, wherein the amount of the flavoring material contained in said aqueous particles is 0.01 to 30 wt% with respect to said composition.

6. The composition according to claim 1 or claim 2, wherein the flavoring material contained in said aqueous particles comprises sodium chloride.

7. The composition according to claim 6, wherein said food is a low-salt food.

8. The composition according to claim 1 or claim 2, wherein said fat or oil comprises a flavoring material.

9. The composition according to claim 1 or claim 2, which is used for improving the quality of a food.

10. The composition according to claim 9, wherein the quality improvement of food is imparting or enhancing a flavor of a food.

11. A food comprising a composition comprising

   (A) a fat or oil, and
   (B) aqueous particles comprising a gelling agent and a flavoring material, and dispersed in said fat or oil.

12. The food according to claim 11, wherein said fat or oil comprises an emulsifier.

13. The food according to claim 11 or claim 12, wherein the amount of the gelling agent contained in said aqueous particles is 0.01 to 20 wt% with respect to said composition.

14. The food according to claim 11 or claim 12, wherein said gelling agent comprises at least one selected from the group consisting of (i) agar, (ii) gelatin, (iii) xanthan gum and galactomannan in combination, and (iv) an alginic acid compound.

15. The food according to claim 11 or claim 12, wherein the amount of the flavoring material contained in said aqueous particles is 0.01 to 30 wt% with respect to said composition.

16. The food according to claim 11 or claim 12, wherein the flavoring material contained in said aqueous particles comprises sodium chloride.

17. The food according to claim 16, which is a low-salt food.

18. The food according to claim 11 or claim 12, which is a frozen food.

19. The food according to claim 11 or claim 12, wherein said fat or oil comprises a flavoring material.

20. A method for producing a food, comprising adding a composition comprising

   (A) a fat or oil, and
   (B) aqueous particles comprising a gelling agent and a flavoring material, and dispersed in said fat or oil.

21. The production method according to claim 20, wherein said fat or oil comprises an emulsifier.

22. A method for improving food quality, comprising adding a composition comprising

   (A) a fat or oil, and
   (B) aqueous particles comprising a gelling agent and a flavoring material, and dispersed in said fat or oil to a food.

23. The method according to claim 22, wherein said fat or oil comprises an emulsifier.

24. The method according to claim 22 or claim 23, wherein the quality improvement of food is imparting or enhancing the flavor of a food.

## INTERNATIONAL SEARCH REPORT

| International application No. |
|---|
| **PCT/JP2023/035271** |

**A. CLASSIFICATION OF SUBJECT MATTER**

**A23L 27/00**(2016.01)i; **A23D 7/005**(2006.01)i; **A23L 7/10**(2016.01)i; **A23L 29/238**(2016.01)i; **A23L 29/256**(2016.01)i; **A23L 29/269**(2016.01)i

FI: A23L27/00 Z; A23L29/256; A23L29/238; A23L29/269; A23D7/005; A23L7/10 E

According to International Patent Classification (IPC) or to both national classification and IPC

**B. FIELDS SEARCHED**

Minimum documentation searched (classification system followed by classification symbols)

A23L27/00; A23D7/005; A23L7/10; A23L29/238; A23L29/256; A23L29/269

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-158572 A (SNOW BRAND MILK PRODUCTS CO., LTD.) 05 September 2016 (2016-09-05) claims, paragraphs [0005], [0008], [0012], examples 2, 4, tables 3, 4, 7, 8 | 1-6, 8-16, 19-24 |
| Y | | 7, 17, 18 |
| X | JP 2000-333637 A (NISSHIN SEIYU KK) 05 December 2000 (2000-12-05) claim 10, examples, production example 8 | 1-5, 8-15, 19-24 |
| A | | 6, 7, 16-18 |
| Y | JP 4-108366 A (MORISHITA JINTAN KABUSHIKI KAISHA) 09 April 1992 (1992-04-09) p. 3, lower left column, line 18 to lower right column, line 11 | 7, 17, 18 |
| A | WO 2014/178138 A1 (KEWPIE CORP.) 06 November 2014 (2014-11-06) claims, examples | 1-24 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| | International application No. |
| --- | --- |
| | **PCT/JP2023/035271** |

| Patent document cited in search report | Publication date (day/month/year) | Patent family member(s) | Publication date (day/month/year) |
| --- | --- | --- | --- |
| JP 2016-158572 A | 05 September 2016 | (Family: none) | |
| JP 2000-333637 A | 05 December 2000 | (Family: none) | |
| JP 4-108366 A | 09 April 1992 | (Family: none) | |
| WO 2014/178138 A1 | 06 November 2014 | (Family: none) | |

Form PCT/ISA/210 (patent family annex) (January 2015)

**EP 4 595 773 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003274869 A
- WO 2013061653 A
- JP 2013106612 A
- JP 2016059293 A

### Non-patent literature cited in the description

- Science of Food Functionality. Industrial Technology Service Center Co., Ltd, 2008, 483